(19) Europäisches Patentamt
European Patent Office
Office européen des brevets

(11) EP 1 038 165 B1

(12) EUROPEAN PATENT SPECIFICATION

(45) Date of publication and mention of the grant of the patent:
07.08.2002 Bulletin 2002/32

(21) Application number: 98907397.8

(22) Date of filing: 02.02.1998

(51) Int Cl.[7]: G01N 21/21

(86) International application number:
PCT/US98/02390

(87) International publication number:
WO 98/39633 (11.09.1998 Gazette 1998/36)

# (54) REGRESSION CALIBRATED SPECTROSCOPIC ROTATING COMPENSATOR ELLIPSOMETER SYSTEM WITH PHOTO ARRAY DETECTOR

REGRESSIONSKALIBRIERTES SPEKTROSKOPISCHES ELLIPSOMETER-SYSTEM MIT ROTIERENDEN KOMPENSATOREN UND PHOTARRAY-DETEKTOR

SYSTEME D'ELLIPSOMETRE SPECTROSCOPIQUE A COMPENSATEUR ROTATIF ETALONNE PAR REGRESSION, DOTE D'UN GROUPEMENT DE PHOTODETECTEURS

(84) Designated Contracting States:
DE FR GB

(30) Priority: 03.03.1997 US 39519
04.04.1997 US 42661
08.05.1997 US 45966
15.08.1997 US 912211

(43) Date of publication of application:
27.09.2000 Bulletin 2000/39

(73) Proprietor: J.A. WOOLLAM CO. INC.
Lincoln, Nebraska 68508 (US)

(72) Inventors:
- Johs, Blaine D.
  Lincoln, NE 68521 (US)
- Thompson, Daniel W.
  Lincoln, NE 68516 (US)

(74) Representative: Laight, Martin Harvey
W.H. Beck, Greener & Co.
7 Stone Buildings
Lincoln's Inn
London WC2A 3SZ (GB)

(56) References cited:
WO-A-97/34521
US-A- 4 306 809
US-A- 5 373 359
US-A- 5 504 582
US-A- 5 521 706
US-A- 5 581 350
US-A- 5 666 201

- BOER DEN J H W G ET AL: "SPECTROSCOPIC ROTATING COMPENSATOR ELLIPSOMETRY IN THE INFRARED: RETARDER DESIGN AND MEASUREMENT" MEASUREMENT SCIENCE AND TECHNOLOGY,GB,IOP PUBLISHING, BRISTOL, vol. 8, 20 January 1997 (1997-01-20), pages 484-492, XP002046558 ISSN: 0957-0233
- YARUSSI R A ET AL: "MULTICHANNEL TRANSMISSION ELLIPSOMETER FOR CHARACTERIZATION OF ANISOTROPIC OPTICAL MATERIALS" JOURNAL OF THE OPTICAL SOCIETY OF AMERICA - A,US,OPTICAL SOCIETY OF AMERICA, WASHINGTON, vol. 11, no. 8, 1 August 1994 (1994-08-01), pages 2320-2330, XP000454864 ISSN: 0740-3232
- PEZZANITI J L: "MUELLER MATRIX IMAGING POLARIETRY, PASSAGE" MUELLER MATRIX IMAGING POLARIMETRY,XX,XX, 1993, pages 67-89,132-133,220-223, XP002034764
- JOHS B: "REGRESSION CALIBRATION METHOD FOR ROTATING ELEMENT ELLIPSOMETERS" THIN SOLID FILMS,CH,ELSEVIER-SEQUOIA S.A. LAUSANNE, vol. 234, 1993, pages 395-398, XP000569725 ISSN: 0040-6090
- JELLISON G E: "DATA ANALYSIS FOR SPECTROSCOPIC ELLIPSOMETRY" THIN SOLID FILMS,CH,ELSEVIER-SEQUOIA S.A. LAUSANNE, vol. 234, 1993, pages 416-422, XP000569726 ISSN: 0040-6090

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to ellipsometers and polarimeters and the like, and more particularly to a Spectroscopic Rotating Compensator Material System Investigation System including a Photo Array for simultaneously detecting a Multiplicity of Wavelengths, which Spectroscopic Rotating Compensator Material System Investigation System is calibrated by a Mathematical Regression based technique involving, where beneficial and desired, Parameterization of Calibration Parameters. Embodiments of the present invention can be realized utilizing off-the-shelf non-ideal compensators and diode array spectrometers.

Ellipsometry is a well known means by which to monitor material systems. In brief, a polarized beam of electromagnetic radiation of one or more wavelengths is caused to impinge upon a materials system along one or more angles of incidence and then interact with a material system. Beams of electromagnetic radiation can be considered as comprised of two orthogonal components, (ie. "P" and "S"), where "P" identifies a plane which contains both an incident beam of electromagnetic radiation, and a normal to an investigated surface of a material system being investigated, and where "S" identifies a plane perpendicular to the "P" plane and parallel to said surface of said material system. A change in polarization state in a polarized beam of electromagnetic radiation caused by said interaction with a material system, is representative of properties of said material system. (Note Polarization State basically refers to a magnitude of a ratio of orthogonal component magnitudes in a polarized beam of electromagnetic radiation, and a phase angle therebetween.) Generally two well known angles, (PSI and DELTA), which characterize a material system at a given Angle-of-Incidence, are determined by analysis of data which represents change in polarization state.

Continuing, Ellipsometer Systems generally include a source of a beam of electromagnetic radiation, a Polarizer, which serves to impose a linear state of polarization on a beam of electromagnetic radiation, a Stage for supporting a sample system, and an Analyzer which serves to select a polarization state in a beam of electromagnetic radiation after it has interacted with a material system, and pass it to a Detector System for analysis therein. As well, one or more Compensator(s) can be present and serve to affect a phase angle between orthogonal components of a polarized beam of electromagnetic radiation.

A number of types of ellipsometer systems exist, such as those which include rotating elements and those which include modulation elements. Those including rotating elements include Rotating Polarizer (RP), Rotating Analyzer (RA) and Rotating Compensator (RC). The present invention provides, a Rotating Compensator Ellipsometer System. It is noted that Rotating Compensator Ellipsometer Systems do not demonstrate "Dead-Spots" where obtaining data is difficult. They can read PSI and DELTA of a Material System over a full Range of Degrees with the only limitation being that if PSI becomes essentially zero (0.0), one can't then determine DELTA as there is not sufficient PSI Polar Vector Length to form the angle between the PSI Vector and an "X" axis. In comparison, Rotating Analyzer and Rotating Polarizer Ellipsometers have "Dead Spots" at DELTA's near 0.0 or 180 Degrees and Modulation Element Ellipsometers also have "Dead Spots" at PSI near 45 Degrees). The utility of Rotating Compensator Ellipsometer Systems should then be apparent. Another benefit provided by fixed Polarizer (P) and Analyzer (A) positions is that polarization state sensitivity to input and output optics during data acquisition is essentially non-existent. This enables relatively easy use of optic fibers, mirrors, lenses etc. for input/output.

A Search of Patents relevant to the present invention has identified very little. One Patent, to Dill, No. 4,053,232 describes a Rotating-Compensator Ellipsometer System, which operates utilizes monochromatic light. Two Patents which identify systems which utilize Polychromatic light in investigation of material systems are described in Patent Nos. 5,596,406 and 4,668,086, to Rosencwaig et al. and Redner, respectively, were also identified. Also identified is a Patent to Woollam et al, No. 5,373,359 as it describes a Rotating Analyzer Ellipsometer System which utilizes white light. Patents continued from the 359 Woollam et al. Patent are, Nos. 5,504,582 to Johs et al. and 5,521,706 to Green et al. Said 582 Johs et al. and 706 Green et al. Patents describe use of polychromatic light in a Rotating Analyzer Ellipsometer System. A Patent to Bernoux et al., No. 5,329,357 is identified as it describes the use of optical fibers as input and output means in an ellipsometer system. A Patent to Chen et al., No. 5,581,350 is identified as it describes the application of regression in calibration of ellipsometer systems. An article by Johs, titled "Regression Calibration Method For Rotating Element Ellipsometers", which appeared in Thin Film Solids, Vol. 234 in 1993 is also identified as it predates the Chen et al. Patent and describes an essentially similar approach to ellipsometer calibration. An article by Jellison Jr. titled "Data Analysis for Spectroscopic Ellipsometry", Thin Film Solids, 234, (1993) is identified as it describes a method of determining the accuracy with which certain data points can be measured, which information allows adding a weighting factor to a curve fitting regression procedure as applied to a multiplicity of data points, said weighting factor serving to emphasize the effect of more accurate and precise data. A book by Azzam and Bashara titled "Ellipsometry and Polarized light" North-Holland, 1977 is disclosed and incorporated herein by reference for general theory. An article by Collins titled "Automated Rotating Element Ellipsometers: Calibration, Operation, and Real-Time Applications", Rev. Sci. Instrum. 61(8), August 1990 is identified as it provides insight into rotating element ellipsometers. An article by Kleim et al. titled "Systematic Errors in Rotating-Compensator Ellipsometry" published in J. Opt. Soc. Am./Vol. 11, No. 9, Sept 1994 is identified as it describes calibration of rotating compensator ellipsometers.

An Article by An and Collins titled "Waveform Analysis With Optical Multichannel Detectors: Applications for Rapid-Scan Spectroscopic Ellipsometer", Rev. Sci. Instrum., 62 (8), August 1991 is also identified as it discusses effects such as Detection System Error Characterization, Stray Light, Image Persistence etc., and calibration thereof. Also disclosed are articles by Schubert et al. which describe "Generalized Ellipsometry". The first thereof is titled "Extension Of Rotating-Analyzer Ellipsometry To Generalized Ellipsometry: Determination Of The Dielectric Function Tensor From Uniaxial TiO2", J. Opt. Soc. Am. A. 13, (1996). The second such article is authored by M. Schubert alone and is titled "Polarization Dependent Parameters Of Arbitrary Anisotropic Homogeneous Epitaxial Systems", Phys. Rev. B 53, (1996). The third such article is titled "Generalized Transmission Ellipsometry For Twisted Biaxial Dielectric Media: Application To Chiral Liquid Crystals", J. Opt. Soc. Am. A/Vol. 13, No. 9 (1996). Further identified for authority regarding regression is a book titled Numerical Recipes in "C", 1988, Cambridge University Press.

In view of the foregoing, a need remains for a Spectroscopic Rotating Compensator Material System Investigation System, including a Photo Array, for simultaneously detecting a Multiplicity of Wavelengths, which Spectroscopic Rotating Compensator Material System Investigation System can be operated with essentially any Achromatic or non-Achromatic Compensator.

International Patent Application No. WO97/34521 (Abbott Laboratories) was published after the earliest priority date of the present patent. However the priority date claimed by the International Patent Application of Abbott Laboratories is earlier than the priority date claimed by the present patent, so that the content of the International Patent Application to Abbott Laboratories may be relevant to the novelty of the present patent under Article 54(3) EPC.

WO97/34521 discloses an apparatus and a process of determining the concentration of an optically active compound in a biological sample. The process measures the entire polarization state of the sample and compares the measured polarization state of the sample to the polarization state of a sample having a known concentration of that compound. The polarization state of the sample is measured after manipulating the polarization state of light entering and leaving the sample and detecting the light leaving the sample. The apparatus contains a source of light, a sample holder for holding the biological sample, a detector, a first polarization manipulator between the light source and the sample holder, a second polarization manipulator between the sample holder and an analyzer to correlate detected signals with concentration of the optically active compound. The disclosure relates to the non-invasive determination of optically active compounds, more particularly to an apparatus and process for the non-invasive determination of an optically active compound in a biological sample using the entire polarization state of light passing through the sample.

In US-A-5,581,350 (Xing Chen *et al*) there is disclosed a method for calibrating an ellipsometer, and an ellipsometer including a processor programmed to control the analyzer, polarizer, and other ellipsometer components, and to process the data measured by the ellipsometer to perform the calibration method automatically. Where the ellipsometer's polarizer rotates and the analyzer remains fixed during measurement, the method determines coarse approximations of values $A_o$ and $P_o$, and then processes reflectivity data obtained at two or more analyzer angles to determine refined approximations of the values $A_o$ and $P_o$, where $P_o$ is the angle of the polarizer's optical axis at an initial time, and $A_o$ is the offset of the actual orientation angle of the analyzer from a nominal analyzer angle. Preferably the ellipsometer is a spectroscopic ellipsometer, the reflectivity data determine a $\tan\Psi$ spectrum and a $\cos\Delta$ spectrum for each of the analyzer angles, and the coarse approximations of $A_o$ and $P_o$ are refined by processing the reflectivity data by performing regression on $A_o$ and $P_o$ until the differences among the $\tan\Psi$ and $\cos\Delta$ spectra for several analyzer angles are minimized. Where the ellipsometer's analyzer rotates and the polarizer remains fixed during measurement, the method coarsely determines values $A'_o$ and $P'_o$, and then processes reflectivity data obtained at two or more polarizer angles to determine refined approximations of the values $A'_o$ and $P'_o$, where $P'_o$ is the angle of the analyzer's optical axis at an initial time, and $A'_o$ is the offset of the actual orientation angle of the polarizer from a nominal polarizer angle. There is disclosed the combination of a dispersive optics and a multiplicity of detector elements for use in a material system investigation system comprising a spectroscopic rotating polarizer/analyzer ellipsometer.

In a paper entitled "Spectroscopic rotating compensator ellipsometry in the infrared:retarder design and measurement", by den Boer, J.H.W.G., *et al*, Meas. Sci. Technol. 8 (1997) 484-492, there is disclosed a spectroscopic rotating compensator material system investigation system comprising a source of a polychromatic beam of electromagnetic radiation, a Fourier transform spectrometer, a polarizer, a stage for supporting a material system, an analyzer and a detector system. The paper sets out that rotating compensator ellipsometry (RCE) is an approach to ellipsometry that is superior to the widely used rotating analyser ellipsometry (RAE). An essential component in RCE is a retarder that generates a retardance close to 90°. In contrast to RCE at a single wavelength, spectroscopic RCE requires a retarder that performs well over a wide range of the used spectrum. The designed retarder is capable of this and works on the principle of total internal reflection. Making use of this retarder, RCE is tested by measuring the optical characteristics of a Teflon-like layer on an aluminium substrate. The results show good agreement with similar RAE measurements, as well as data calculated from an ellipsometric model.

Thus the paper by den Boer *et al* discloses a spectroscopic rotating compensator material system investigation system comprising a source of a polychromatic beam of electromagnetic radiation, a polarizer, a stage for supporting a material system, an analyzer, and at least one detector system, said spectroscopic rotating compensator material

system investigation system further comprising at least one compensator(s) positioned at a location selected from the group consisting of: before said stage for supporting a material system, and after said stage for supporting a material system, and both before and after said stage for supporting a material system; such that when said spectroscopic rotating compensator material system investigation system is used to investigate a material system present on said stage for supporting a material system, said analyzer and polarizer are maintained essentially fixed in position and at least one of said at least one compensator(s) is caused to continuously rotate while a polychromatic beam of electromagnetic radiation produced by said source of a polychromatic beam of electromagnetic radiation is caused to pass through said polarizer and said compensator(s), said polychromatic beam of electromagnetic radiation being also caused to interact with said material system, pass through said analyzer and interact with said at least one detector system.

In accordance with the present invention in a first aspect, such a spectroscopic rotating compensator material system investigation system is characterised in that the system includes a dispersive optics, and that said at least one detector system contains a multiplicity of detector elements, said polychromatic beam of electromagnetic radiation being caused to interact with said dispersive optics such that a multiplicity of essentially single wavelengths are caused to simultaneously enter a corresponding multiplicity of detector elements in said at least one detector system; the system also being characterised by a mathematical model comprising calibration parameters selected from the group consisting of: polarizer azimuthal angle orientation ( $P_s$ ), present material system PSI ($\Psi$), present material system DELTA ( $\Delta$ ), compensator azimuthal angle orientation(s) ($C_s$) ($C'_s$) ($C''_s$), matrix components of said compensator(s) ($r_1$) ($r_2$) ($r_3$) ($r_4$), analyzer azimuthal angle orientation ( $A_s$ ), and detector element image persistance ( $X_n$ ) and read-out ( $\rho_n$ ) nonidealities, which mathematical model is effectively a transfer function which enables calculation of electromagnetic beam intensity as a function of wavelength detected by a detector element (DE), given intensity as a function of wavelength provided by said source of a polychromatic beam of electromagnetic radiation (EPCLB); said calibration parameters selected from the group consisting of: polarizer azimuthal angle orientation ( $P_s$ ), present material system PSI ( $\Psi$ ), present material system DELTA ( $\Delta$ ), compensator azimuthal angle orientatation(s), matrix components ( $\delta_u$ ) of said compensator(s) ($C_s$) ($C'_s$) ($C''_s$), analyzer azimuthal angle orientation ( $A_s$ ), and detector element image persistance ( 'x' ) and read-out ( 'ρ' ) nonidealities, being, in use, evaluated by performance of a mathematical regression of said mathematical model onto an at least two dimensional data set, said at least two dimensional data set being intensity values vs. wavelength and a parameter selected from the group consisting of: angle-of-incidence of said polychromatic beam of electromagnetic radiation with respect to a present material system (MS), and azimuthal angle rotation of an element selected from the group consisting of: said polarizer (P) and said analyzer (A), obtained over time, while at least one of said at least one compensator(s) (C) (C') (C") is caused to continuously rotate.

According to the present invention in a second aspect there is provided a method of calibrating a spectroscopic rotating compensator material system investigation system comprising the steps of:

a. providing a spectroscopic rotating compensator material system investigation system comprising a source of a polychromatic beam of electromagnetic radiation, a polarizer, a stage for supporting a material system, an analyzer, and at least one detector system, said spectroscopic rotating compensator material system investigation system further comprising at least one compensator(s) positioned at a location selected from the group consisting of: before said stage for supporting a material system, and after said stage for supporting a material system, and both before and after said stage for supporting a material system; such that when said spectroscopic rotating compensator material system investigation system is used to investigate a material system present on said stage for supporting a material system, said analyzer and polarizer are maintained essentially fixed in position and at least one of said at least one compensator(s) is/are caused to continuously rotate while a polychromatic beam of electromagnetic radiation produced by said source of a polychromatic beam of electromagnetic radiation is caused to pass through said polarizer and said compensator(s), said polychromatic beam of electromagnetic radiation being also caused to interact with said material system, pass through said analyzer and interact with said at least one detector system;

characterised in that said polychromatic beam of electromagnetic radiation is also caused to interact with a dispersive optics such that a multiplicity of essentially single wavelengths are caused to simultaneously enter a corresponding multiplicity of detector elements in said at least one detector system;

the method also being characterised by

b. developing a mathematical model of said spectroscopic rotating compensator material system investigation system-which comprises calibration parameter variables selected from the group comprising polarizer azimuthal angle orientation ( $P_s$ ), present material system PSI ( $\Psi$ ), present material system DELTA ( $\Delta$ ), compensator azimuthal angle orientation(s) ($C_s$) ($C'_s$) ($C''_s$), matrix components ( $\delta_u$ ) of said compensator(s) (C) (C') (C"), and analyzer azimuthal angle orientation ( $A_s$ ), which mathematical model is effectively a transfer function which enables calculation of electromagnetic beam intensity as a function of wavelength detected by a detector element,

given intensity as a function of wavelength provided by said source (LS) of a polychromatic beam of electromagnetic radiation (PPCLB);

c. causing a polychromatic beam of electromagnetic radiation (PPCLB) produced by said source (LS) of a polychromatic beam of electromagnetic radiation, to pass through said polarizer (P), interact with a material system (MS) caused to be in the path thereof, pass through said analyzer (A), and interact with said dispersive optics (DO) such that a multiplicity of essentially single wavelengths are caused to simultaneously enter a corresponding multiplicity of detector elements (DE's) in said at least one detector system (DET), with said polychromatic beam of electromagnetic radiation (PPCLB) also being caused to pass through said compensator(s) (C) (C') (C") positioned at a location selected from the group consisting of: before said stage (STG) for supporting a material system (MS), and after said stage (STG) for supporting a material system (MS), and both before and after said stage (STG) for supporting a material system (MS);

d. obtaining an at least two dimensional data set of intensity values vs. wavelength and a parameter selected from the group consisting of: angle -of- incidence of said polychromatic beam of electromagnetic radiation with respect to a present material system (MS), and azimuthal angle rotation of an element selected from the group consisting of: said polarizer (P) and said analyzer (A), over time, while at least one of said at least one compensator(s) (C) (C') (C") is caused to continuously rotate;

e. performing a mathematical regression of said mathematical model onto said at least two dimensional data set, thereby evaluating calibration parameters in said mathematical model;

said regression based calibration procedure evaluated calibration parameters serving to compensate said mathematical model for non-achromatic characteristics and non-idealities of said compensator(s), and for azimuthal angles of said polarizer (P), analyzer (A) and compensator(s) (C) (C') (C").

In accordance with a third aspect of the present invention there is provided spectroscopic rotating compensator material system investigation system comprising a source of a polychromatic beam of electromagnetic radiation, a polarizer, a stage for supporting a material system, an analyzer, and at least one detector system, said spectroscopic rotating compensator material system investigation system further comprising at least one compensator(s) positioned at a location selected from the group consisting of: before said stage for supporting a material system, and after said stage for supporting a material system, and before and after said stage for supporting a material system; such that when said spectroscopic rotating compensator material system investigation system is used to investigate a material system present on said stage for supporting a material system, said analyzer and polarizer are maintained essentially fixed in position and at least one of said at least one compensator(s) is caused to continuously rotate while a polychromatic beam of electromagnetic radiation produced by said source of a polychromatic beam of electromagnetic radiation is caused to pass through said polarizer and said compensator(s), said polychromatic beam of electromagnetic radiation being also caused to interact with said material system;

characterised in that the system includes a dispersive optics and that said at least one detector system contains a multiplicity of detector elements; said polychromatic beam of electromagnetic radiation being also, without further focusing, caused to pass through said analyzer and interact with said dispersive optics, said dispersive optics serving to form a plurality of essentially spacially offset orders when said polychromatic beam of electromagnetic radiation is caused to impinge thereupon, each said produced order comprising an essentially continuous spectrum of spacially separated electromagnetic beams of essentially single wavelengths, many of said essentially single wavelengths being present in two or more produced orders; such that in use first and second multiplicities of essentially single wavelength beams of electromagnetic radiation from first and second produced orders are simultaneously intercepted by, respectively, first and second detector systems, thereby enabling the simultaneous accessing of a first multiplicity of essentially single wavelengths by said first detector system and a second multiplicity of essentially single wavelengths by said second detector system, each of which first and second multiplicities of essentially single wavelengths intercepted by said first and second detector systems, respectively, includes specific first and second essentially single wavelength beams of electromagnetic radiation, said specific first and second essentially single wavelength beams of electromagnetic radiation being simultaneously intercepted by specific detector elements in said first and second detector systems respectively, even where electromagnetic beams of said specific first and second essentially single wavelengths are spacially situated close to one another in a single produced order for separate photo detector array detector elements in a single detector system which intercepts said single order, to, simultaneously, access beams of electromagnetic radiation of both said specific first and second essentially single wavelengths, separately;

the system also being characterised by a mathematical model comprising calibration parameters selected from the group consisting of: polarizer azimuthal angle orientation ( $P_s$ ), present material system PSI ( $\Psi$ ), present material system DELTA ( $\Delta$ ), compensator azimuthal angle orientatiori(s) ($C_s$) ($C'_s$) ($C''_s$), retardance of said compensator(s),

analyzer azimuthal angle orientation, and detector system (DET) image persistance ( $X_n$ ) and read-out ($\rho_n$) nonidealities, which mathematical model is effectively a transfer function which enables calculation of electromagnetic beam intensity as a function of wavelength detected by a detector element (DE), given intensity as a function of wavelength provided by said source (LS) of a polychromatic beam of electromagnetic radiation (PPCLB); said calibration parameters selected from the group consisting of: polarizer azimuthal angle orientation ( $P_s$ ), present material system PSI ( $\Psi$ ), present material system DELTA ( $\Delta$ ), compensator azimuthal angle orientatation(s) ($C_s$) $C'_s$) $C''_s$), retardance of said compensator(s) ( $\delta_n$ ) analyzer azimuthal angle orientation ( $A_s$ ), and detector system (DET) image persistance ( $X_n$ ) and read-out ( $\rho_n$ ) nonidealities, being, in use, evaluated by performance of a mathematical regression of said mathematical model onto an at least two dimensional data set, said at least two dimensional data set being intensity values vs. wavelength and a parameter selected from the group consisting of: angle-of-incidence of said polychromatic beam of electromagnetic radiation with respect to a present material system, and azimuthal angle rotation of an element selected from the group consisting of: said polarizer (P) and said analyzer (A), obtained over time, while at least one of said at least one compensator(s) (C) (C') (C'') is caused to continuously rotate.

There will now be described a number of preferred and optional features and combinations of features of the invention.

It is generally considered that while Rotating Compensator Material System Investigation Systems, (eg. Rotating Compensator Ellipsometers), provide many benefits, (eg. Material System PSI and DELTA investigation limiting "dead-spots" are not present), that in the absence of essentially Achromatic "ideal" Compensators it would be prohibitively difficult and expensive to build, calibrate and utilize a "Spectroscopic" Rotating Compensator Material System Investigating System. This is to be understood in light of the fact that Compensators which are essentially Achromatic, (ie. provide essentially constant retardation over a large range of Wavelengths, such as 190 - 1000 nanometers), are not generally and economically available as off-the-shelf items.

Embodiments of the present invention can provide, however, an affordable, easy to calibrate and utilize Spectroscopic Rotating Compensator Material System Investigation System.

Of particular importance is the fact that said at least one Compensator utilized in the present invention can be essentially <u>any</u> available, reasonably priced, off-the-shelf Retardation providing system, including non-Achromatic, Berek-type, Zero-Order Waveplate, Multiple-Order Waveplate, Combinations of Multiple-Order Waveplates, Polymer Retarder, Mica Waveplate, Freshnel Rhomb, Achromatic, and Pseudo-Achromatic, etc.

For general information, it is noted that a Berek-type Compensator is a uniaxially anisotropic plate of material in which the Optical Axis is oriented perpendicularly to a plate surface thereof. When a Polarized Beam of Electromagnetic Radiation is caused to be incident other than along the Optical Axis, orthogonal components thereof encounter different effective Indicies of Refraction, thereby effecting retardation therebetween. A Zero-Order Quartz Waveplate is typically constructed by combining two Multi-Order (Quartz) Waveplates which have Optical Axes oriented at ninety (90) degrees with respect to one another. The two Multi-Order waveplates are selected so that the difference in retardation entered by each gives rise to an overall Zero-Order retardance characteristic. Polymer Compensators are made of a polymer material and can provide true Zero-Order retardance which, as do many Compensators, provides an inverse wavelength functional Retardance Characteristic. Essentially Achromatic (Pseudo-Achromatic) Compensators can be constructed by stacking appropriately chosen Polymer and Crystal waveplates. A potential advantage of said essentially Achromatic Compensators is that Retardance can be essentially constant over a range of wavelengths.

While it is known that generally available Compensators do not provide an exact Ninety (90) Degrees of Retardation at all wavelengths over a relatively large range of Wavelengths, the present invention, as described supra herein, utilizes a Regression based Calibration procedure which compensates for said non-ideal Compensator Retardation characteristics. And while it is true that the sensitivity and accuracy of a Rotating Compensator Material System Investigation System degrades as the Retardance provided by a utilized Compensator approaches zero (0.0) or one-hundred-eighty (180) degrees, it has been found that Compensators which demonstrate Retardation, over a range of utilized Wavelengths, of from forty (40) to one-hundred-seventy (170) degrees, are acceptable for use in embodiments of the present invention, and allow achieving very impressive results over a demonstrated relatively large range of wavelengths, (eg. at least two-hundred-fifty (250) to one-thousand (1000) nanometers).

In addition, evaluation of Detector System Detector Element Image Persistance and Readout non-Ideality compensation Calibration Parameters also included in the Mathematical Model, can simultaneously be carried out in the Mathematical Regression Procedure.

It is noted that where two Compensators are present, each can be rotated at essentially the same, or different speeds.

Said Method of Calibrating a Spectroscopic Rotating Compensator Material System Investigation System can include, in the step of providing the Dispersive Optics and Photo Array Detector Elements of the Spectroscopic Rotating Compensator Material System Investigation System, the step of effecting common mounting thereof with a Beam Splitting Means, said Beam Splitting Means serving to divert a portion of the Polychromatic Beam of Electromagnetic Radiation which otherwise proceeds to said Dispersive Optics, and transmit the remainder of said Polychromatic Beam

of Electromagnetic Radiation toward said Dispersive Optics. In use, the diverted portion of said Polychromatic Beam of Electromagnetic Radiation can then be directed by said Beam Splitting Means into an Alignment Means, (which can be a Cross-Hairs or an Automated Polychromatic Beam of Electromagnetic Radiation Detecting and commonly mounted Dispersive Optics and Detector Elements Orientation Control Means). In use said Alignment Means then provides monitored Alignment Capability thereby allowing precise control of the Locus of Propagation of the portion of said Polychromatic Beam of Electromagnetic Radiation which passes through said Beam Splitting Means, interacts with said Dispersive Optics, and enters said Detector Elements.

Said Method of Calibrating a Spectroscopic Rotating Compensator Material System Investigation System can also include, in the step of providing a Mathematical Model, the steps of providing a Matrix Representation of each of said Polarizer, present Material System, said Compensator(s), and said Analyzer, and determining a Mathematical Transfer Function relating Electromagnetic Beam Intensity Out to Intensity In, as a function of Wavelength, by multiplication of said Matrices in a Spectroscopic Rotating Compensator Material System Investigation System element presence representing order.

Said Method of Calibrating a Spectroscopic Rotating Compensator Material System Investigation System can involve, in the step of calculating values of Coefficients of a Transfer Function from said Data Set, the calculation of values of Coefficients of a Fourier Series, (eg. $\alpha_2$, $\alpha_4$, $\beta_2$, $\beta_4$, in Eqs. 11-14 supra).

Additionally, said Method of Calibrating a Spectroscopic Rotating Compensator Material System Investigation system can further comprise the step of Parameterizing Calibration Parameters by representing variation as a function of Wavelength, (or perhaps Angle-Of-Incidence of said Polychromatic Beam of Electromagnetic Radiation with respect to a Surface of an Investigated Material System or Other Variable), by a Calibration Parameter containing Mathematical Equation, Calibration Parameter(s) in said Calibration Parameter containing Mathematical Equation being evaluated during said Mathematical Regression. (See Eqs. 51 & 52 supra). When this is done the Calibration Parameter containing Mathematical Equation provides a functional relationship, and, it is noted, can even be a constant value over a range of, for instance, Wavelenghts, (eg. Polarizer Azimuthal Angle setting). (Note, said parametered approach to mathematical regression based calibration parameter evaluation is better described supra herein under the Headings GLOBAL REGRESSION MODES 1, 2 and 3).

It is further noted that the at least Two Dimensional Data Set can be obtained with the Spectroscopic Rotating Compensator Material System Investigation System oriented in a "Straight-Through" or "Material-System-Present" configuration. In the first configuration open atmosphere essentially constitutes a material system, and a Polarized Electromagnetic Beam passes directly through the Polarizer, Compensator(s) and Analyzer into the Detector System. In the second configuration a Material System is present which presents PSI and DELTA values other than those of the open atmosphere so that a Polychromatic Electromagnetic Beam passes through the Polarizer, possibly a Compensator, and then interacts with a Material System, before passing through, possibly, a Compensator, an Analyzer and into the Detector System. Compensator(s), it should be understood, can be present before and/or after the Material System.

With the above general description of the present invention System and Calibration Method in mind, attention is directed to providing a detailed demonstration of the Calibration Procedure of the an embodiment of the present invention as applied to a Spectroscopic Rotating Compensator Ellipsometer System sequentially comprised of:

A Polychromatic Light Source
A Fixed Polarizer
A Material Sample
A Continuously Rotating Compensator
A Fixed Analyzer, and
A Detector Element containing Photo Array.

(Note: the Reflection mode side of Fig. 1 of this Disclosure shows this basic configuration where Compensator (C) is considered as removed and only Compensator (C') remains present).

It is to be appreciated, however, that the basic approach to calibration described directly, is adaptable for use in systems in which the Continuously Rotating Compensator is placed ahead of a Material System, and in systems in which two Compensators are present, one ahead of, and one after a Material System wherein one or both are caused to Continuously Rotate in use. For instance, in the case where a Rotating Compensator is placed ahead of the Material Sample, rather than thereafter, simply exchanging references to Polarizer and Analyzer in equations derived for the case where the Rotating Compensator is placed after the Material System, provides the applicable equations.

Transfer function equations for the Rotating Compensator system configured as recited above can be obtained from multiplication of Matrix Representations of the various components, in an appropriate order, in conjunction with Trig function containing Rotation Matrices, which serve to align coordinate systems between components. Eq. 1 shows said Matrix representation:

$$E(P,\Psi,\Delta,C,r1,r2,r3,r4,A)=\begin{pmatrix}1 & 0\\ 0 & 0\end{pmatrix}\cdot\begin{pmatrix}\cos(A) & \sin(A)\\ -\sin(A) & \cos(A)\end{pmatrix}\cdot\begin{pmatrix}\cos(C) & -\sin(C)\\ \sin(C) & \cos(C)\end{pmatrix}\cdot\begin{pmatrix}r1 & r3\\ r2 & r4\end{pmatrix}\cdot$$

$$\begin{pmatrix}\cos(C) & \sin(C)\\ -\sin(C) & \cos(C)\end{pmatrix}\cdot\begin{pmatrix}\sin\Psi\cdot e^{i\cdot\Delta} & 0\\ 0 & \cos\Psi\end{pmatrix}\cdot\begin{pmatrix}\cos(P)\\ \sin(P)\end{pmatrix} \quad (1)$$

where:

$\Psi$ and $\Delta$ are the traditional ellipsometric parameters which describe the Material System;

P is the azimuthal orientation of the Polarizer;

C is the azimuthal orientation of the Rotating Compensator;

r1, r2, r3 & r4 are the Jones Matrix elements which describe the Compensator, (Note that a Jones Matrix is utilized, however, a Mueller Matrix or other Matrix could also be utilized);

A is the azimuthal orientation of the Analyzer.

The Light Intensity which is measured by a Detector is provided by multiplying through the Matrices in Eq. 1 to provide a Complex Result, then multiplying said Complex Result by its Complex Conjugate. Eq. 2 indicates this:

$$I(P,\Psi,\Delta,C,r1,r2,r3,r4,A) = E(P,\Psi,\Delta,C,r1,r2,r3,r4,A) \cdot E^*(P,\Psi,\Delta,C,r1,r2,r3,r4,A) \quad (2)$$

The Intensity Equation I(t), (Eq. 8):

$$I(t) = I_0(DC + \alpha_2 \cos 2C + \beta_2 \sin 2C + \alpha_4 \cos 4C + \beta_4 \sin 4C) \quad (8)$$

which results from said multiplication is very involved, but can be expressed in terms of intermediate results as provided in Eqs.3 - 7, via Eqs. 9.

$$p1=\sin\Psi\cdot(\cos\Delta + i\cdot\sin\Delta)\cdot\cos P$$

$$p2=\cos\Psi\cdot\sin P \quad (3)$$

$$K1=(p1\cdot r3 + p2\cdot r1)$$

$$K2=(p1\cdot r1 + p2\cdot r3)$$

$$K3=(p1\cdot r4 + p2\cdot r2)$$

$$K4=(p1\cdot r2 + p2\cdot r4) \quad (4)$$

$$U1=(\cos(A)\cdot K2 + \sin(A)\cdot K4)$$

$$U2=(K3 + K2)\cdot\sin(A) + (K1 - K4)\cdot\cos(A)$$

$$U3=(\cos(A)\cdot K3 + \sin(A)\cdot K1) \quad (5)$$

$$V1=U1\cdot\overline{U1} \qquad V2=U2\cdot\overline{U2} \qquad V3=U3\cdot\overline{U3}$$

$$V4=2\cdot Re(U1\cdot\overline{U2}) \qquad V5=2\cdot Re(U1\cdot\overline{U3}) \qquad V6=2\cdot Re(U2\cdot\overline{U3}) \tag{6}$$

$$T1=V1 + V3 \qquad T2=V2 + V5 \qquad T3=V1 - V3$$

$$T4=V4 + V6 \qquad T5=V4 - V6 \tag{7}$$

where Eqs. 9 provide that:

$$DC=\frac{3}{8}\cdot T1 + \frac{1}{8}T2$$

$$\alpha_2=\frac{1}{2}\cdot T3 \qquad \beta_2=\frac{1}{4}\cdot T4$$

$$\alpha_4=\frac{1}{8}\cdot(T1-T2) \qquad \beta_4=\frac{1}{8}\cdot T5 \tag{9}$$

and C = $\omega\cdot t$, where '$\omega$' is the angular frequency of the continuously rotating Compensator and I0 is an arbitrary constant.

(It is further noted that Eq. 8 is a truncated Fourier Series, and could include additional, higher harmonic terms).

Equations 1 - 9 are appropriate for a Material System which does not depolarize an Electromagnetic Beam used to investigate a Material System, such that Jones Matrix formalism is appropriate. If a Material System is investigated which does depolarize an investigation electromagnetic beam, then Mueller Matrix formalism can be substituted. As well, the "Isotropic" Material System Matrix in Eq. 1 could be replaced by a General Material System Matrix in the Rotating Compensator. This is described by M. Schubert in the context of "Generalized Ellipsometry", (see Background Section for citations to relevant articles which treat the topic of Generalized ellipsometry by Schubert).

If an ideal Compensator is assumed, where the Jones Matrix components are:

r1 = 1;
r2 = 0;
r3 = 0; and
r4 = $e^{i\cdot\delta}$ ;

then the Eqs. 9 become Eqs 10 - 14:

$$DC = (1/2)\,(1 + \cos\delta)\,[\cos 2A\,(\cos 2P - \cos 2\Psi) + \sin 2A \sin 2P \sin 2\Psi \cos\Delta]$$

$$- \cos 2P \cos 2\Psi + 1 \tag{10}$$

$$\alpha_2 = - \sin 2A \sin 2P \sin\delta \sin 2\Psi \sin\Delta \tag{11}$$

$$\beta_2 = \cos 2A \sin 2P \sin\delta \sin 2\Psi \sin\Delta \tag{12}$$

$$\alpha_1 = (1/2)(1 - \cos\delta)\,[\cos 2A\,(\cos 2P - \cos 2\Psi) - \sin 2A \sin 2P \sin 2\Psi \cos\Delta] \tag{13}$$

$$\beta_4 = (1/2)\,(1 - \cos\delta)\,[\sin 2A\,(\cos 2P - \cos 2\Psi) + \cos 2A \sin 2P \sin 2\Psi \cos\Delta] \tag{14}$$

It is noted that said Eqs. 10 - 14 are found in Kleim et al. as referenced in the Background Section of this Specification, with "A" and "P" interchanged. (The Kleim et al. work assumed a Rotating Compensator present prior to a Material System).

Continuing, Eqs. 10 - 14 are valid for an ideal Rotating Compensator System wherein the Azimuthal angles

of the optics are perfectly aligned with the Material Sample frame of reference. In practice this is never true, and offset terms "A'", "P' " and "C'" must be entered to provide Eqs. 15a and 15b:

$$A = A' - A_s, \qquad P = P' - P_s \tag{15a}$$

$$C = C' - C_s \tag{15b}$$

where the A', C' and P' indicate dial readings and the $A_s$, $C_s$ and $P_s$ indicate Offset Angles to be determined by a Calibration Procedure.

Substituting Eq. 15b into Eq. 8 provides Eqs. 16a and 16b, and 17a and 17b for Fourier Coefficients, (note that the DC term is unchanged):

$$m\alpha_2 = \alpha_2 \cos 2C_s - \beta_2 \sin 2C_s \tag{16a}$$

$$m\beta_2 = \alpha_2 \sin 2C_s + \beta_2 \cos 2C_s \tag{16b}$$

$$m\alpha_4 = \alpha_4 \cos 4C_s - \beta_4 \sin 4C_s \tag{17a}$$

$$m\beta_4 = \alpha_4 \sin 4C_s + \beta_4 \cos 4C_s \tag{17b}$$

Continuing, apparatus embodying the present invention may simultaneously measure the Intensity of a multiplicity of essentially single wavelengths with a Photo Array, to determine Fourier Coefficients. And as the Diode Elements in the Photo Array are operated in a Charge Integration Mode, it is necessary to utilize a Hadamard analysis of the signal. In the preferred embodiment of the present invention, the Diode Array is synchronously read-out exactly sixteen (16) times during each rotation of the Rotating Compensator. The time varying signal, which results from modulation imposed by the Rotating Compensator, is given by Eq. 18. Eq. 19 represents a measured value at a given channel in a Photo Array for the i'th scan measured during the rotation.

$$s(t) = I_0 \cdot (DC + \alpha_2 \cos 2t + \beta_2 \sin 2t + \alpha_4 \cos 4t + \beta_4 \sin 4t) \tag{18}$$

$$h_i = \int_{(i-1)\cdot\frac{\pi}{8}}^{i\cdot\frac{\pi}{8}} s(t)\, dt \tag{19}$$

Substituting Eq. 18 into Eq. 19 and rearranging terms provides the following expressions, (Eqs. 20 - 24), for the Fourier Coefficients:

$$DC = \frac{h_1 + h_2 + h_3 + h_4 + h_5 + h_6 + h_7 + h_8 + h_9 + h_{10} + h_{11} + h_{12} + h_{13} + h_{14} + h_{15} + h_{16}}{4\pi \cdot I_0} \tag{20}$$

$$\alpha_2 = \frac{h_1 + h_2 - h_3 - h_4 - h_5 - h_6 + h_7 + h_8 + h_9 + h_{10} - h_{11} - h_{12} - h_{13} - h_{14} + h_{15} + h_{16}}{8 \cdot I_0} \quad (21)$$

$$\beta_2 = \frac{h_1 + h_2 + h_3 + h_4 - h_5 - h_6 - h_7 - h_8 + h_9 + h_{10} + h_{11} + h_{12} - h_{13} - h_{14} - h_{15} - h_{16}}{8 \cdot I_0} \quad (22)$$

$$\alpha_4 = \frac{h_1 - h_2 - h_3 + h_4 + h_5 - h_6 - h_7 + h_8 + h_9 - h_{10} - h_{11} + h_{12} + h_{13} - h_{14} - h_{15} + h_{16}}{8 \cdot I_0} \quad (23)$$

$$\beta_4 = \frac{h_1 + h_2 - h_3 - h_4 + h_5 + h_6 - h_7 - h_8 + h_9 + h_{10} - h_{11} - h_{12} + h_{13} + h_{14} - h_{15}\ h_{16}}{8 \cdot I_0} \quad (24)$$

Equations 20 - 24 provide the means for extracting the Fourier Coefficients for the Rotating Compensator signal from the (hi) values which are measured by the Photo Array Diode Elements during continuous rotation of the Rotating Compensator.

It is emphasized that good quality electronics which employ the Video Integration Read-Out technique have been found to be very conducive to accurately measuring Fourier Coefficients using Photo Array Diode Elements. It is to be understood that said good quality electronics interface output signals from Photo Array Diode Elements to a computer system which collects and analyzes data.. Preferred "Off-The-Shelf-Systems" which include good quality electronics, suitable for use in the present invention Rotating Compensator Material System Investigation System, are Zeiss (Registered Trade Mark) Diode Array Spectrometer systems identified by manufacturer numbers selected from the group: MMS1 (300-1150 nm); UV/VIS MMS (190-230 nm); UV MMS (190-400 nm); AND IR MMS (900-2400 nm). Said Zeiss systems also include Dispersive Optics and Diode Element containing Photo Arrays. The Zeiss systems include twelve (12) bit dynamic range readout electronics, which provides a voltage pulse output. Embodiment of the present invention system may provide additional good-quality electronics in the form of an integrator and Analog to Digital Converter. In use, the scanning rate of Diode Elements in a Zeiss system Photo Array is synchronized with the rotation of the Rotating Compensator of the Rotating Compensator Material System Investigation System. Said synchronization is accomplished utilizing standard digital logic, and Diode Elements in the Photo Array are scanned sixteen (16) times during each rotation of the Rotating Compensator. It is further noted that preferred embodiments of the present invention preferably effect rotation of the Rotating Compensator with a hollow shaft Stepper Motor. A sequence of reference pulses is generated by a sensor attached to the Rotating Compensator, with said reference pulses being provided to good quality electronics simultaneous with the data provided by the Photo Array Diode Elements. Said reference pulses allow correlation of the angular position of the Rotating Compensator with data provided by the Photo Array Diode Elements.

Regarding Photo Array data, it is further noted that authors An and Collins describe some of the non-idealities which can be present when using a Photo Array Detector in a Spectroscopic Rotating Compensator Material System Investigation System. With the exception of the An and Collins correction for "Stray Light" (see An and Collins Eq. 13), however, none of the Photo Array non-ideality corrections which were presented in their paper were found necessary in implementing the preferred embodiment of the present invention. However, to allow a non-ideal Photo Array to be used in embodiments of the present invention, the relevant corrections for a Image Persistence, and for Read Time in a Spectroscopic Rotating Compensator Material System Investigation System in which sixteen (16) Diode Element Scans are acquired for each Rotating Compensator revolution were derived, and are provided in Eqs. 25 - 34.

Image Persistence correction, where 'x' is the magnitude of the non-ideality:

$$ip\alpha_2 = \alpha_2 - .5 \cdot x \cdot \left[ \left(2 \cdot \sqrt{2}\right) \cdot \alpha_2 + \sqrt{2} \cdot \beta_2 \right] \quad (25)$$

$$ip\beta_2 = \beta_2 - .5 \cdot x \cdot \left[ \left(2 - \sqrt{2}\right) \cdot \beta_2 - \sqrt{2} \cdot \alpha_2 \right] \quad (26)$$

$$ip\alpha_4=\alpha_4 - x\cdot(\alpha_4 + \beta_4) \quad (27)$$

$$ip\beta_4=\beta_4 - x\cdot(\beta_4 - \alpha_4) \quad (28)$$

$$ipDC=DC \quad (29)$$

Read Time correction, where 'ρ' is the channel read time of the diode array:

$$c\alpha_2=ip\alpha_2 - .5\cdot\rho\cdot\left[\left(1 + \sqrt{2}\right)\cdot ip\alpha_2 + ip\beta_2\right] \quad (30)$$

$$c\beta_2=ip\beta_2 - .5\cdot\rho\cdot\left[\left(1 + \sqrt{2}\right)\cdot ip\beta_2 - ip\alpha_2\right] \quad (31)$$

$$c\alpha_4=ip\alpha_4 - \rho\cdot(ip\alpha_4 + ip\beta_4) \quad (32)$$

$$c\beta_4=ip\beta_4 + \rho\cdot(ip\alpha_4 - ip\beta_4) \quad (33)$$

$$cDC=\left(1 - \frac{4\cdot\rho}{\pi}\right)\cdot ipDC \quad (34)$$

Eqs. 25 - 34 can be applied after Eqs. 10 - 17 to account for non-idealities in the Photo Array Diode Element readout. The Image Persistence and Read-Out non-ideality factors 'x' and 'ρ' can also be determined by defining them as Fit Parameters in a Calibration Regression procedure presented in the following section of this Specification.

For demonstration purposes, considering now the present invention Spectroscopic Rotating Compensator Material System Investigation System to be a Rotating Compensator Ellipsometer System with Diode Element Array read-out, it must be understood that to acquire usable data, Calibration must be performed. Said calibration provides numerical values for Azimuthal Orientation Off-set Angles of Polarizer, Analyzer and Compensator with respect to a Material System Frame of Reference, along with the Retardance of the Rotating Compensator as a function of Wavelength. In addition, Calibration Parameters to compensate non-idealities in Diode Elements in a Photo Array are calibrated.

The foundation of the Calibration Procedure was first announced in the 1993 paper by Johs, published in Thin Film Solids, cited in the Background Section herein. The same basic Calibration Procedure technique is further developed in Co-pending Patent Application Serial No. 08/618,820 which describes calibration of a Rotating Compensator Ellipsometer System utilized in the Infra-red (IR) band of wavelengths. Both identified references, however, describe typical application of the Regression based Calibration technique to one (1) wavelength at a time. While this method does work, it can require two-hundred-fifty-six (256) sets of Calibration Parameters where a two-hundred-fifty-six (256) Diode Element Photo Array is utilized, with each Diode Element serving to monitor an essentially single wavelength. (Note, as the electromagnetic spectrum is continuous, an essentially single wavelength is to be understood to be a small range of wavelengths centered around some wavelength, which essentially single wavelength is intercepted by a Diode Element in a Photo Array).

In practice of a method embodying the present invention a "Global" regression procedure is typically performed on a Two (2) Dimensional Data Set. Typically Polarizer Azimuthal Angle and Wavelength are selected as Data Set Independent variables, although electromagnetic beam Angle-of-Incidence with respect to a Material System surface could be selected as an Independent variable instead of, for instance, Wavelength or Polarizer Azimuthal Angle. It is also noted that the Regression based Calibration described in Co-pending Application Serial No. 08/618,820 required that two (2), at least two (2) Dimensional Data Sets be provided in each Regression procedure. The two Data Sets are obtained with different investigated Material System configurations being employed. For instance, Data Sets utilizing two different Material Systems, or one Material System present and a "Straight-through" configuration might be utilized.

(Note, a "Straight-through" configuration results when no Material System is present, and an electromagnetic beam is caused to pass sequentially through a Polarizer, Compensator and Analyzer then enter a Photo Array Detector System, without interacting with a Material System). An embodiment of the present invention, in contrast, requires that only one Data Set be present. Said Data Set can be obtained with the Ellipsometer in Material System present or Straight-through configuration, although some benefits are realized when a Material System is utilized, (discussed supra herein). Of course, the present invention can be practiced utilizing two Data Sets.

As mentioned, the Regression based Calibration procedure of the present invention requires that an at least Two (2) Dimensional Data Set be experimentally obtained. Typically said Two (2) Dimensional Data Set has as Independent Variables, Polarizer, (where the Rotating Compensator is placed after a Material System), Azimuthal Angle, and Wavelength. Where a Rotating Compensator is placed before a Material System, an Analyzer Azimuthal Angle is utilized. As mentioned, Angle-of- Incidence of an investigation Electromagnetic Beam with respect to an investigated Material System surface can be substituted for an Analyzer or Polarizer Azimuthal Angle settings, but this is not preferred as Material System PSI and DELTA values vary therewith. Also, it is generally simpler to vary a Polarizer or Analyzer Azimuthal Angle in most Ellipsometer systems in practice. Continuing, data is simultaneously obtained from many Diode Elements, (which correspond to different Wavelengths), and subjected to the Hadamard analysis inherent in Eqs. 20 - 24, infra to provide Fourier Coefficients present in Eq. 18. (It is noted that a Photo Array can contain 256, 1024 or 2048 Diode Elements, and some thereof might provide a signal which of too small an intensity to be utilized. Embodiments of the present invention allow for utilizing only a user selected group of signals for this and other reasons).

It will be noted that Eqs. 8 and 18 contain a D.C. term "$I_0$". This can be selected as a Fit Parameter in a Regression Procedure or a Normalization procedure can be implemented. Said Normalization can be with respect to the D.C. term, or a Normalizing Parameter can be included. The following Eqs 35a, 35b and 35c provide possible Normalizing Parameters:

$$\text{Norm} = \text{DC} \tag{35a}$$

$$\text{Norm} = \sqrt{(\alpha_2)^2 + (\beta_2)^2 + (\alpha_4)^2 + (\beta_4)^2 + (\text{DC})^2} \tag{35b}$$

$$\text{Norm} = \sqrt{(\alpha_2)^2 + (\beta_2)^2 + (\alpha_4)^2 + (\beta_4)^2} \tag{35c}$$

Eq. 35a provides for Normalizing with respect to the D.C. term, Eq. 35b provides for Normalizing to a Parameter which depends on the D.C. Term and the Fourier Coefficients, while Eq. 35c provides for Normalizing to a Parameter which depends on Fourier Coefficients but not the D.C. Term. If Fourier Coefficients are not Normalized, (ie. the D.C. Term "$I_0$" is not included as a Fit Parameter in a Calibration Parameter evaluating Regression Procedure, or Normalization is not performed), it should be appreciated that a "Floating" value result will be obtained for Calibration Parameters provided by application of the Calibration Parameter evaluating Regression onto said Fourier Series Coefficient values. As mentioned infra herein, the D.C. Component "$I_0$" can be difficult to evaluate, often requiring a "Shutter" to block background light, dark current, readout electronics voltage offsets etc. As well, the D.C. component is more susceptible to instrumentation drift. As a result, use of Eq. 35c is preferred in the present invention Calibration Procedure to use of Eqs. 35a and 35b and to including " $I_0$" in a Regression Procedure for evaluating Calibration Parameters. (Note that calibration data is taken with the Rotating Compensator Sample System Investigating System in a "Sample Present", rather than a "Straight Through" configuration, where such Eq. 35c normalization is practiced).

Normalized Fourier Coefficients can be then represented by Eqs 36 - 39:

$$n\alpha_2 = \frac{\alpha_2}{\text{Norm}} \tag{36}$$

$$n\beta_2 = \frac{\beta_2}{\text{Norm}} \tag{37}$$

$$n\alpha_4 = \frac{\alpha_2}{\text{Norm}} \tag{38}$$

$$n\beta_4 = \frac{\beta_4}{Norm} \quad (39)$$

A Global Calibration Data Set can be represented by Eq. 40:

$$MFD_{P,n} = \{ (n\alpha_2)_{P,n}, (n\beta_2)_{P,n}, (n\alpha_4)_{P,n}, (n\beta_4)_{P,n} \} \quad (40)$$

where MFD stands for Measured Fourier Data, and where "P" is the Polarizer Angle and constitutes one Independent Variable, (and is typically varied within the range of from zero (0.0) to one-hundred-eighty (180) degrees, in ten (10) degree steps), and where "n" identifies the index of a selected Diode element, (channel), in the Photo Array, or alternatively stated, identifies a Second Independent Variable, (ie. Wavelength). It is noted that a typical system configuration would make use of Diode Elements (channels) 30 - 250 in a 256 channel Photo Array. The term "Global" emphasizes the presence of Wavelength Dependence. Utilizing the just described "P" range settings and Wavelength range, Eq. 41 indicates that the Global MFD Data Set would contain:

$$(180/10 + 1 \text{ polarizes settings}) \times (250\text{-}30 + 1 \text{ channels}) \times (4 \text{ Fourier components})$$

$$= 16{,}796 \text{ values} \quad (41)$$

It is further noted that an approximate error in Fourier Data ( denoted $\sigma MFD_{P,n}$ ), can be estimated from signal to noise at each Detector Channel, and subsequently used in the Regression Analysis of the Experimentally Obtained Data Set.

Continuing, use of Eqs. 3 - 17, 35 - 39 and (25 - 34 if Photo Array nonidealities are included), allows one to calculate, (ie. mathematically predict), values of Normalized Fourier Coefficients as in Eqs 36 - 39, which will be experimentally measured by a present invention Rotating Compensator Material System Investigation System. However, to make said mathematical prediction requires that Material System PSI and DELTA values be known, the Offset Angles $P_s$, $A_s$, and $C_s$ be known, and that Compensator Retardation '$\delta$' be known as well as any other Compensator nonidealities, and that the Photo Array nonidealities 'x' and '$\rho$' be known if necessary. Mathematically this can be represented by Eq. 42:

$$PFD_{P,n}(P, \Psi_n, \Delta_n, (P_s)_n, (C_s)_n, (A_s)_n, \delta_n, x_n, \rho_n) \quad (42)$$

Eq. 42 states that a Predicted Fourier Data (PFD) Set at a given Polarizer Azimuth and Photo Array Channel (Wavelength), is a function of identified variables, which variables constitute Calibration Parameters which must be provided numerical values. The present invention Regression procedure provides means for numerically evaluating the Calibration Parameters.

In all known prior art, separate Regression procedures have been carried out at each utilized Wavelength. If Two-Hundred (200) Wavelengths were utilized, then Two-Hundred (200) separate values for $P_s$, $A_s$, $C_s$ etc. would be obtained. The present embodiment Regression Procedure, however, teaches that Calibration Parameters as a function of an Independent Variable, (eg. Wavelength), can be "Parameterized". That is, a mathematical relationship requiring only a few (eg. perhaps two (2) or three (3) Parameters), can be generated to describe a functional relationship between the Calibration Parameter and the Independent Variable (eg. Wavelength), and the present invention Regression Procedure utilized to evaluate said Two (2) or Three (3) Parameters. For example, the Polarizer Azimuthal Offset ( $P_s$ ) might be constant for all Wavelengths. Should this be the case then said Polarizer Azimuthal Offset ( $P_s$ ) can be evaluated and stored, rather than, for instance, Two-Hundred (200) separate values at Two-Hundred (200) separate Wavelengths. In this instance, Eq. 43 indicates that a Global Calibration Parameter can be defined:

$$(P_s)_n \equiv gP_s \quad (43)$$

In general, any of the discretely defined Calibration Parameters identified in Eq. 42, could be replaced by a Global Parametric Function as defined in Eq. 44:

$$CP_n = gCP(n, p_1, p_2, ..., p_k) \quad (44)$$

where '$CP_n$' stands for any Calibration Parameter which is discretely defined for each "n"'th channel, (ie. the "n"'th Wavelength), and 'gCP' is a global Parametric Function (as a function of an "n"'th channel number and "k" Calibration Parameters "p1...pk) which replace '$CP_n$'. A Parametric Function can be of any mathematical form, such as, but not limited to, polynomial, rational or trancendental (in the case of $\Psi_n$ and $\Delta_n$ , a Parametric Function could be calculated from a multi-layer optical model for a Material System, using known Material Optical Constants and Parameterized Film Thicknesses). The important characteristic of a Parametric Function being that:

1. It accurately represents the behavior of the Calibration Parameter at each Independent Variable (eg. Photo Array Channel or Wavelength).
2. It accurately represents the behavior of the Calibration Parameter utilizing fewer Parameters than would be required to simply evaluate Calibration Parameters at each utilized Independent Variable (eg. Wavelength).

In terms of Eq. 44 this can be stated that "k" (the number of Calibration Parameters), is less than "n" (the number of channels).

It is to be understood that preferred Global Parameter Function form utilized in the present invention depends upon the particular embodiment utilized, (eg. the Compensator type utilized). It is also within the scope of the present invention Regression based Calibration Parameter evaluation Procedure to represent some Calibration Parameters with Global Parametric Functions, and to represent other Calibration Parameters discretely. Three examples of Global Parametric Function utilizing Models follow directly.

<u>Global Regression Mode (GRM) 1.</u>

This (GRM) requires that five (5) Calibration Parameters be evaluated. Eqs. 45 - 47 provide equations for Predicted Fourier Data (PFD):

$$PFD_{P,n}( P, \Psi_n, \Delta_n, gP_s, gC_s, gA_s, g\delta(n,p_0,p_1)) \quad (45)$$

where

$$g\delta(n,p_0,p_1) = [p_0 \cdot 90 \cdot (1+p_1/[w(n)]^2)]/w(n) \quad (46)$$

and

$$w(n) = C_0 + C_1 \cdot n + C_2 \cdot n^2 \quad (47)$$

where w(n) returns a wavelength of electromagnetic radiation (in nanometers), corresponding to the "n" 'th channel of a Photo Array, where $C_0$, $C_1$ and $C_2$ are wavelength Calibration Parameters. In the case where a previously identified Ziess Diode Array Spectrometer Systems is utilized, said $C_0$, $C_1$ and $C_2$ Calibration Parameters are provided by the manufacturer, and Eq. 47 can be utilized to provide Wavelength given a Photo Array Channel number. The Global Retardance provided by a Compensator as a function of Wavelength is given by Eq. 46. Eq. 46 provides an Inverse Wavelength relationship, where "$p_0$" is a Wavelength, (in nanometers), at which said Compensator is a "Quarter-Wave-Plate" and demonstrates a Ninety (90) degree Retardation, and "$p_1$" accounts for the Dispersive effects in the Optical Properties of the Compensator. Higher order terms can be added to Eq. 46.

In this (GRM) Mode 1, the Azimuthal Offset Calibration Parameters are considered constant for all Wavelengths. Therefore, using (GRM) Mode 1, only Five (5) Global Calibration Parameters:

$$(gP_s, gC_s, gA_s, p_0, p_1),$$

in addition to Material System PSI and DELTA:

$\Psi_n$ and $\Delta_n$

need be evaluated by a Regression Procedure embodying aspects of the present invention.

GLOBAL REGRESSION MODE (GRM) 2.

This Mode is similar to (GRM) 1, but the $P_s$ Calibration Parameter is defined as a Global Calibration Parameter, (ie. it is a constant independent of Photo Array Channel Number "n"). Again, the Retardance of the Compensator is Parameterized by Eqs. 46 and 47. Values for $C_s$ *and* $A_s$ are allowed to take on discrete vales at each Photo Array Channel, however, Eq. 48 indicates the relationship:

$$PFD_{P,n}(P, \Psi_n, \Delta_n, gP_s, (C_s)_n, (A_s)_n, g\delta(n,p_0,p_1)) \quad (48)$$

GLOBAL REGRESSION MODE (GRM) 3.

In this (GRM) 3 Mode, only $P_s$ is defined as a Global Parameter, and all other system Calibration Parameters are allowed to take on discrete values at each Photo Array Channel. Eq. 49 indicates this relationship:

$$PFD_{P,n}(P, \Psi_n, \Delta_n, gP_s, (C_s)_n, (A_s)_n, \delta_n) \quad 49$$

REGRESSION

The present invention Regression Analysis which evaluates the Calibration Parameters identified infra herein utilizes standard non-linear regression analysis. First a $\chi^2$ metric is defined by Eq. 50 to quantify Error between Calculated Predicted Fourier Data (PFD) and Experimentally Measured Fourier Data (MFD).

$$\chi^2 = \sum_P \sum_n \left( \frac{MFD_{P,n} - PFD(P,n,p_k)}{\sigma MFD_{P,n}} \right)^2 \quad 50$$

Eq. 50 is a simplified way of stating that overall error between measured and predicted Calibration Data Sets is given by the squared difference between each measured and corresponding calculated predicted Fourier data, normalized by the approximate error at each measured data point ( $\sigma MFD_{P,n}$ ), and summed over all the Polarizer and Wavelength (Channel) setting values. Eq. 51 provides a more riggerous mathematical definition.

$$\chi^2 = \sum_P \sum_n \left\{ \left[ \frac{(m\alpha_2)_{P,n} - p\alpha_{2(P,n,p_k)}}{(\sigma\alpha_2)_{P,n}} \right]^2 + \left[ \frac{(m\beta_2)_{P,n} - p\beta_{2(P,n,p_k)}}{(\sigma\beta_2)_{P,n}} \right]^2 \cdots + \left[ \frac{(m\alpha_4)_{P,n} - p\alpha_4(P,n,p_k)}{(\sigma\alpha_4)_{P,n}} \right]^2 + \left[ \frac{(m\beta_4)_{P,n} - p\beta_4(P,n,p_k)}{(\sigma\beta_4)_{P,n}} \right]^2 \right\} \quad 51$$

In Eqs. 50 and 51, $p_k$ represents the 'k' adjustable system Calibration Parameters required to calculate (PFD). The well known Marquardt-Levenberg non-linear Algorithm, as described in the Johs paper cited in the Background Section herein, can be used to itteratively adjust system Calibration Parameters $p_k$ to minimize error.

It is noted that good initial values are required to practice Regression which converges rapidly. The present invention obtains good starting values for use in the Global Regressions described, by performing a number of non-global Regressions at a multiplicity of discrete Wavelengths. The resulting ranges of values for the various Calibration

Parameters then allows educated selection for Global Regression starting values.

It is also noted that Global Regression can be performed utilizing only data from every "N"'th Channel, (eg. every "N"'th Wavelength), to reduce required Regression procedure time to arrive at convergence. This approach to Regression is still to be considered as Global.

Once the Spectroscopic Rotating Compensator Material System Investigation System embodying the present invention is calibrated, it is possible to take data from unknown samples therewith and obtain PSI and DELTA plots therefore. Kleim et al., describes equations for PSI (Ψ) and DELTA ( Δ ) and these equations are provided as Eq. 52 and 53 herein:

$$\tan(2\cdot\Psi)=\frac{\sqrt{\left[(\alpha_2)^2+(\beta_2)^2\right]\cdot\left(\frac{1-\cos(\delta)}{\sin(\delta)}\right)^2+4\cdot\left(\beta_4\cdot\cos(2\cdot P)-\alpha_4\cdot\sin(2\cdot P)\right)^2}}{2\cdot\left(\alpha_4\cdot\cos(2\cdot P)+\beta_4\cdot\sin(2\cdot P)\right)} \qquad 52$$

$$\tan(\Delta)=\left(\frac{1-\cos(\delta)}{2\cdot\sin(\delta)}\right)\cdot\frac{\alpha_2\cdot\sin(2\cdot P)-\beta_2\cdot\cos(2\cdot P)}{\alpha_4\cdot\sin(2\cdot P)-\beta_4\cdot\cos(2\cdot P)} \qquad 53$$

In these equations the Analyzer should be set to +/- 45 degrees. Also, prior to applying Eqs. 52 and 53 the measured Fourier Data should be transformed into "ideal" Fourier Data by application of Eqs. 15a, 15b, 16a, 16b, 17a and17b as well as Eqs. 25 - 34. Kleim et al. also describes the advantages of performing a zone-averaged measurement in a Rotating Compensator System, (ie. averaging the PSI and DELTA extracted from measurements with the Analyzer A set to first, +45 Degrees, and second to -45 Degrees. This can be concurrently practiced with embodiments of the present invention to further improve the accuracy of data measurement.

It is also noted that an alternative approach to obtaining Material System PSI and DELTA characterizing data, is to perform a Calibration Procedure on a present invention Spectroscopic Rotating Compensator Material System Investigation System in a Sample Present Mode, with said Material System present therein.

Embodiments of the invention will now be described by way of example with reference to the accompanying drawings, in which:-

Fig. 1 shows the basic components of Reflectance and Transmission Mode Material System Investigation Systems which can be operated in Spectroscopic Rotating Compensator Material System Investigation System (eg. Ellipsometer System), Modes.

Fig. 2 shows a Spectrographic Diode Array Spectrometer System Detector.

Fig. 3 shows a Reflectance Mode combination of components shown in Figs. 1 and 2.

Fig. 4 shows a Reflectance Mode combination of components shown in Figs. 1 and 2 in which three Fig. 2 Spectrographic Diode Array Spectrometer Systems are present and provided input via light fibers.

Fig. 5 shows a Reflectance Mode combination of components shown in Figs. 1 and 2 in which Multiple Orders produced by a Dispersive Optics are intercepted by multiple Photo Arrays.

Fig. 6 demonstrates the Parameterization Approach to modeling Calibration Parameters which may be utilised in embodiments of the present invention.

Fig. 7 demonstrates a "Straight-through" configuration of a Spectroscopic Rotating Compensator Material System Investigation System.

Fig. 8a shows lined diffraction grating dispersion optics geometry.

Fig. 8b shows a blazed angle lined diffraction grating dispersion optics geometry.

Fig. 8c shows a holographic lined diffraction grating dispersion optics geometry.

Fig. 8d shows a prism dispersion optics geometry.

Fig. 9a shows a Fiber Optic which is essentially circular at the left side and which becomes of a "slit" shape at the right side.

Fig. 9b shows a Fiber Optic which is essentially circular shaped along the entire length thereof, and which provides input to a "Slit" per se.

Fig. 9c shows a Trifrucated Fiber Optic which is essentially circular at the left side, which trifrucates and then is exemplified as becoming circular or of a "slit" shape at the right side.

Fig. 9d shows a Berek-type Compensator with an Optical Axis perpendicular to a surface thereof.

Fig. 9e shows a Compensator with an Optical Axis parallel to a surface thereof.

Fig. 9f demonstrates construction of a Zero-Order Quartz Waveplate from two Multiple Order waveplates.

Figs. 10a - 10g provide graphically presented data pertaining to use of a Berek-type Compensator in a Spectroscopic Rotating Compensator Material System Investigation System embodying the present invention.

Figs. 11a - 11c provide graphically presented data pertaining to use of a Zero-Order Quarter Wave Plate Compensator in a Spectroscopic Rotating Compensator Material System Investigation System embodying the invention.

Figs. 12a -12c provide graphically presented data pertaining to use of a Polymer Compensator in a Spectroscopic Rotating Compensator Material System Investigation System embodying the present invention.

Figs. 13a - 13f provide graphically presented data pertaining to use of an "Achromatic" Waveplate Compensator in a Spectroscopic Rotating Compensator Material System Investigation System embodying the present invention.

Figs. 14a - 14h provide graphically presented data for various measured material system PSI and DELTA values obtained using a Spectroscopic Rotating Compensator Material System Investigation System embodying the present invention.

Referring now to Fig. 1, there is demonstrated a Material System Investigation System, (eg. an Ellipsometer System), with provision to investigate a Material System (MS) in either a Reflection Mode (RM) or a Transmission Mode (TM). It is to be noted that said Material System investigation System is generally comprised of a Source of a Polychromatic Beam of Electromagnetic Radiation (LS), a Polarizer (P), a Material System supporting Stage (STG), an Analyzer (A) and a Detector Elements (DE's) containing Photo Array Detector System (DET). Also note, however, that Fig. 1 shows Reflection Mode System Compensator(s) (C) and (C') and Transmission Mode System Compensators (C) and (C'') as present. It is to be understood that a Compensator can be placed ahead of, and/or after a Material System (MS) supporting Stage (STG) in either a Reflection Mode or Transmission Mode System. That is only Compensator (C) or (C') or both Compensators (C) and (C') can be present in a Reflection Mode System (RM), and only Compensator (C) or (C'') or both Compensators (C) and (C'') can be simultaneously present in the Transmission Mode System (TM).

Now, the configuration in Fig. 1 could be operated as a Rotating Polarizer or Rotating Analyzer System. The present embodiment Rotating Compensator Material System Investigation System, however, in the preferred operational mode, essentially fixes the Polarizer (P) and Analyzer (A) during Data Acquisition from a Material System (MS) which is placed upon the Material System supporting Stage (STG), and causes at least one present Compensator ((C), and/or (C') or (C) and/or (C'')), to Rotate during said Data Acquisition. This serves to effectively enter a continuously varying retardance between Orthogonal Components in a Polarization Beam of Electromagnetic Radiation exiting said Compensator which is caused to rotate. Where two (2) Compensators are present, one before (C) and one after ((C') or (C'')) a Material System placed upon said Material System (MS) supporting Stage (STG), only one, or both said Compensator(s) can be caused to Rotate in use. If both Compensators are caused to rotate, both can be rotated a the same rotation speed, or different rotation speeds can be utilized. It is further noted that fixing the Polarizer (P) and Analyzer (A) in use provides another benefit in that polarization state sensitivity to input and output optics during data acquisition is essentially non-existent. This allows use of Optic Fibers, Mirrors, Lenses etc. for input/output.

It is also mentioned that in the following it will be generally assumed that a Material System (MS) under investigation by a present embodiment Spectroscopic Rotating Compensator Material System Investigation System is positioned upon the Material System Supporting Stage (STG). This need not be the case, as is described in co-Pending Application Serial No. 08/727,700. For instance, a Material System (MS) can be positioned in a Magneto-Optic System which is physically too large to be supported by said Material System Supporting Stage (STG). In such a case, an Electromagnetic Beam Directing Means (eg. a Mooney Rhomb or a Mirror etc), can be placed upon said Material System Supporting Stage (STG) and without realigning a present embodiment Source of Polychromatic Electromagnetic Beam (LS) and said Detector Element (DE) containing Photo Array Detector System (DET), a Polychromatic Electromagnetic Beam provided by said Source of Polychromatic Electromagnetic Beam (LS) can be caused to interact with said remotely positioned Material System (MS), and with said Electromagnetic Beam Directing Means, thereby being directed into said Detector Element (DE) containing Photo array Detector System (DET).

Continuing, the present embodiment utilizes a Polychromatic Source of Electromagnetic Radiation (LS), and Fig. 2 shows that the Detector Elements (DE's) containing Photo Array Detector System (DET) in the present invention is, in the preferred embodiment, comprised of a Photo Array which consists of a number of Diode Elements (DE's). In use a Dispersive Optics (DO) receives a Polychromatic Electromagnetic Beam (EPCLB) which has interacted with a Material System (MS) and passed through said Analyzer (A), and diffracts said Polychromatic Electromagnetic Beam (EPCLB), such that each Photo Array (PA) Diode Element (DE) intercepts an Essentially Single Wavelength, (eg. a small band of wavelengths centered about a central single wavelength). Note that a Focusing Element (FE) is shown in a dashed line format to indicate that its presence is optional. The Focusing Element (FE), when present, serves to provide a focused Polychromatic Beam of Electromagnetic Waves at the input to said Detector Elements (DE's) containing Photo Array etector System (DET), and the Detector System (DET) provides signals developed by the Diode Elements (DE's) in a sequential output or a parallel output from the Diode Elements (DE's). It is emphasized that a preferred Detector Elements (DE's) containing Photo Array Detector System (DET) is an "Off-the-Shelf-System" which includes a Focusing Element (FE), and provides a self contained Dispersive Optics (DO) and Diode Element (DE) Array. The "Off-The-Shelf-System" of said preferred embodiment of the present Rotating Compensator Material System Investigation System is a <u>Zeiss Diode Array Spectrometer System</u> identified by manufacturer numbers in the group: (MMS1 (300-1150 nm); UV/VIS MMS (190-230 nm); UV MMS (190-400 nm); AND IR MMS (900-2400 nm)). Said identified Zeiss systems provide a very compact system comprising a multiplicity of Detector Elements (DE's), and provide focusing via a Focusing Element (FE), Slit (S), and single concave holographic grating dispersive optics (DO), as generally represented by Fig. 2.

Note that Fig. 2 also shows the presence of a Beam Splitter (BS) and a Cross Hair containing Reticule (CH) in the Detector Elements (DE's) containing Photo Array Detector System (DET). If the Beam Splitter (BS), the Dispersive Optics (DO), the Focusing Element (FE), the Detector Elements (DE's) containing Photo Array (PA), and the Cross Hair containing Reticule (CH) are mounted so as to move as a rigid unit, then it should be appreciated that causing an Alignment Electromagnetic Radiation Beam (ALB) which reflects to said Cross Hair containing Reticule (CH) to be present near a Cross Hair crossing point can effect good alignment of the Detector Elements (DE's) containing Photo Array Detector System (DET) with respect to an entering Polarized Beam of Electromagnetic Radiation (EPCLB). In practice such an arrangement has been found to work very well. It is further noted that the element identified as (CH) could represent a Quadrature Photodetector and Automatic Alignment Means, or other functionally suitable system.

It is also noted that a present invention Compensator (C) (C'), (C'') is typically an Off-the-Shelf Quarter-Wave-Plate with its Optical Axis in the plane of a surface thereof, (see Fig. 9e), or Berek-type with its Optical Axis perpendicular to a surface thereof, (see Fig. 9d), and is selected without special concern to its Achromatic Operating Characteristics, emphasis added. Note that a Zero-Order Waveplate can be constructed from two (2) Multiple-Order Waveplates of different thicknesses (T1) and (T2) which have Optical Axes oreinted Ninety (90) degrees to one another, such that the overall effect of retardation in in the Zero-Order, (see Fig. 9f). As well, said Compensator (C), (C'), (C'') can be made of essentially any functional material such as Quartz or Polymer etc.

Now and very importantly, even though the Present Embodiment Rotating Compensator Material System Investigation System is Spectroscopic, (ie. simultaneously operates on a number of Wavelengths in a Beam containing many Electromagnetic Wavelengths, over a range of, for instance, 190 - 1000 nanometers), a Compensator (C), (C'), (C'') utilized therein can provide a Retardance which, for instance, varies inversely with Wavelength and still be usable. A Compensator (C), (C'), (C'') does however, typically, have to be of a nature to allow passage of a Polychromatic Electromagnetic Beam therethrough without causing significant Attenuation, Deviation or Displacement in the Direction of Propagation thereof. If this is not the case, difficult to compensate complexities are caused in Detector Elements (DE's) containing Photo Array Detector System (DET) Detector Element Output Signals.

The reason the illustrated embodiment of the Present Invention can operate with a Compensator (C), (C'), (C'') that does not provide even close to a Constant Ninety (90) Degree Retardance over a range of Wavelengths, (which would constitute Ideal Characteristics), is that a Regression based Calibration Procedure utilized, (see the Introduction of this Specification), provides Wavelength dependent Compensation effecting values for Calibration Parameters as required in a developed Mathematical Model of the present embodiment Rotating Compensator Material System Investigation System. As better described in the Introduction of this Disclosure, the Inventors develop a Calibration Parameter Containing Mathematical Model of the Rotating Compensator Material System Investigation System by, for instance, utilizing Matrix Representations for various System Components involved, then multiplies out the Matrices in an appropriate order to provide a Transfer Function. This applies for all Wavelengths monitored by a Detector Elements (DE's) containing Photo Array Detector System (DET) Detector Element (DE). Next, Data Set(s) are Experimentally obtained as a function of wavelength and typically as a function of various settings of the Polarizer (P) or Analyzer (A), (or both could be rotated to various positions), while a Compensator (C) rotates at, typically though not necessarily, Twenty (20) to Thirty (30) Hz. Other rotation speeds can be utilized and if two Compensators are present one or both can be caused to rotate, and if both are caused to rotate, as mentioned infra herein, they can be caused to rotate at the same, or different, speeds. (Note that Data Set(s) could also be achieved utilizing variation of Angle-Of-Incidence of a Beam of Polychromatic Radiation with respect to a Material System under investigation). Calibration Parameters in the Mathematical Model are then evaluated by, typically, Mean-Square-Error based Regression onto the Data Set(s). It is also possible to effectively find Calibration Parameter containing Mathematical Expressions for Coefficients of Mathematical Series, (eg. Fourier Series), which comprise the Mathematical Model Transfer Function, and calculate Numerical Values for the Coefficients from the Data Set(s), then effectively perform Regression of said Calibration Parameter containing Mathematical Expressions for Coefficients of Mathematical Series Transfer Function onto said Numerical Values for the Coefficients from the Data Set(s). It is emphsized that a single Two-Dimensional Data Set has been found sufficient to allow excellent Calibration results to be achieved. Said Two-Dimensional Data Set typically is Intensity vs. Wavelength, and Polarizer or Analyzer Azimuthal Rotation Angle settings. In addition, said Two-Dimensional Data Set can be obtained from a present invention Rotating Compensator Material System Investigation System oriented so that a Polychromatic Beam of Electromagnetic Radiation interacts with a Material System (ie. the "Sample Present" Mode---see Figs. 1, 3, 4, and 5)), or such that said Polychromatic Beam of Electromagnetic Radiation passes through the present invention Rotating Compensator Material System Investigation System without interacting with a Material System, other than a Material System comprised of "Open Atmosphere", (ie. the "Straight-Through" Mode--see Fig. 7). The present embodiment Rotating Compensator Material System Investigation System can also, of course, be Calibrated utilizing more than one Data Set as well, but as alluded to, this has not been found necessary. This is mentioned in a Co-pending US Patent Application Serial No. 08/618,820, wherein a Rotating Compensator Material System Investigation System utilized in the Infra-red band of wavelengths, requires that two (2) Data Sets be present, (eg. selected with the Rotating Compensator Material System Investigation System oriented in a manner selected from the group: ("Straight-Through", "Material Sample Present", "Alternative Material Sample Present")). Both Data Sets are simultaneously utilized in a Regression Procedure to evaluate numerous Calibration Coefficients in a Mathematical Model which is described in the 08/618,820 Application. The reason that only one (1) Data Set is required to practice the described present embodiment Calibration Procedure, is that the number of Calibration Parameters required by the Mathematical Model of the present invention, (which is not operated in the Infra-red range of wavelengths), is much fever that the number of Calibration Parameters required by the Mathematical Model of the Rotating Compensator Material System Investigation System operated in the Infra-red range of wavelengths. The present embodiment Rotating Compensator Material System Investigation System Mathematical Model typically involves as few as Five (5) Calibration Parameters, (where only one Compensator is present), in combination with simultaneous determination of a Material System PSI and DELTA. (It is noted that a straight-through mode essentially provides open atmosphere as a Material System and that the PSI and DELTA of open atmosphere are forty-five (45) degrees and zero (0.0) degrees, respectively). Said Five (5) Calibration Parameters are Azimuthal Orientation Angles for Polarizer (Ps), Analyzer (As), Compensator (Cs), and Compensator Retardance Parameters (P0) and (P1). Equations (45) and (46) serve as further demonstratration of this point. (Note that the (Ps), (Cs) and (As) Azimuthal Orientation Calibration Angles can be thought of as serving to align the Polarizer, Compensator and Analyzer Azimuths with a Material System Frame of Reference). Of course, if two Compensators are present then an additional Compensator Orientation Angle (Cs2) and Compensator Retardance Parameters (P0') and (P1') and additional would also have to be evaluated. (It is noted that Retardation entered between orthogonal components of a Polarized Electromagnetic Beam, by a Compensator, is accounted for by a Matrix Component, and typically the r4 term of a Jones Matrix, but such is accounted for by Compensator Retardation Parameters (P0), (P1), (P0'), (P1') in the presently described Calibration Procedure).

Now, it is to be understood that the system of the present embodiment Spectroscopic Rotating Compensator Material System Investigation System is basically found in a combination of components shown in Figs. 1 and 2, the basic result of said combination, for a Reflectance Mode System, being shown in Fig. 3. That is, Fig. 3 shows a Spectroscopic Reflectance Mode version of the Rotating Compensator Material System Investigation System shown in Fig. 1, with the Fig. 2 Detector Elements (DE's) containing Photo Array Detector System (DET) shown present directly after the Analyzer (A).

Fig. 4 shows another system Reflectance Mode System configuration embodying the present invention in

which three (3) Detectors (Det 1), (Det 2) and (Det 3) are fed input by Fiber Optics (LF1), (LF2) and (LF3) present in a Fiber Optic Bundle exiting Fiber Optic Connector (LFC). Said Fiber Optic Connector (LFC) receives a Polarized Electromagnetic Beam (EPCLB) exiting the Analyzer (A). (Note that a Fig. 9c at least Bifurcated Fiber Optic could be utilized). Said three (3) Detectors (Det 1), (Det 2) and (Det 3) can be previously disclosed Off-the-shelf Zeiss Diode Array Spectrometers, and can each comprise a Focusing Element (FE) in functional combination with a Dispersive Optics (DO) and a Diode Element (DE) containing Photo Array (PA).

Fig. 5 shows that the present embodiment can cause a Polychromatic Beam of Polarized Electromagnetic Radiation (PPCLB) to, after interaction with a Material System (MS), reflect therefrom. Fig. 5 shows that the Reflected Polarized Beam of Electromagnetic Radiation (EPCLB), is caused to impinge upon a Dispersive Optics (DO), (eg. a Diffraction Grating), such that a plurality of Orders (+ORD2, +ORD1, -ORD1 and -ORD2) are produced. Each said Order is comprised of a spectrum of Wavelengths, and Fig. 5 shows that Wavelengths in said Orders (+ORD2, +ORD1, -ORD1 and -ORD2) can be intercepted by Detector elements (DE's) in Photo Arrays (PA). The present invention can, in some embodiments, utilize such a system. It is noted that the Dispersive Optics (DO) is typically rotatable so that the direction each Order of wavelengths generally proceeds from said Dispersive Optics (DO) is adjustable. Note that Fig. 5 also shows the presence of Filters (F1). It is noted that Wavelengths for adjacent Orders overlap, and said Filters (F1) allow a user to pass only desired Wavelengths, as well as reduce background radiation entry to Photo Arrays (PA's). Typically a Focusing Element is not present in a Fig. 5 embodiment.

It is also noted that Fiber Optics can be utilized to carry Polychromatic Electromagnetic Radiation from a Source thereof (LS) to the position of a Polarizer (P), or from the position of an Analyzer (A) to a Detector (DET) in Figs. 1 - 5.

Analogically similar figures to those shown in Figs. 3 - 5, but oriented for use in a Transmission Mode are not shown, but should be understood as within the scope of the present invention as implied by Fig. 1.

Continuing, embodiments of the present invention can achieve a Spectroscopic Rotating Compensator Material System Investigation System (eg. Spectroscopic Rotating Compensator Ellipsometer System), preferably utilizing an "Off-The-Shelf" compact Spectrometer Systems, and utilizing "Off-The-Shelf" Compensator Components which are not at all "ideal", as regards Achromaticity. To put this into perspective, it is noted that to date, there is no known Spectroscopic Rotating Compensator Ellipsometer available in the market-place. It is believed that this is because it has previously been believed that to achieve such a System an Achromatic Rotating Compensator (RC) would be required. Such Compensators are not generally commercially available, hence, are expensive and reasonable approximations thereof typically must be individually fabricated. (Note, as described in a Co-pending US Patent Application Serial No. 08/618,820, a Dual-Rhomb Rotating Compensator (RC) which provides about seven (7%) percent variation in Retardation effected over a range of Wavelengths of approximately 2 to 14 microns, has been developed at the University of Nebraska. However, it is not clear that even the identified University of Nebraska Dual-Rohmb Rotating Compensator (RC) would operate "Achromatically" outside the identified range of wavelengths).

For general information, Figs. 8a through 8d show various Dispersive Optics geometries. Fig. 8a shows a lined geometry diffraction grating (DGDO). The grating lines (GL) are essentially rectangular in cross-section with a spacing (a) therebetween. Fig. 8b shows a "Blazed" geometry Diffraction Grating Dispersive Optics (BDGDO). The Blazing Angle (BA) shifts reflected diffracted energy between "Orders" such into +ORD1 and -ORD1 from a typically useless ORD0 which projects perpendicularly back from the surface of said Dispersive Optics shown in Fig. 5. Fig. 8c shows a cross-sectional view of a Holographic Diffraction Grating Dispersion Optics (HDGDO) as is present in the Off-the-Shelf (Zeiss Diode Array Spectrometer systems identified infra herein. Said Zeiss Systems utilize a Holographic configuration in a concave shaped system). Fig. 8d shows a Prism Dispersive Optics (P1), with a Polarized Polychromatic Electromagnetic Beam (PPCCLB) entering Side (S1), and exiting Side (S2) and Side (S3) as Diffracted Beams in two "Orders" (ORDQ1) and (ORDP1) respectively. Note that a coating (OC) causes partial internal reflection of beam (PPCCBA) into beam (PPCLBB) to produce two "Orders". Any functional Diffraction effecting element can be utilized as a Dispersive Optics (DO) in embodiments of the present invention.

As embodiments of the present invention can utilize Fiber Optics, certain geometries thereof are shown in Figs. 9a through 9c. Fig. 9a shows a Fiber Optic which is essentially circular at the left side and which becomes of a "slit" shape at the right side. Fig. 9b shows a Fiber Optic which is essentially circular shaped along the entire length thereof, and which provides input to a "Slit" per se., (as is functionally utilized in the embodiment shown in Fig. 2). The effects achieved by the Fiber Optics in Figs. 9a and 9b are similar. Fig. 9c shows a Trifrucated Fiber Optic which is essentially circular at the left side, which trifrucates and then is exemplified as becoming circular or a of a "slit" shape at the right side. Use of an effectively Trifrucated Fiber Optics is shown applied in Fig. 4. (Noted that present Optical Fibers are utilized only as convenient means by which to transport electromagnetic radiation and not to modify polarization state).

PRESENT INVENTION METHOD OF CALIBRATION

(Note, the Calibration Method of the present invention is better described in the Introduction of this Specification. The following is to be considered as supplemental to the description provided in said Introduction.

In use, a Spectroscopic Rotating Compensator Material System Investigation System embodying the invention is modeled mathematically, with Calibration Parameters being included in said Mathematical Model. Said Calibration Parameters are evaluated by a regression based approach based upon Data Set(s) obtained at a multiplicity of Angles-of-Incidence, and/or Wavelengths and/or Polarizer or Analyzer Rotation Angle Settings etc. (Note that a relatively easily obtained Two Dimensional Data Set as a function of Wavelength, and either Polarizer or Analyzer Azimuthal Angle Setting, is greatly preferred and has been found to be sufficient). As mentioned infra herein, typically, Matrix representations of the Polarizer (P), Compensator (C), Analyzer (A), are utilized, with calibration parameters appearing in Matrix Components. Once evaluation of the Spectroscopic Rotating Compensator Ellipsometer System (RC) Calibration Parameters is effected, a Material System (MS) can be subjected to investigation thereby, with otherwise unexplained changes effected in a Beam of Polarized Electromagnetic Radiation (LB), present after interaction with a Material System (MS), being attributed to said Material System (MS). (It is also to be noted that PSI and DELTA associated with a Material System at a specific Angle-Of-Incidence can be simultaneously evaluated with Calibration Parameter values if a Data Set is obtained utilizing a Material System present mode and the Mathematical Model includes said Material System PSI and DELTA as Fit Parameters).

Fig. 6 demonstrates "Parameterization" approach to modeling Calibration Parameters in a Mathematical Model embodying the present invention. It must be understood that Calibration Parameters are often a function of Wavelength. For instance, the Retardation provided by a Compensator often varies inversely with wavelength. Where this is the case typical Mathematical Regression based evaluation of Calibration Parameters requires that a value for a Calibration Parameter be determined at each wavelength monitored. However, Fig. 6 shows that a plot of a Calibration Parameter vs. Wavelength can yield a locus which can be accurately modeled by a Mathematical Equation which requires only a few constants be known to allow calculation of the Calibration Parameter at a given Wavelength. For instance, Fig. 6 shows that a value for a Wavelength W(n) can be calculated knowing a Channel Number (n), (ie. Diode Element in an Array, such as shown in Figs. 2 - 5), from which a signal is obtained, and values for three constants C0, C1 and C2. Knowing values for Parameters CP0 and P1 as well allows calculating a Calibration Parameter Value (CP) given a Diode Element Array Channel Number number (n). It can occur that (n) is two-hundred (200) or more and if a non-Parameterized approach to calibration is utilized, two-hundred (200) or more values for Calibration Parameter CP would have to be determined and stored. However, utilizing the Calibration Parameter Parameterization approach, it can be seen that a Regression procedure must return values for only Two (2) variables, (CP0 and P1). Also, if a Calibration Procedure were selected to include Angle-Of-Incidence (AOI) as a Data Set variable, it is known that where a Calibration Procedure utilizes a "Material System Present" configuration for acquiring data, that the PSI and DELTA values for the Material System will vary with said (AOI). (Note, said PSI and DELTA are equivalent to Calibration Parameters in a Regression procedure which serves to evaluate Calibration Parameters based upon Data obtained with a Material System present approach). A similar Parameterization approach could be applied to provide equations for calculating a PSI and a DELTA value given an (AOI), each of said equations involving only a few variables which would have to be evaluated by a Regression procedure. (Note, the concept of "Parameterization" is often encountered in the modeling of Dielectric Functions, wherein one or more Lorentz Oscillator(s) is/are utilized. Lorentz Oscillator Structures require only a Magnitude and a Broadening Calibration Parameter be evaluated to be fully defined. Some peak regions of a Dielectric Function can be adequately modeled by said two evaluated Calibration Parameters, however, the peak and tail regions of a Lorentz Oscillator Structure are not mathematically separate and while a Lorentz Oscillator Structure might adequately define a peak region in a Dielectric Function plot, it is often inadequate in non-peak regions. This problem is the focus in Co-pending Patent Application Serial No. 08/514,959 which teaches Finite Width Oscillator Structures comprised of Finite Order Polynomials and/or Finite Magnitude Essentially Zero Width Discontinuities as replacement for Lorentz Oscillator Structures). Embodiments of the present invention, where beneficial, utilize Parameterization of Calibration Parameters. That is, where a plot of a Calibration Parameter vs. a Data Set Independent Variable demonstrates that Parameterization can be applied with benefit, the Parameterization of Calibration Parameter approach, with respect to some Data Set Independent Variable, embodying the present invention can be applied.

In that the results obtained with the Spectroscopic Rotating Compensator Material System Investigation System embodying the invention are considered to be quite impressive, (emphasis added), numerous examples of application of the Spectroscopic Rotating Compensator Material System Investigation System are provided herein in the form of Figs. 10a through 14h, which Figures show results of calibration, and data acquisition. It is noted that Calibration approaches "(GRM) 1" which utilizes Eqs. 45 - 47; "(GRM) 2" which utilizes Eq. 48; and "(GRM) 3" which utilizes Eq. 49, were all described in the introduction of this Specification. The reader is referred thereto for renewed insight.

Fig. 10a shows PSI and DELTA results generated from a Silicon Dioxide on Silicon Sample Material System,

which results were obtained with a Spectroscopic Rotating Compensator Material System Investigation System embodying the invention when a Magnesium Fluoride Berek-type Compensator was utilized as the Rotating Compensator, positioned after said Material System. It is noted that Magnesium Fluoride has a wide spectral range, extending from the deep UV to the Mid IR, and is not Optically Active. It is noted that the Berek-type Compensator was tipped approximately five (5) degrees so that the polarized electromagnetic beam provided by the Spectroscopic Rotating Compensator Material System Investigation did not approach the Berek-type Compensator along the Optical Axis. It is noted that the Berek-type Compensator utilized was approximately two (2) milimeters thick, and provided retardation of from one-hundred-sixty (160) degrees to sixty (60) degrees over a range of Wavelengths of from two-hundred-forty-five (245) to seven-hundred-thirty-five (735) nanometers. To obtain Fig. 10a a (GRM) 1 Calibration procedure was followed which, in addition to the Fig. 10 a plot, provided the following results:

Fig. 10b shows that the "(GRM) 1" fit between Predicted and Experimentally determined Fourier Data is excellent, where Eq. 35c normalization was applied.

Fig. 10c shows that the "(GRM) 1" fit between Predicted and Experimentally determined Fourier Data, where Eq. 35c normalization was applied. While the curve shapes are different than in Fig. 10b the fits are again excellent.

Figs. 10d and 10e show (Cs)n and (As)n Calibration Parameters determined utilizing the "(GRM) 2" approach, which (Cs)n and (As)n Calibration Parameters were fit discretely for "n"'th Channels of the Photo Array. The plots in Figs. 10d and 10e both exhibit fairly constant behavior across the spectrum, although there is a slight deviation of approximately one (1) degree in the UV part of the spectrum. Fig. 10f shows the Retardance of the Berek-type Compensator as a function of Wavelength. The dashed lines on the plots indicate a ninety (90) percent confidence limit value which is statistically determined from Levenberg-Marquardt non-linear regression analysis. This value is related to the precision and accuracy to which the Calibration Parameter vs. Wavelength can be determined.

Fig. 10g further exemplifies and illustrates the accuracy of the present embodiment Spectroscopic Rotating Compensator Material System Investigation where calibration was performed utilizing "(GRM) 3". The PSI and DELTA curves are in excellent agreement with a simple Silicon Dioxide on Silicon model which uses reference Optical Constants.

Figs. 11a and 11b show (Cs)n and (As)n Calibration Parameter Fits for a case in which a Zero-Order Quartz Waveplate is utilized as the Compensator and in which a "(GRM) 2" approach is utilized. It is noted that where a Zero-Order Quartz Waveplate is utilized a "(GRM) 1" approach can not be practiced because the (As)n and (Cs)n Calibration Parameters are not constant as a function of Wavelength, but rather they "oscillate" as a function of Wavelength. Fig. 11c shows an expected inverse Retardance vs. Wavelength plot for the same Zero-Order Quartz Waveplate as is subject in Figs 11a and 11b. Additional data provided by the "(GRM) 2" Fit are:

Figs. 12a - 12c show (Cs)n and (As)n Calibration Parameters and Retardance vs. Wavelength respectively, for a Polymer Compensator. While any of the various "(GRM) 1", "(GRM 2)" and "(GRM 3)" approaches can be utilized in calibration, the plots in Figs. 12a - 12c were obtained utilizing "(GRM 3)".

Figs. 13a - 13c show (Cs)n and (As)n Calibration Parameters and Retardance vs. Wavelength respectively, for an Achromatic Crystal Compensator. Figs. 13d - 13f show (Cs)n and (As)n Calibration Parameters and Retardance vs. Wavelength respectively, for an Achromatic Polymer Compensator. It is noted that "(GRM) 3" must typically be utilized to calibrate said Achromatic Compensators as system parameters do not lend well to Parameterization. It is to be noted that even in view of somewhat random behavior in system Calibration parameters, accurate ellipsometric data could still be acquired.

Figs. 14a - 14h show data acquired with a Spectroscopic Rotating Compensator Material System Investigation System embodying the present invention after it has been Calibrated .for use. The data obtained is essentially equivalent regardless of what Compensator type is utilized. Fig. 14a shows PSI and DELTA values for thermal silicon Dioxide on a Silicon Substrate. Fig. 14b shows PSI and DELTA values for native silicon Dioxide on a Silicon Substrate. Fig. 14c shows PSI and DELTA values for thick TEOS on a Silicon Substrate. Fig. 14d shows PSI and DELTA for Native Oxide on an Indium Phosphide (InP) Wafer. Fig. 14e shows PSI and DELTA for Indium Gallium Arsenide (InGaAs) on an Indium Phosphide (InP) Wafer. Fig. 14f shows PSI and DELTA for Optically Flat Fused Silica. Finally, Figs. 14g and 14h show, respectively, PSI and DELTA for "Air". That is, the present Spectroscopic Rotating Compensator Material System Investigation System was aligned in a "Straight-Through" configuration as shown in Fig. 7, (with Compensator (C) removed), and data obtained. Air is known to present with a PSI of forty-five (45) Degrees, and a DELTA of Zero (0.0) Degrees. Fig. 14g shows that said PSI of "Air" was determined to approximately Five-one-hundredths (0.05) Degree, and Fig. 14h shows that the DELTA of "Air" was determined

to approximately One-tenth (0.1) Degree, over a range of Wavelengths beginning at approximately 300 nanometers, and ending at approximately 700 nanometers. Figs. 7, 14g and 14h serve to show that open atmosphere can be considered to be a Material System and that a polychromatic electromagnetic beam can be considered as being incident thereupon at an effective "Normal" Angle-of-Incidence, and transmitted therethrough.

In Figs. 14a - 14h it evident that various additional parameters (MSE--Mean-Square-Error provided by application of Regression fitting procedure); (Angleθ--Angle-Of-Incidence of electromagnetic beam to Material System Surface while data was obtained); (Thickness--Thickness of surface layer), are provided. Also shown are Diagramatic Models of the Material Systems investigated, for which the PSI and DELTA are graphically presented. Said additional parameters are provided by the J. A. Woollam Co. Inc. WVASE, (Registered Trademark), Computer Program, when providing said Material System PSI and DELTA. The WVASE Reference Manual provides description of the additional parameters and said WVASE Reference Manual is incorporated herein by reference.

It is noted that the terminology Spectroscopic Rotating Compensator Material System Investigation System is to be interpreted sufficiently broadly to include Ellipsometers and Polarimeters and the like systems. In the Claims the terminology Spectroscopic Rotating Compensator Material System Investigation System is utilized as being generic, with this in mind.

As well, it should be understood that a Mathematical Model developed to represent a Spectroscopic Rotating Compensator Material System Investigation System embodying the present invention can be expressed as explicit equations for Intensity Transfer Function, or as equations for Coefficients of Terms which comprise such as a Transfer Function. However, in the context of performing Regression based evaluation of Calibration Parameters, it is to be understood that a Mathematical Model can "Effectively" provide such equations. That is, a computer program need not calculate a Transfer Function per se. to utilize mathematical relationships inherrant therewithin. The terminology "Mathematical Model" and "Transfer Function, and "Coefficients of Terms" are to be interpreted sufficiently broadly so as to include the case where acutal explicit equations therefore are not per se. generated, but where mathematical relationships inherrant "Mathematical Model" and "Transfer Function, and "Coefficients of Terms" are utilized by a Regression based Calibration Parameter evaluation procedure. For instance, Numerical Equivalents to Specific Analytical Functions can be present and utilized in a Computer and be within the scope of the identified terminology, even though specific Analytical Equations are not per se., but only effectually, produced.

It is also to be appreciated that no other Spectroscopic Rotating Compensator Material System Investigation SYSTEM is known which comprises at once:

1. at least one non-Achromatic Characteristic Rotating
   Compensator (RC);

2. a Dispersive Optics (DO); and

3. a Detector Elements (DE's) containing Detector System (DET) which comprises a Photo Array (PA); such that in use a Multiplicity of Material System (MS) Investigation Wavelengths in a Polychromatic Beam of Electromagnetic Wavelengths are simultaneously Monitored.

In particular, no known Spectroscopic Rotating Compensator Material System Investigation System utilizesa, (possibly calibration Parameter Parameterization aided), Mathematical Regression based METHOD approach to Evaluation of Calibration Parameters in a Mathematical Model of such a Spectroscopic Rotating Compensator Material System Investigation System, such that application thereof allows compensating the Non-Achromatic, and other non-Ideal, aspects of a present Rotating Compensator.

It is emphasized that embodiments of the present invention are considered to be particularly impressive as they can be relatively easily constructed utilizing commercially available "Off-The-Shelf" Diode Array Spectrometer Systems, and non-ideal Compensators. Embodiments of the present invention can conveniently provide, in a commercially realizable format, that which was thought to be, prior to the present invention, essentially impossible to provide in other than a prohibitively expensive, (and perhaps difficult to calibrate and utilize), single unit format.

It is to be understood that a Photo Array can be comprised of Diode-Elements, Charge-Coupled-Devices, Bucket-Brigade- Devices and equivalents.

It is also noted that Polychromatic Electromagnetic Beam Source can be comprised of a combined plurality/ multiplicity of Laser Sources, and that Polychromatic Electromagnetic Beam Source can include an effective Polarizer therewithin, thereby eliminating the need for a separate Polarizer. Such cases are to be considered within the scope of the Claims.

It is also to be understood that the terminology "Achromatic" is to be understood to mean that an uncertianty in Retardance provided by a Compensator of One (1.0) Degree will effect an uncertianty of One-Quarter (1/4) Degree

in a measured Sample System (PSI), and an uncertianty of One-Half (1/2) Degree in a measured Sample System (DELTA), (as provided by Eq. 58 in the previously cited Kleim reference).

Having hereby disclosed the subject matter of this invention, it should be obvious that many modifications, substitutions and variations of the present invention are possible in light of the teachings. It is therefore to be understood that the present invention can be practiced other than as specifically described, and should be limited in breadth and scope only by the Claims.

## Claims

**1.** A spectroscopic rotating compensator material system investigation system comprising a source (LS) of a polychromatic beam of electromagnetic radiation (PPCLB), a polarizer (P), a stage (STG) for supporting a material system, an analyzer (A), and at least one detector system (DET), said spectroscopic rotating compensator material system investigation system further comprising at least one compensator(s) (C) (C') (C") positioned at a location selected from the group consisting of: before said stage (STG) for supporting a material system (MS), and after said stage (STG) for supporting a material system (MS), and both before and after said stage (STG) for supporting a material system (MS); such that when said spectroscopic rotating compensator material system investigation system is used to investigate a material system (MS) present on said stage (STG) for supporting a material system, said analyzer (A) and polarizer (P) are maintained essentially fixed in position and at least one of said at least one compensator(s) (C) (C') (C") is caused to continuously rotate while a polychromatic beam of electromagnetic radiation (PPCLB) produced by said source (LS) of a polychromatic beam of electromagnetic radiation (PPCLB) is caused to pass through said polarizer (P) and said compensator(s) (C) (C') (C"), said polychromatic beam of electromagnetic radiation being also caused to interact with said material system (MS), pass through said analyzer (A) and interact with said at least one detector system (DET);

**characterised in that** the system includes a dispersive optics (DO), and that said at least one detector system (DET) contains a multiplicity of detector elements (DE's), said polychromatic beam of electromagnetic radiation being caused to interact with said dispersive optics (DO) such that a multiplicity of essentially single wavelengths are caused to simultaneously enter a corresponding multiplicity of detector elements (DE's) in said at least one detector system (DET);

the system also being **characterised by** a mathematical model comprising calibration parameters selected from the group consisting of: polarizer azimuthal angle orientation ( $P_s$ ), present material system PSI ($\Psi$), present material system DELTA ( $\Delta$ ), compensator azimuthal angle orientation(s) ($C_s$) ($C'_s$) ($C''_s$), matrix components of said compensator(s) ($r_1$) ($r_2$) ($r_3$) ($r_4$), analyzer azimuthal angle orientation ( $A_s$ ), and detector element image persistance ( $X_n$ ) and read-out ( $\rho_n$ ) nonidealities, which mathematical model is effectively a transfer function which enables calculation of electromagnetic beam intensity as a function of wavelength detected by a detector element (DE), given intensity as a function of wavelength provided by said source of a polychromatic beam of electromagnetic radiation (EPCLB); said calibration parameters selected from the group consisting of: polarizer azimuthal angle orientation ( $P_s$ ), present material system PSI ( $\Psi$ ), present material system DELTA ( $\Delta$ ), compensator azimuthal angle orientatation(s), matrix components ( $\delta_u$ ) of said compensator(s) ($C_s$) ($C'_s$) ($C''_s$), analyzer azimuthal angle orientation ( $A_s$ ), and detector element image persistance ( 'x' ) and read-out ( '$\rho$' ) nonidealities, being, in use, evaluated by performance of a mathematical regression of said mathematical model onto an at least two dimensional data set, said at least two dimensional data set being intensity values vs. wavelength and a parameter selected from the group consisting of: angle-of-incidence of said polychromatic beam of electromagnetic radiation with respect to a present material system (MS), and azimuthal angle rotation of an element selected from the group consisting of: said polarizer (P) and said analyzer (A), obtained over time, while at least one of said at least one compensator(s) (C) (C') (C") is caused to continuously rotate.

**2.** A spectroscopic rotating compensator material system investigation system as in Claim 1 in which dispersive optics (DO) and detector elements (DE's) are commonly mounted with a beam splitting means (BS), said beam splitting means (BS) serving to divert a portion (ALB) of the polychromatic beam of electromagnetic radiation (EPCLB) which otherwise proceeds to said dispersive optics (DO), and transmit the remainder of said polychromatic beam of electromagnetic radiation (EPCLB) toward said dispersive optics (DO), said diverted portion (ALB) of said polychromatic beam of electromagnetic radiation (EPCLB) being directed by said beam splitting means (BS) into an alignment means (CH) selected from the group consisting of: reticule and electromagnetic beam detecting means, in combination with commonly mounted dispersive optics (DO) and detector elements (DE's) orientation control means, such that in use said alignment means (CH) provides monitored alignment capability thereby allowing precise control of the locus of propagation of the portion of said polychromatic beam of electromagnetic radiation (EPCLB) which passes through said beam splitting means (BS), interacts with said dispersive optics (DO), and

enters said detector means (DET).

**3.** A spectroscopic rotating compensator material system investigation system as in Claim 1 in which dispersive optics (DO) and detector elements (DE's) are contained in an off-the-shelf diode array spectrometer system.

**4.** A spectroscopic rotating compensator material system investigation system as in Claim 3 in which said off-the-shelf diode array spectrometer system provides an operational wavelength range selected from the group consisting of: (300-1150 nm, 190-230 nm, 190-400 nm and 900-2400 nm).

**5.** A spectroscopic rotating compensator material system investigation system as in Claim 1 in which the compensator (s) (C) (C') (C'') is/are non-achromatic in that retardation effected thereby between quadrature components of a beam of electromagnetic radiation at one wavelength is different than that provided thereby at at least one other wavelength.

**6.** A spectroscopic rotating compensator material system investigation system as in Claim 5 in which the non-achromatic compensator(s) (C) (C') (C'') presents with a retardance vs. wavelength characteristic essentially proportional to 1/wavelength.

**7.** A spectroscopic rotating compensator material system investigation system as in Claim 1 in which the compensator (s) (C) (C') (C'') is/are achromatic in that retardation effected thereby between quadrature components of a beam of electromagnetic radiation at one wavelength is essentially the same as that provided thereby at other wavelengths.

**8.** A spectroscopic rotating compensator material system investigation system as in Claim 1 in which said at least one of said at least one compensator(s) (C) (C') (C'') causes essentially no deviation or displacement in a polychromatic beam of electromagnetic radiation (EPCLB) caused to pass therethrough while caused to rotate.

**9.** A spectroscopic rotating compensator material system investigation system as in Claim 1 in which said at least one of said at least one compensator(s) (C) (C') (C'') is of a type selected from the group consisting of: Berek-type with optical axis essentially perependicular to a surface thereof, non-Berek-type with an optical axis essentially parallel to a surface thereof, zero-order wave plate, zero-order waveplate constructed from two multiple order waveplates, rhomb, polymer, achromatic crystal and pseudo-achromatic.

**10.** A spectroscopic rotating compensator material system investigation system as in Claim 1, in which the dispersive optics (DO) is a diffraction grating.

**11.** A spectroscopic rotating compensator material system investigation system as in claim 10 in which said diffraction grating (DO) is selected from the group consisting of: a "lined", a "blazed", and a "holographic" geometry, said lined geometry consisting essentially of symetrical alternating lines with depressions therebetween, and said blazed geometry consisting of alternating ramp shaped lines with depressions therebetween, and said holographic geometry consisting of continuous cosine shaped lines and depressions.

**12.** A spectroscopic rotating compensator material system investigation system as in Claim 1, in which the dispersive optics (DO) comprises a prism.

**13.** A spectroscopic rotating compensator material system investigation system as in Claim 1 which further comprises a focusing element (FE) after said stage (STG) for supporting a material system and prior to said at least one detector system (DET).

**14.** A spectroscopic rotating compensator material system investigation system as in Claim 1 in which compensators (C) (C') (C'') are present both before and after said stage (STG) for supporting a material system, and a selection from the group consisting of: both said compensators are caused to rotate in use, and one of said compensators is caused to rotate in use, is made.

**15.** A spectroscopic rotating compensator material system investigation system as in Claim 1 in which a fiber optic (LF) is present at at least one location selected from the group consisting of: between said source (LS) of a polychromatic beam of electromagnetic radiation and a polarizer (P); and between said analyzer (A) and said dispersive optics (DO) and at least one detector system (DET) which contains a multiplicity of detector elements (DE's).

**16.** A spectroscopic rotating compensator material system investigation system as in Claim 15 in which a fiber optic (LF) is present after said analyzer (A), said fiber optic becoming at least bifurcated (LF1) (LF2) (LF3) thereby providing a plurality of fiber optic bundles, at least two of which plurality of at least two bifurcated fiber optic bundles provide input to separate detector systems (DET1) (DET2) (DET3), each of said separate detector systems comprising a dispersion optics (DO) and a multiplicity of detector elements (DE's), said plurality of fiber optic bundles having cross-sectional shapes at ends thereof selected from the group: essentially circular, essentially slit shaped, other than essentially circular, and essentially slit shaped.

**17.** A method of calibrating a spectroscopic rotating compensator material system investigation system comprising the steps of:

a. providing a spectroscopic rotating compensator material system investigation system comprising a source (LS) of a polychromatic beam of electromagnetic radiation (PPCLB), a polarizer (P), a stage (STG) for supporting a material system (MS), an analyzer (A), and at least one detector system (DET), said spectroscopic rotating compensator material system investigation system further comprising at least one compensator(s) (C) (C') (C'') positioned at a location selected from the group consisting of: before said stage (STG) for supporting a material system (MS), and after said stage (STG) for supporting a material system (MS), and both before and after said stage (STG) for supporting a material system (MS); such that when said spectroscopic rotating compensator material system investigation system is used to investigate a material system (MS) present on said stage (STG) for supporting a material system (MS), said analyzer (A) and polarizer (P) are maintained essentially fixed in position and at least one of said at least one compensator(s) (C) (C') (C'') is/are caused to continuously rotate while a polychromatic beam of electromagnetic radiation (PPCLB) produced by said source of a polychromatic beam of electromagnetic radiation is caused to pass through said polarizer (P) and said compensator(s) (C) (C') (C''), said polychromatic beam of electromagnetic radiation (PPCLB) being also caused to interact with said material system (MS), pass through said analyzer (A) and interact with said at least one detector system (DET);

**characterised in that** said polychromatic beam of electromagnetic radiation (PPCLB) is also caused to interact with a dispersive optics (DO) such that a multiplicity of essentially single wavelengths are caused to simultaneously enter a corresponding multiplicity of detector elements (DE's) in said at least one detector system (DET);

the method also being **characterised by**

b. developing a mathematical model of said spectroscopic rotating compensator material system investigation system which comprises calibration parameter variables selected from the group comprising polarizer azimuthal angle orientation ($P_s$), present material system PSI ($\Psi$), present material system DELTA ($\Delta$), compensator azimuthal angle orientation(s) ($C_s$) ($C'_s$) ($C''_s$), matrix components ( $\delta_u$ ) of said compensator(s) (C) (C') (C''), and analyzer azimuthal angle orientation ( $A_s$ ), which mathematical model is effectively a transfer function which enables calculation of electromagnetic beam intensity as a function of wavelength detected by a detector element, given intensity as a function of wavelength provided by said source (LS) of a polychromatic beam of electromagnetic radiation (PPCLB);

c. causing a polychromatic beam of electromagnetic radiation (PPCLB) produced by said source (LS) of a polychromatic beam of electromagnetic radiation, to pass through said polarizer (P), interact with a material system (MS) caused to be in the path thereof, pass through said analyzer (A), and interact with said dispersive optics (DO) such that a multiplicity of essentially single wavelengths are caused to simultaneously enter a corresponding multiplicity of detector elements (DE's) in said at least one detector system (DET), with said polychromatic beam of electromagnetic radiation (PPCLB) also being caused to pass through said compensator(s) (C) (C') (C'') positioned at a location selected from the group consisting of: before said stage (STG) for supporting a material system (MS), and after said stage (STG) for supporting a material system (MS), and both before and after said stage (STG) for supporting a material system (MS);

d. obtaining an at least two dimensional data set of intensity values vs. wavelength and a parameter selected from the group consisting of: angle -of- incidence of said polychromatic beam of electromagnetic radiation with respect to a present material system (MS), and azimuthal angle rotation of an element selected from the group consisting of: said polarizer (P) and said analyzer (A), over time, while at least one of said at least one compensator(s) (C) (C') (C'') is caused to continuously rotate;

e. performing a mathematical regression of said mathematical model onto said at least two dimensional data

set, thereby evaluating calibration parameters in said mathematical model;

said regression based calibration procedure evaluated calibration parameters serving to compensate said mathematical model for non-achromatic characteristics and non-idealities of said compensator(s), and for azimuthal angles of said polarizer (P), analyzer (A) and compensator(s) (C) (C') (C").

**18.** A method of calibrating a spectroscopic rotating compensator material system investigation system as in Claim 17 which further comprises including calibration parameters for detector element image persistance ( x ) and read-out ( ρ ) nonidealities in the mathematical model, and further evaluating said calibration parameters for detector element image persistance and read-out nonidealities in said regression procedure.

**19.** A method of calibrating a spectroscopic rotating compensator material system investigation system as in Claim 17 in which the step of developing a calibration parameter containing mathematical model of said spectroscopic rotating compensator ellipsometer system includes the steps of providing a matrix representation of each of said polarizer (P), present material system (MS), said compensator(s) (C) (C') (C"), and said analyzer (A), and determining a mathematical transfer function relating electromagnetic beam intensity out to intensity in, as a function of wavelength, by multiplication of said matrices in a spectroscopic rotating compensator material system investigation system element presence representing order.

**20.** A method of calibrating a spectroscopic rotating compensator material system investigation system as in Claim 17, which further comprises the step of parameterizing calibration parameters by representing variation as a function of a member of the group consisting of: (wavelength, angle-of-incidence of said polychromatic beam of electromagnetic radiation with respect to a present material system (MS), and azimuthal angle orientation of one element selected from the group consisting of: said polarizer (P) and said analyzer (A), by a parameter containing mathematical equation, said parameters being evaluated during said mathematical regression.

**21.** A method of calibrating a spectroscopic rotating compensator material system investigation system as in Claim 20, in which calibration parameters which are parameterized are selected from the group consisting of: polarizer (P) azimuthal angle orientation ($P_s$), compensator azimuthal angle orientation(s), matrix components ( $\delta_n$ ) of said compensator(s) (C) (C') (C"), and analyzer azimuthal angle orientation ( $A_s$ ), each as a function of wavelength.

**22.** A method of calibrating a spectroscopic rotating compensator material system investigation system as in Claim 17 in which the material system (MS) is selected from the group consisiting of: open atmosphere with the spectroscopic rotating compensator material system investigation system being oriented in a "straight-through" configuration, and other than open atmosphere with the spectroscopic rotating compensator material system investigation system being oriented in a "material-present" (MS) configuration.

**23.** A method of calibrating a spectroscopic rotating compensator material system investigation system as in Claim 17, in which:

in said step (b), said mathematical model provides equations for coefficients of terms in said transfer function, said coefficients of terms each being a function of identified calibration parameters; and

said step (d) includes calculating from said data set numerical values for coefficients of terms in the transfer function for said spectroscopic rotating compensator material system investigation system;

said step (e) including performing a mathematical regression of said mathematical model equations for coefficients of terms in said transfer function, onto said transfer function term coefficient values, thereby evaluating said calibration parameters.

**24.** A method of calibrating a spectroscopic rotating compensator material system investigation system as in Claim 23 in which a Hadamard analysis approach is utilized in calculating numerical values for coefficients of terms in the transfer function for said spectroscopic rotating compensator material system investigation system.

**25.** A method of calibrating a spectroscopic rotating compensator material system investigation system as in Claim 23 which further comprises including calibration parameters for detector element image persistance ( $x_n$ ) and read-out ( $\rho_n$ ) nonidealities in the mathematical model, and further evaluating said calibration parameters for detector element image persistance and read-out nonidealities in said regression procedure.

**26.** A method of calibrating a spectroscopic rotating compensator material system investigation system as in Claim 23, in which the step of developing a calibration parameter containing mathematical model of said spectroscopic rotating compensator ellipsometer system includes the steps of providing a matrix representation of each of said polarizer (P), present material system (MS), said compensator(s) (C) (C') (C''), and said analyzer (A), and determining a transfer function relating electromagnetic beam intensity out to intensity in, as a function of wavelength, by multiplication of said matrices in a spectroscopic rotating compensator material system investigation system element presence representing order.

**27.** A method of calibrating a spectroscopic rotating compensator material system investigation system as in Claim 23 in which the step of calculating values of coefficients of terms in a transfer function from said data set involves calculating values of coefficients of a Fourier Series.

**28.** A method of calibrating a spectroscopic rotating compensator material system investigation system as in Claim 23 which further comprises the step of parameterizing calibration parameters by representing variation as a function of a member of the group consisting of: wavelength, angle-of-incidence of said polychromatic beam of electromagnetic radiation with respect to a present material system, and azimuthal angle orientation of one element selected from the group consisting of: said polarizer (P) and said analyzer (A), by a parameter containing mathematical equation, said parameters being evaluated during said mathematical regression.

**29.** A method of calibrating a spectroscopic rotating compensator material system investigation system as in Claim 28, in which calibration parameters which are parameterized are selected from the group consisiting of: polarizer azimuthal angle orientation ( $P_s$ ), compensator azimuthal angle orientation(s) ($C_s$) ($C'_s$) ($C''_s$), matrix components ( $\delta_n$ ) of said compensator(s) (C) (C') (C''), and analyzer azimuthal angle orientation ($A_s$), each as a function of wavelength.

**30.** A method of calibrating a spectroscopic rotating compensator material system investigation system as in Claim 23 in which the material system (MS) is selected from the group consisiting of: open atmosphere with the spectroscopic rotating compensator material system investigation system being oriented in a "straight-through" configuration, and other than open atmosphere with the spectroscopic rotating compensator material system investigation system being oriented in a "material-present" (MS) configuration.

**31.** A spectroscopic rotating compensator material system investigation system comprising a source (LS) of a polychromatic beam of electromagnetic radiation (PPCLB), a polarizer (P), a stage (STG) for supporting a material system (MS), an analyzer (A), and at least one detector system (DET), said spectroscopic rotating compensator material system investigation system further comprising at least one compensator(s) (C) (C') (C'') positioned at a location selected from the group consisting of: before said stage (STG) for supporting a material system (MS), and after said stage (STG) for supporting a material system, and both before and after said stage (STG) for supporting a material system (MS); such that when said spectroscopic rotating compensator material system investigation system is used to investigate a material system (MS) present on said stage (STG) for supporting a material system (MS), said analyzer (A) and polarizer (P) are maintained essentially fixed in position and at least one of said at least one compensator(s) (C) C') (C'') is caused to continuously rotate while a polychromatic beam of electromagnetic radiation (PPCLB) produced by said source (LS) of a polychromatic beam of electromagnetic radiation (PPCLB) is caused to pass through said polarizer (P) and said compensator(s) (C) (C') (C''), said polychromatic beam of electromagnetic radiation being also caused to interact with said material system (MS);

**characterised in that** the system includes a dispersive optics (DO) and that said at least one detector system (DET) contains a multiplicity of detector elements (DE's);

said polychromatic beam of electromagnetic radiation (PPCLB) being also, without further focusing, caused to pass through said analyzer (A) and interact with said dispersive optics (DO), said dispersive optics (DO) serving to form a plurality of essentially spacially offset orders (+ORD2) (+ORD1) (-ORD1) (-ORD2) when said polychromatic beam of electromagnetic radiation (PPCLB) is caused to impinge thereupon, each said produced order (+ORD2) (+ORD1) (-ORD1) (-ORD2) comprising an essentially continuous spectrum of spacially separated electromagnetic beams of essentially single wavelengths (PPCLB), many of said essentially single wavelengths being present in two or more produced orders (+ORD2) (+ORD1) (-ORD1) (-ORD2); such that in use first and second multiplicities of essentially single wavelength beams of electromagnetic radiation (PPCLB) from first and second produced orders are simultaneously intercepted by, respectively, first and second detector systems, thereby enabling the simultaneous accessing of a first multiplicity of essentially single wavelengths by said first detector system and a second multiplicity of essentially single wavelengths by said second detector system, each of which first and second multiplicities of essentially single wavelengths intercepted by said first and second detector systems, respectively, includes specific first and second essentially single wavelength beams of electromagnetic radiation, said specific first and second essentially single wavelength beams of electromagnetic radiation being simultaneously intercepted by specific detector elements in said first and second detector systems respectively, even where electromagnetic beams of said specific first and second essentially single wavelengths are spacially situated close to one another in a single produced order for separate photo detector array detector elements in a single detector system which intercepts said single order, to, simultaneously, access beams of electromagnetic radiation of both said specific first and second essentially single wavelengths, separately;

the system also being **characterised by** a mathematical model comprising calibration parameters selected from the group consisting of: polarizer azimuthal angle orientation ( $P_s$ ), present material system PSI ( $\Psi$ ), present material system DELTA ( $\Delta$ ), compensator azimuthal angle orientation(s) ($C_s$) ($C'_s$) ($C''_s$), retardance of said compensator(s), analyzer azimuthal angle orientation, and detector system (DET) image persistance ( $X_n$ ) and read-out ( $\rho_n$ ) nonidealities, which mathematical model is effectively a transfer function which enables calculation of electromagnetic beam intensity as a function of wavelength detected by a detector element (DE), given intensity as a function of wavelength provided by said source (LS) of a polychromatic beam of electromagnetic radiation (PPCLB); said calibration parameters selected from the group consisting of: polarizer azimuthal angle orientation ( $P_s$ ), present material system PSI ( $\Psi$ ), present material system DELTA ( $\Delta$ ), compensator azimuthal angle orientatation(s) ($C_s$) $C'_s$) $C''_s$), retardance of said compensator(s) ( $\delta_n$ ) analyzer azimuthal angle orientation ( $A_s$ ), and detector system (DET) image persistance ( $X_n$ ) and read-out ( $\rho_n$ ) nonidealities, being, in use, evaluated by performance of a mathematical regression of said mathematical model onto an at least two dimensional data set, said at least two dimensional data set being intensity values vs. wavelength and a parameter selected from the group consisting of: angle-of-incidence of said polychromatic beam of electromagnetic radiation with respect to a present material system, and azimuthal angle rotation of an element selected from the group consisting of: said polarizer (P) and said analyzer (A), obtained over time, while at least one of said at least one compensator(s) (C) (C') (C'') is caused to continuously rotate.

**32.** A spectroscopic rotating compensator material system investigation system as in Claim 31 in which the compensator(s) (C) (C') (C'') is/are non-achromatic in that retardation effected thereby between quadrature components of a beam of electromagnetic radiation at one wavelength is different than that provided thereby at at least one other wavelength.

**33.** A spectroscopic rotating compensator material system investigation system as in Claim 32 in which the non-achromatic compensator(s) (C) (C') (C'') presents with a retardance vs. wavelength characteristic essentially proportional to 1/wavelength.

**34.** A spectroscopic rotating compensator material system investigation system as in Claim 31 in which the compensator(s) (C) (C') (C'') is/are achromatic in that retardation effected thereby between quadrature components of a beam of electromagnetic radiation at one wavelength is essentially the same as that provided thereby at other wavelengths.

**35.** A spectroscopic rotating compensator material system investigation system as in Claim 31 in which said at least one of said at least one compensator(s) (C) (C') (C'') causes essentially no deviation or displacement in a polychromatic beam of electromagnetic radiation caused to pass therethrough while caused to rotate.

**36.** A spectroscopic rotating compensator material system investigation system as in Claim 31 in which said at least one of said at least one compensator(s) (C) (C') (C'') is of a type selected from the group consisting of: Berek-type with optical axis essentially perependicular to a surface thereof, non-Berek-type with an optical axis essentially parallel to a surface thereof, zero-order wave plate, zero-order waveplate constructed from two multiple order waveplates, rhomb, polymer, achromatic crystal and pseudo-achromatic.

**37.** A spectroscopic rotating compensator material system investigation system as in Claim 31, in which the dispersive optics (D) is a diffraction grating.

**38.** A spectroscopic rotating compensator material system investigation system as in claim 37, in which said diffraction grating is selected from the group consisting of a "lined", a "blazed", and a "holographic" geometry, said lined geometry consisting essentially of symetrical alternating lines with depressions therebetween, and said blazed geometry consisting of alternating ramp shaped lines with depressions therebetween, and said holographic geometry consisting of continuous cosine shaped lines and depressions.

**39.** A spectroscopic rotating compensator material system investigation system as in Claim 31, in which the dispersive optics (DO) comprises a prism.

**40.** A spectroscopic rotating compensator material system investigation system as in Claim 39 which further comprises a focusing element (FE) after said stage for supporting a material system and prior to said dispersive optics (DO).

**41.** A spectroscopic rotating compensator material system investigation system as in Claim 31 in which compensators (C) (C') (C'') are present both before and after said stage (STG) for supporting a material system (MS), and a selection from the group consisting of: both said compensators are caused to rotate in use, and one of said compensators is caused to rotate in use, is made.

**Patentansprüche**

**1.** Spektroskopisches Materialsystemuntersuchungssystem mit rotierendem (rotating) Kompensator, umfassend eine Quelle (LS) eines polychromatischen Strahls von elektromagnetischer Strahlung (PPCLB), einen Polarisator (P), eine Stufe (STG) zum Tragen eines Materialsystems, einen Analysator (A) und zumindest ein Detektorsystem (DET), wobei das spektroskopische Materialsystemuntersuchungssystem mit rotierendem Kompensator außerdem zumindest einen Kompensator (C) (C') (C'') umfasst, der an einer Position positioniert ist, die aus der Gruppe ausgewählt ist, die besteht aus: vor der Stufe (STG) zum Tragen eines Materialsystems (MS) und nach der Stufe (STG) zum Tragen eines Materialsystems (MS) sowie sowohl vor als auch nach der Stufe (STG) zum Tragen eines Materialsystems (MS); so dass dann, wenn das spektroskopische Materialsystemuntersuchungssystem mit rotierendem Kompensator dazu verwendet wird, um ein Materialsystem (MS) zu untersuchen, das auf der Stufe (STG) zum Tragen eines Materialsystems vorhanden ist, der Analysator (A) und der Polarisator (P) im Wesentlichen in der Position unverändert gehalten werden und zumindest einer des mindestens einen Kompensators (C) (C') (C'') dazu veranlasst wird, sich kontinuierlich zu drehen, während ein polychromatischer Strahl von elektromagnetischer Strahlung (PPCLB), der von der Quelle (LS) eines polychromatischen Strahls von elektromagnetischer Strahlung (PPCLB) erzeugt wird, dazu veranlasst wird, den Polarisator (P) und den Kompensator bzw. die Kompensatoren (C) (C') (C'') zu durchqueren, wobei der polychromatische Strahl von elektromagnetischer Strahlung auch dazu gebracht wird, mit dem Materialsystem (MS) zu wechselwirken, den Analysator (A) zu durchqueren und mit dem zumindest einen Detektorsystem (DET) zu wechselwirken;

**dadurch gekennzeichnet, dass** das System eine dispersive bzw. Licht zerlegende Optik (DO) enthält und dass das zumindest eine Detektorsystem (DET) eine Mehrzahl von Detektorelementen (DE's) beinhaltet, wobei der polychromatische Strahl von elektromagnetischer Strahlung veranlasst wird, mit der dispersiven Optik (DO) zu wechselwirken, so dass eine Mehrzahl von im wesentlichen einzelnen Wellenlängen dazu gebracht wird, gleichzeitig auf eine entsprechende Mehrzahl von Detektorelementen (DE's) in dem zumindest einen Detektorsystem (DET) zu gelangen;

wobei das System auch durch ein mathematisches Modell **gekennzeichnet ist,** das Kalibrierungsparameter umfasst, die aus der Gruppe ausgewählt sind, die besteht aus: Polarisator-Azimutwinkelstellung ($P_s$), vorliegendes Materialsystem-PSI ($\Psi$), vorliegendes Materialsystem-DELTA ($\Delta$), Kompensator-Azimutwinkelstellung(en) ($C_s$) ($C'_s$) ($C''_s$), Matrixkomponenten des Kompensators bzw. der Kompensatoren ($r_1$) ($r_2$) ($r_3$) ($r_4$), Analysator-Azimutwinkelstellung ($A_s$) und Detektorelement-Bilddauer ($X_n$) und Auslese-($\rho_n$)-Unvollkommenheiten, wobei das mathematische Modell im Wesentlichen eine Transferfunktion bzw. Übertragungsfunktion ist, die eine Berechnung der Intensität des elektromagnetischen Strahls als Funktion einer von einem Detektorelement (DE) detektierten Wellenlänge bei gegebener Intensität als Funktion der Wellenlänge ermöglicht, wie sie von der Quelle eines polychromatischen Strahls von elektromagnetischer Strahlung (EPCLB) zur Verfügung gestellt wird; wobei die Kalibrierungsparameter aus der Gruppe ausgewählt sind, die besteht aus: Polarisator-Azimutwinkelstellung ($P_s$), vorliegendes Materialsystem-PSI ($\Psi$), vorliegendes Materialsystem-DELTA ($\Delta$), Kompensator-Azimutwinkelstellung (en), Matrixkomponenten ($\delta_u$) des Kompensators bzw. der Kompensatoren ($C_s$) ($C'_s$) ($C''_s$), Analysator-Azimutwinkelstellung ($A_s$) und Detektorelement-Bilddauer ('x') und Auslese-('ρ')-Unvollkommenheiten, die bei Verwendung durch Anwendung einer mathematischen Regression des mathematischen Modells auf einen zumindest zweidimensionalen Datensatz berechnet werden, wobei der zumindest zweidimensionale Datensatz Intensitätswerte in Abhängigkeit von der Wellenlänge und ein Parameter sind, die aus der Gruppe ausgewählt sind, die besteht aus: Einfallswinkel des polychromatischen Strahls von elektromagnetischer Strahlung in Bezug auf ein vorliegendes Materialsystem (MS) und Azimutwinkeldrehung eines Elements, das aus der Gruppe ausgewählt ist, die besteht aus: dem Polarisator (P) und dem Analysator (A), was über die Zeit erhalten wird, während zumindest einer des zumindest einen Kompensators (C) (C') (C'') veranlasst wird, sich kontinuierlich zu drehen.

2. Spektroskopisches Materialsystemuntersuchungssystem mit rotierendem Kompensator nach Anspruch 1, bei dem die dispersive bzw. Licht zerlegende Optik (DO) und Detektorelemente (DE's) gemeinsam mit einem Strahlteilermittel (BS) gehalten werden, wobei das Strahlteilermittel (BS) dazu dient, um einen Teil (ALB) des polychromatischen Strahls von elektromagnetischer Strahlung (EPCLB) abzulenken, der ansonsten zu der dispersiven Optik (DO) gelangen würde, und um den Rest des polychromatischen Strahls von elektromagnetischer Strahlung (EPCLB) zu der dispersiven Optik (DO) hinabzulenken, wobei der abgelenkte Teil (ALB) des polychromatischen Strahls von elektromagnetischer Strahlung (EPCLB) mit Hilfe des Strahlteilermittels (BS) in ein Ausrichtungsmittel (CH) gerichtet wird, das aus der Gruppe ausgewählt ist, die besteht aus: Strichplatte und Detektionsmittel für den elektromagnetischen Strahl, in Kombination mit gemeinsam gehaltener dispersiver Optik (DO) und Orientierungssteuermitteln für die Detektorelemente (DE's), so dass bei Verwendung das Ausrichtungsmittel (CH) für eine überwachte Ausrichtungsfähigkeit sorgt, um so eine präzise Kontrolle über den Ort einer Ausbreitung des Teils des polychromatischen Strahls von elektromagnetischer Strahlung (EPCLB) zu ermöglichen, der das Strahlteilermittel (BS) durchquert, mit der dispersiven bzw. Licht zerlegenden Optik (DO) wechselwirkt und auf das Detektormittel (DET) gelangt.

3. Spektroskopisches Materialsystemuntersuchungssystem mit rotierendem Kompensator nach Anspruch 1, bei dem die dispersive Optik (DO) und Detektorelemente (DE's) in einem Standard-Diodenarray-Spektrometersystem enthalten sind.

4. Spektroskopisches Materialsystemuntersuchungssystem mit rotierendem Kompensator nach Anspruch 3, bei dem das Standard-Diodenarray-Spektrometersystem einen BetriebsWellenlängenbereich bereitstellt, der aus der Gruppe ausgewählt ist, die besteht aus: (300-1150 nm, 190-230 nm, 190-400 nm und 900-2400 nm).

5. Spektroskopisches Materialsystemuntersuchungssystem mit rotierendem Kompensator nach Anspruch 1, bei dem der bzw. die Kompensatoren (C) (C') (C") nicht achromatisch ist bzw. sind, und zwar dahingehend, dass eine Verzögerung, die auf diese Weise zwischen Quadraturkomponenten eines Strahls von elektromagnetischer Strahlung bei einer Wellenlänge bewirkt wird, verschieden von derjenigen ist, die auf diese Weise für zumindest eine andere Wellenlänge bereitgestellt wird.

6. Spektroskopisches Materialsystemuntersuchungssystem mit rotierendem Kompensator nach Anspruch 5, bei dem der bzw. die nicht achromatischen Kompensatoren (C) (C') (C") die Eigenschaft einer Verzögerung in Abhängigkeit von der Wellenlänge aufweist, die im Wesentlichen proportional zu 1/Wellenlänge ist.

7. Spektroskopisches Materialsystemuntersuchungssystem mit rotierendem Kompensator nach Anspruch 1, bei dem der bzw. die Kompensatoren (C) (C') (C") achromatisch ist bzw. sind, und zwar dahingehend, dass eine Verzögerung, die auf diese Weise zwischen Quadraturkomponenten eines Strahls von elektromagnetischer Strahlung bei einer Wellenlänge bewirkt wird, im Wesentlichen dieselbe ist wie die, die auf diese Weise bei anderen Wellenlängen bereitgestellt wird.

8. Spektroskopisches Materialsystemuntersuchungssystem mit rotierendem Kompensator nach Anspruch 1, bei dem der zumindest eine des zumindest einen Kompensators (C) (C') (C") im Wesentlichen keine Ablenkung oder keinen Versatz eines polychromatischen Strahls von elektromagnetischer Strahlung (EPCLB) hervorruft, der dazu gebracht wird, diesen bzw. diese zu durchqueren, während dieser bzw. diese dazu gebracht wird bzw. werden, sich zu drehen.

9. Spektroskopisches Materialsystemuntersuchungssystem mit rotierendem Kompensator nach Anspruch 1, bei dem der zumindest eine des zumindest einen Kompensators (C) (C') (C") von einem Typ ist, der aus der Gruppe ausgewählt ist, die besteht aus: einem Berek-Typ mit optischer Achse, die im Wesentlichen senkrecht zu einer Oberfläche von diesem bzw. diesen ist, nicht vom Berek-Typ mit einer optischen Achse, die im Wesentlichen parallel zu einer Oberfläche von diesem bzw. diesen ist, Wellenscheibe nullter Ordnung, Wellenscheibe nullter Ordnung, die aus zwei Wellenscheiben höherer Ordnung aufgebaut ist, Rhombus, Polymer, achromatischer Kristall und pseudoachromatisch.

10. Spektroskopisches Materialsystemuntersuchungssystem mit rotierendem Kompensator nach Anspruch 1, bei dem die dispersive Optik (DO) ein Beugungsgitter ist.

11. Spektroskopisches Materialsystemuntersuchungssystem mit rotierendem Kompensator nach Anspruch 10, bei dem das Beugungsgitter (DO) aus der Gruppe ausgewählt ist, die besteht aus: einer "lined" bzw. mit Strichen

versehen Geometrie, einer "blazed" bzw. unter Winkel geneigten Geometrie und einer "holografischen" Geometrie, wobei die Lined-Geometrie bzw. mit Strichen versehene Geometrie im Wesentlichen aus mit symmetrisch alternierenden Linien mit Vertiefungen dazwischen besteht und die Blazed-Geometrie bzw. unter Winkel geneigte Geometrie aus alternierenden, rampenförmigen Strichen mit Vertiefungen dazwischen besteht und die holografische Geometrie aus kontinuierlichen, kosinusförmigen Strichen und Vertiefungen besteht.

**12.** Spektroskopisches Materialsystemuntersuchungssystem mit rotierendem Kompensator nach Anspruch 1, bei dem die dispersive Optik (DO) ein Prisma umfasst.

**13.** Spektroskopisches Materialsystemuntersuchungssystem mit rotierendem Kompensator nach Anspruch 1, das außerdem ein Fokussierungselement (FE) nach der Stufe (STG) zum Tragen eines Materialsystems und vor dem zumindest einen Detektorsystem (DET) umfasst.

**14.** Spektroskopisches Materialsystemuntersuchungssystem mit rotierendem Kompensator nach Anspruch 1, bei dem Kompensatoren (C) (C') (C") sowohl vor als auch nach der Stufe (STG) zum Tragen eines Materialsystems vorhanden sind und eine Auswahl getroffen wird aus der Gruppe, die besteht aus: dass beide Kompensatoren dazu gebracht werden, sich im Einsatz zu drehen, und dass einer der Kompensatoren dazu gebracht wird, sich im Einsatz zu drehen.

**15.** Spektroskopisches Materialsystemuntersuchungssystem mit rotierendem Kompensator nach Anspruch 1, bei dem eine Faseroptik (LF) bei zumindest einer Stelle vorhanden ist, die ausgewählt ist aus der Gruppe, die besteht aus: zwischen der Quelle (LS) eines polychromatischen Strahls von elektromagnetischer Strahlung und einem Polarisator (P); und zwischen dem Analysator (A) und der dispersiven Optik (DO) und zumindest einem Detektorsystem (DET), das eine Mehrzahl von Detektorelementen (DE's) enthält.

**16.** Spektroskopisches Materialsystemuntersuchungssystem mit rotierendem Kompensator nach Anspruch 15, bei dem eine Faseroptik (LF) nach dem Analysator (A) vorhanden ist, wobei die Faseroptik zumindest gezweiteilt wird (LF1) (LF2) (LF3), um auf diese Weise eine Mehrzahl von optischen Faserbündeln bereitzustellen, wobei zumindest zwei der Mehrzahl von zumindest zwei zweitgeteilten optischen Faserbündeln ein Eingangssignal für separate Detektorsysteme (DET1) (DET2) (DET3) bereitstellt, wobei jedes der separaten Detektorsysteme eine Dispersionsoptik bzw. Licht zerlegende Optik (DO) und eine Mehrzahl von Detektorelementen (DE's) umfasst, wobei die Mehrzahl von optischen Faserbündeln Querschnittsformen an deren Enden aufweist, die ausgewählt sind aus der Gruppe: im Wesentlichen kreisförmig, im Wesentlichen schlitzförmig, anders als im Wesentlichen kreisförmig und im Wesentlichen schlitzförmig.

**17.** Verfahren zum Kalibrieren eines spektroskopischen Materialsystemuntersuchungssystems mit rotierendem (rotating) Kompensator, umfassend die Schritte:

a. Bereitstellen eines spektroskopischen Materialsystemuntersuchungssystems mit rotierendem Kompensator, umfassend eine Quelle (LS) eines polychromatischen Strahls von elektromagnetischer Strahlung (PPCLB), einen Polarisator (P), eine Stufe (STG) zum Tragen eines Materialsystems, einen Analysator (A) und zumindest ein Detektorsystem (DET), wobei das spektroskopische Materialsystemuntersuchungssystem mit rotierendem Kompensator außerdem zumindest einen Kompensator (C) (C') (C") umfasst, der an einer Position positioniert ist, die aus der Gruppe ausgewählt ist, die besteht aus: vor der Stufe (STG) zum Tragen eines Materialsystems (MS) und nach der Stufe (STG) zum Tragen eines Materialsystems (MS) sowie sowohl vor als auch nach der Stufe (STG) zum Tragen eines Materialsystems (MS); so dass dann, wenn das spektroskopische Materialsystemuntersuchungssystem mit rotierendem Kompensator verwendet wird, um ein Materialsystem (MS) zu untersuchen, das auf der Stufe (STG) zum Tragen eines Materialsystems vorhanden ist, der Analysator (A) und der Polarisator (P) im Wesentlichen in der Position unverändert gehalten werden und zumindest einer des mindestens einen Kompensators (C) (C') (C") dazu veranlasst wird, sich kontinuierlich zu drehen, während ein polychromatischer Strahl von elektromagnetischer Strahlung (PPCLB), der von der Quelle (LS) eines polychromatischen Strahls von elektromagnetischer Strahlung (PPCLB) erzeugt wird, dazu veranlasst wird, den Polarisator (P) und den Kompensator bzw. die Kompensatoren (C) (C') (C") zu durchqueren, wobei der polychromatische Strahl von elektromagnetischer Strahlung auch dazu gebracht wird, mit dem Materialsystem (MS) zu wechselwirken, den Analysator (A) zu durchqueren und mit dem zumindest einen Detektorsystem (DET) zu wechselwirken;

**dadurch gekennzeichnet, dass** der polychromatische Strahl von elektromagnetischer Strahlung (PPCLB) auch dazu veranlasst wird, mit einer dispersiven Optik (DO) zu wechselwirken, so dass eine Mehrzahl

von im wesentlichen einzelnen Wellenlängen dazu gebracht wird, gleichzeitig auf eine entsprechende Mehrzahl von Detektorelementen (DE's) in dem zumindest einen Detektorsystem (DET) zu gelangen;

welches Verfahren auch **gekennzeichnet ist durch**

b. Entwickeln eines mathematischen Modells des spektroskopischen Materialsystemuntersuchungssystems mit rotierendem Kompensator, das Kalibrierungsparametervariablen umfasst, die aus der Gruppe ausgewählt werden, die eine Polarisator-Azimutwinkelstellung ($P_s$), ein vorliegendes Materialsystem-PSI ($\Psi$), ein vorliegendes Materialsystem-DELTA ($\Delta$), Kompensator-Azimutwinkelstellung(en) ($C_s$) ($C'_s$) ($C''_s$), Matrixkomponenten ($\delta_u$) des bzw. der Kompensator(en) (C) (C') (C") und eine Analysator-Azimutwinkelstellung ($A_s$) umfasst, welches mathematische Modell tatsächlich eine Transferfunktion ist, die eine Berechnung einer Intensität des elektromagnetischen Strahls als Funktion einer von einem Detektorelement detektierten Wellenlänge bei vorgegebener Intensität als Funktion einer Wellenlänge ermöglicht, die von der Quelle (LS) eines polychromatischen Strahls von elektromagnetischer Strahlung (PPCLB) bereitgestellt wird;

c. Veranlassen, dass ein polychromatischer Strahl von elektromagnetischer Strahlung (PPCLB), der von der Quelle (LS) eines polychromatischen Strahls von elektromagnetischer Strahlung erzeugt wird, den Polarisator (P) durchquert, mit einem Materialsystem (MS) wechselwirkt, das dazu gebracht wird, sich in dessen Strahlengang zu befinden, den Analysator (A) durchquert und mit der dispersiven Optik (DO) wechselwirkt, so dass eine Mehrzahl von im wesentlichen einzelnen Wellenlängen dazu gebracht wird, gleichzeitig auf eine entsprechende Mehrzahl von Detektorelemente (DE's) in dem zumindest einen Detektorsystem (DET) zu gelangen, wobei der polychromatische Strahl von elektromagnetischer Strahlung (PPCLB) auch dazu veranlasst wird, den bzw. die Kompensator(en) (C) (C') (C") zu durchqueren, der bzw. die an einer Stelle positioniert ist bzw. sind, die aus der Gruppe ausgewählt wird, die besteht aus: vor der Stufe (STG) zum Tragen eines Materialsystems (MS) und nach der Stufe (STG) zum Tragen eines Materialsystems (MS) und sowohl vor als auch nach der Stufe (STG) zum Tragen eines Materialsystems (MS);

d. Erhalten eines zumindest zweidimensionalen Datensatzes von Intensitätswerten in Abhängigkeit von einer Wellenlänge und von einem Parameter, der aus der Gruppe ausgewählt wird, die besteht aus: Einfallswinkel des polychromatischen Strahls von elektromagnetischer Strahlung relativ zu einem vorliegenden Materialsystem (MS) und Azimutwinkeldrehung eines Elements, das aus der Gruppe ausgewählt wird, die besteht aus: dem Polarisator (P) und dem Analysator (A), und zwar über die Zeit, während zumindest einer des zumindest einen Kompensators (C) (C') (C") veranlasst wird, sich kontinuierlich zu drehen;

e. Durchführen einer mathematischen Regression des mathematischen Modells auf den zumindest zweidimensionalen Datensatz, um auf diese Weise Kalibrierungsparameter in dem mathematischen Modell zu berechnen;

wobei die Kalibrierungsparameter, die mit Hilfe der auf einer Regression basierenden Kalibrierungsprozedur berechnet wurden, dazu dienen, um das mathematische Modell auf nicht achromatische Eigenschaften und Unvollkommenheiten des bzw. der Kompensator(en) und auf Azimutwinkel des Polarisators (P), des Analysators (A) und des bzw. der Kompensator(en) (C) (C') (C") zu kompensieren.

**18.** Verfahren zum Kalibrieren eines spektroskopischen Materialsystemuntersuchungssystems mit rotierendem Kompensator nach Anspruch 17, das außerdem eine Berücksichtigung von Kalibrierungsparametern für eine Detektorelement-Bilddauer (x) und Auslese-(p)-Unvollkommenheiten in dem mathematischen Modell umfasst und außerdem eine Berechnung der Kalibrierungsparameter für eine Detektorelement-Bilddauer und Auslese-Unvollkommenheiten in der Regressionsprozedur.

**19.** Verfahren zum Kalibrieren eines spektroskopischen Materialsystemuntersuchungssystems mit rotierendem Kompensator nach Anspruch 17, bei dem der Schritt einer Entwicklung eines einen Kalibrierungsparameter enthaltenden mathematischen Modells des spektroskopischen Ellipsometersystems mit rotierendem Kompensator die Schritte umfasst, dass eine Matrixdarstellung von jedem der Polarisatoren (P), dem vorliegenden Materialsystem (MS), dem bzw. den Kompensator(en) (C) (C') (C") und dem Analysator (A) bereitgestellt wird und dass eine mathematische Transfer- bzw. Übertragungsfunktion bestimmt wird, die eine Intensitätsausgabe zu einer Intensitätseingabe des elektromagnetischen Strahls in Beziehung setzt, und zwar als Funktion einer Wellenlänge, durch Multiplikation der Matrizen in einer eine Elementanwesenheit darstellenden Reihenfolge des spektroskopischen Materialsystemuntersuchungssystems mit rotierendem Kompensator.

**20.** Verfahren zum Kalibrieren eines spektroskopischen Materialsystemuntersuchungssystems mit rotierendem Kompensator nach Anspruch 17, das außerdem den Schritt einer Parametrisierung von Kalibrierungsparametern durch Darstellung einer Variation als Funktion eines Elements der Gruppe umfasst, die besteht aus: (Wellenlänge, Einfallswinkel des polychromatischen Strahls von elektromagnetischer Strahlung in Bezug auf ein vorliegendes Materialsystem (MS) und Azimutwinkelstellung eines Elements, das aus der Gruppe ausgewählt wird, die besteht

aus: dem Polarisator (P) und dem Analysator (A), und zwar mit Hilfe einer einen Parameter enthaltenden mathematischen Gleichung, wobei die Parameter während der mathematischen Regression berechnet werden.

**21.** Verfahren zum Kalibrieren eines spektroskopischen Materialsystemuntersuchungssystems mit rotierendem Kompensator nach Anspruch 20, bei dem Kalibrierungsparameter, die parametrisiert werden, ausgewählt werden aus der Gruppe, die enthält: Polarisator-(P)-Azimutwinkelstellung ($P_s$), Kompensator-Azimutwinkelstellung(en), Matrixkomponenten ($\delta_n$) des bzw. der Kompensator(en) (C) (C') (C") und Analysator-Azimutwinkelstellung ($A_s$), und zwar jeweils als Funktion der Wellenlänge.

**22.** Verfahren zum Kalibrieren eines spektroskopischen Materialsystemuntersuchungssystems mit rotierendem Kompensator nach Anspruch 17, bei dem das Materialsystem (MS) ausgewählt wird aus der Gruppe, die enthält: eine offene Atmosphäre mit dem spektroskopischen Materialsystemuntersuchungssystem mit rotierendem Kompensator, das in einer "geradlinigen" Konfiguration angeordnet ist, und einer anderen als offenen Atmosphäre mit dem spektroskopischen Materialsystemuntersuchungssystem mit rotierendem Kompensator, das in einer "Material vorhanden"-MS-Konfiguration angeordnet ist.

**23.** Verfahren zum Kalibrieren eines spektroskopischen Materialsystemuntersuchungssystems mit rotierendem Kompensator nach Anspruch 17, bei dem:

in dem Schritt (b) das mathematische Modell Gleichungen für Koeffizienten von Ausdrücken in der Transferfunktion bereitstellt, wobei die Koeffizienten von Ausdrücken jeweils eine Funktion von identifizierten Kalibrierungsparametern sind; und

der Schritt (d) eine Berechnung von numerischen Werten für Koeffizienten von Ausdrücken in der Transferfunktion für das spektroskopische Materialsystemuntersuchungssystem mit rotierendem Kompensator aus dem Datensatz umfasst;

der Schritt (e) eine Durchführung einer mathematischen Regression der Gleichungen des mathematischen Modells für Koeffizienten von Ausdrücken in der Transferfunktion auf die Ausdruckskoeffizientenwerte der Transferfunktion beinhaltet, um auf diese Weise die Kalibrierungsparameter zu berechnen.

**24.** Verfahren zum Kalibrieren eines spektroskopischen Materialsystemuntersuchungssystems mit rotierendem Kompensator nach Anspruch 23, bei dem ein Hadamard-Analyseansatz bei der Berechnung von numerischen Werten für die Koeffizienten von Ausdrücken in der Transferfunktion für das spektroskopische Materialsystemuntersuchungssystem mit rotierendem Kompensator eingesetzt wird.

**25.** Verfahren zum Kalibrieren eines spektroskopischen Materialsystemuntersuchungssystems mit rotierendem Kompensator nach Anspruch 23, das außerdem den Einbau von Kalibrierungsparametern für eine Detektorelement-Bilddauer ($x_n$) und für Auslese-($\rho_n$)-Unvollkommenheiten in dem mathematischen Modell umfasst und außerdem eine Berechnung der Kalibrierungsparameter für eine Detektorelement-Bilddauer und für Auslese-Unvollkommenheiten in der Regressionsprozedur.

**26.** Verfahren zum Kalibrieren eines spektroskopischen Materialsystemuntersuchungssystems mit rotierendem Kompensator nach Anspruch 23, bei dem der Schritt der Entwicklung eines einen Kalibrierungsparameter enthaltenden mathematischen Modells des spektroskopischen Ellipsometersystems mit rotierendem Kompensator die Schritte beinhaltet, dass eine Matrixdarstellung von jedem der Polarisatoren (P), von dem vorliegenden Materialsystem (MS), von dem Kompensator bzw. den Kompensatoren (C) (C') (C") und von dem Analysator (A) bereitgestellt wird und dass eine Transferfunktion bestimmt wird, die eine Intensitätsausgabe mit einer Intensitätseingabe des elektromagnetischen Strahls in Beziehung setzt, und zwar als Funktion einer Wellenlänge und durch Modifikation der Matrizen in einer eine Elementanwesenheit darstellenden Reihenfolge in dem spektroskopischen Materialsystemuntersuchungssystem mit rotierendem Kompensator.

**27.** Verfahren zum Kalibrieren eines spektroskopischen Materialsystemuntersuchungssystems mit rotierendem Kompensator nach Anspruch 23, bei dem der Schritt einer Berechnung von Werte für Koeffizienten von Ausdrücken in einer Transferfunktion aus dem Datensatz eine Berechnung von Werten von Koeffizienten einer Fourier-Reihe beinhaltet.

**28.** Verfahren zum Kalibrieren eines spektroskopischen Materialsystemuntersuchungssystems mit rotierendem Kompensator nach Anspruch 23, das außerdem den Schritt einer Parametrisierung von Parametern durch Darstellen einer Variation als Funktion eines Elements der Gruppe umfasst, die besteht aus: Wellenlänge, Einfallswinkel des

polychromatischen Strahls von elektromagnetischer Strahlung in Bezug auf ein vorliegendes Materialsystem und Azimutwinkelstellung von einem Element, das ausgewählt wird aus der Gruppe, die besteht aus: dem Polarisator (P) und dem Analysator (A), und zwar mit Hilfe eines einen Parameter enthaltenden mathematischen Modells, wobei die Parameter während der mathematischen Regression berechnet werden.

**29.** Verfahren zum Kalibrieren eines spektroskopischen Materialsystemuntersuchungssystems mit rotierendem Kompensator nach Anspruch 28, bei dem Kalibrierungsparameter, die parametrisiert werden, aus der Gruppe ausgewählt werden, die besteht aus: Polarisator-Azimutwinkelstellung ($P_s$), Kompensator-Azimutwinkelstellung(en) ($C_s$) ($C'_s$) ($C''_s$), Matrixkomponenten ($\delta_n$), des Kompensators bzw. der Kompensatoren (C) (C') (C") und Analysator-Azimutwinkelstellung ($A_s$), und zwar jeweils als Funktion der Wellenlänge.

**30.** Verfahren zum Kalibrieren eines spektroskopischen Materialsystemuntersuchungssystems mit rotierendem Kompensator nach Anspruch 23, bei dem das Materialsystem (MS) ausgewählt wird aus der Gruppe, die besteht aus: einer offenen Atmosphäre mit dem spektroskopischen Materialsystemuntersuchungssystem mit rotierendem Kompensator, das in einer "geradlinigen" Konfiguration angeordnet ist, und einer anderen als offenen Atmosphäre mit dem spektroskopischen Materialsystemuntersuchungssystem mit rotierendem Kompensator, das in einer "Material vorhanden"-(MS)-Konfiguration angeordnet ist.

**31.** Spektroskopisches Materialsystemuntersuchungssystem mit rotierendem (rotating) Kompensator, umfassend eine Quelle (LS) eines polychromatischen Strahls von elektromagnetischer Strahlung (PPCLB), einen Polarisator (P), eine Stufe (STG) zum Tragen eines Materialsystems, einen Analysator (A) und zumindest ein Detektorsystem (DET), wobei das spektroskopische Materialsystemuntersuchungssystem mit rotierendem Kompensator außerdem zumindest einen Kompensator (C) (C') (C") umfasst, der an einer Position positioniert ist, die aus der Gruppe ausgewählt ist, die besteht aus: vor der Stufe (STG) zum Tragen eines Materialsystems (MS) und nach der Stufe (STG) zum Tragen eines Materialsystems (MS) sowie sowohl vor als auch nach der Stufe (STG) zum Tragen eines Materialsystems (MS); so dass dann, wenn das spektroskopische Materialsystemuntersuchungssystem mit rotierendem Kompensator dazu verwendet wird, um ein Materialsystem (MS) zu untersuchen, das auf der Stufe (STG) zum Tragen eines Materialsystems vorhanden ist, der Analysator (A) und der Polarisator (P) im Wesentlichen in der Position unverändert gehalten werden und zumindest einer des mindestens einen Kompensators (C) (C') (C") dazu veranlasst wird, sich kontinuierlich zu drehen, während ein polychromatischer Strahl von elektromagnetischer Strahlung (PPCLB), der von der Quelle (LS) eines polychromatischen Strahls von elektromagnetischer Strahlung (PPCLB) erzeugt wird, dazu veranlasst wird, den Polarisator (P) und den Kompensator bzw. die Kompensatoren (C) (C') (C") zu durchqueren, wobei der polychromatische Strahl von elektromagnetischer Strahlung auch dazu gebracht wird, mit dem Materialsystem (MS) zu wechselwirken;

**dadurch gekennzeichnet, dass** das System eine dispersive Optik (DO) enthält und dass das zumindest eine Detektorsystem (DET) eine Mehrzahl von Detektorelementen (DE's) enthält;

wobei der polychromatische Strahl von elektromagnetischer Strahlung (PPCLB) auch ohne weitere Fokussierung dazu gebracht wird, den Analysator (A) zu durchqueren und mit der dispersiven bzw. Licht zerlegenden Optik (DO) zu wechselwirken, wobei die dispersive Optik (DO) dazu dient, um eine Mehrzahl von im Wesentlichen räumlich versetzten Ordnungen (+ORD2) (+ORD1) (-ORD1) (-ORD2) zu bilden, wenn der polychromatische Strahl von elektromagnetischer Strahlung (PPCLB) veranlasst wird, auf diese aufzutreffen, wobei jede erzeugte Ordnung (+ORD2) (+ORD1) (-ORD1) (-ORD2) ein im Wesentlichen kontinuierliches Spektrum von räumlich getrennten elektromagnetischen Strahlen von im wesentlichen einzelnen Wellenlängen (PPCLB) umfasst, wobei viele der im wesentlichen einzelnen Wellenlängen in zwei oder mehreren erzeugten Ordnungen (+ORD2) (+ORD1) (-ORD1) (-ORD2) vorliegen; so dass im Einsatz erste und zweite Mehrzahlen von Strahlen von elektromagnetischer Strahlung (PPCLB) von im Wesentlichen einer einzelnen Wellenlänge von den erzeugten ersten und zweiten Ordnungen gleichzeitig von ersten bzw. zweiten Detektorsystemen aufgefangen werden, um auf diese Weise das gleichzeitige Auftreffen einer ersten Mehrzahl von im Wesentlichen einzelnen Wellenlängen auf das erste Detektorsystem und einer zweiten Mehrzahl von im Wesentlichen einzelnen Wellenlängen auf das zweite Detektorsystem zu ermöglichen, wobei jede der ersten und zweiten Mehrzahlen von im Wesentlichen einzelnen Wellenlängen, die auf das erste bzw. zweite Detektorsystem auftreffen, spezielle erste und zweite Strahlen von elektromagnetischer Strahlung mit im Wesentlichen einzelner Wellenlänge umfassen, wobei die speziellen ersten und zweiten Strahlen von elektromagnetischer Strahlung mit im Wesentlichen einzelner Wellenlänge gleichzeitig von speziellen Detektorelementen in dem ersten bzw. zweiten Detektorsystem aufgefangen werden, selbst wenn elektromagnetische Strahlen der ersten und zweiten im Wesentlichen einzelnen Wellenlängen räumlich nahe zueinander in einer einzelnen erzeugten Ordnung für separate Fotodetektorarray-Detektorelemente in einem einzelnen Detektorsystem, das die genannte einzelne Ordnung auffängt, angeordnet sind, um gleichzeitig auf Strahlen von elektromagnetischer Strahlung von beiden der speziellen ersten und zweiten im Wesentlichen einzelnen Wellenlängen separat

zuzugreifen;

wobei das System auch durch ein mathematisches Modell **gekennzeichnet ist,** umfassend Kalibrierungsparameter die aus der Gruppe ausgewählt sind, die besteht aus: Polarisator-Azimutwinkelstellung ($P_s$), vorliegendes Materialsystem-PSI ($\Psi$), vorliegendes Materialsystem-DELTA ($\Delta$), Kompensator-Azimutwinkelstellung(en) ($C_s$) ($C'_s$) ($C''_s$), Matrixkomponenten des Kompensators bzw. der Kompensatoren ($r_1$) ($r_2$) ($r_3$) ($r_4$), Analysator-Azimutwinkelstellung ($A_s$) und Detektorelement-Bilddauer ($X_n$) und Auslese-($\rho_n$)-Unvollkommenheiten, wobei das mathematische Modell im Wesentlichen eine Transferfunktion bzw. Übertragungsfunktion ist, die eine Berechnung der Intensität des elektromagnetischen Strahls als Funktion einer von einem Detektorelement (DE) detektierten Wellenlänge bei gegebener Intensität als Funktion der Wellenlänge ermöglicht, wie sie von der Quelle (LS) eines polychromatischen Strahls von elektromagnetischer Strahlung (PPCLB) zur Verfügung gestellt wird; wobei die Kalibrierungsparameter aus der Gruppe ausgewählt sind, die besteht aus: Polarisator-Azimutwinkelstellung ($P_s$), vorliegendes Materialsystem-PSI ($\Psi$), vorliegendes Materialsystem-DELTA ($\Delta$), Kompensator-Azimutwinkelstellung(en), Matrixkomponenten ($\delta_u$) des Kompensators bzw. der Kompensatoren ($C_s$) ($C'_s$) ($C''_s$), Analysator-Azimutwinkelstellung ($A_s$) und Detektorelement-Bilddauer ($X_n$) und Auslese-($\delta_n$)-Unvollkommenheiten, die bei Verwendung durch Anwendung einer mathematischen Regression des mathematischen Modells auf einen zumindest zweidimensionalen Datensatz berechnet werden, wobei der zumindest zweidimensionale Datensatz Intensitätswerte in Abhängigkeit von einer Wellenlänge und ein Parameter sind, die aus der Gruppe ausgewählt sind, die besteht aus: Einfallswinkel des polychromatischen Strahls von elektromagnetischer Strahlung in Bezug auf ein vorliegendes Materialsystem (MS) und Azimutwinkeldrehung eines Elements, das aus der Gruppe ausgewählt ist, die besteht aus: dem Polarisator (P) und dem Analysator (A), was über die Zeit erhalten wird, während zumindest einer des zumindest einen Kompensators (C) (C') (C") veranlasst wird, sich kontinuierlich zu drehen.

**32.** Spektroskopisches Materialsystemuntersuchungssystem mit rotierendem Kompensator nach Anspruch 31, in dem der Kompensator bzw. die Kompensatoren (C) (C') (C") nicht achromatisch ist bzw. sind, und zwar dahingehend, dass eine Verzögerung, die auf diese Weise zwischen Quadraturkomponenten eines Strahls von elektromagnetischer Strahlung bei einer Wellenlänge bewirkt wird, verschieden ist von derjenigen, die auf diese Weise bei zumindest einer anderen Wellenlänge bereitgestellt wird.

**33.** Spektroskopisches Materialsystemuntersuchungssystem mit rotierendem Kompensator nach Anspruch 32, bei dem der bzw. die nicht achromatische(n) Kompensator(en) (C) (C') (C") eine Eigenschaft einer Verzögerung in Abhängigkeit von der Wellenlänge darbietet, die im Wesentlichen proportional zu 1/Wellenlänge ist.

**34.** Spektroskopisches Materialsystemuntersuchungssystem mit rotierendem Kompensator nach Anspruch 31, bei dem der bzw. die Kompensator(en) (C) (C') (C") achromatisch ist bzw. sind, und zwar dahingehend, dass eine Verzögerung, die auf diese Weise zwischen Quadraturkomponenten eines Strahls von elektromagnetischer Strahlung bei einer Wellenlänge bewirkt wird, im Wesentlichen dieselbe ist wie diejenige, die auf diese Weise bei anderen Wellenlängen zur Verfügung gestellt wird.

**35.** Spektroskopisches Materialsystemuntersuchungssystem mit rotierendem Kompensator nach Anspruch 31, bei dem der zumindest eine des bzw. der zumindest einen Kompensators bzw. Kompensatoren (C) (C') (C") im Wesentlichen keine Ablenkung oder Verschiebung in einem polychromatischen Strahl von elektromagnetischer Strahlung hervorruft, der dazu gebracht wird, durch diesen bzw. diese hindurch zu laufen, während dieser bzw. diese dazu gebracht wird, sich zu drehen.

**36.** Spektroskopisches Materialsystemuntersuchungssystem mit rotierendem Kompensator nach Anspruch 31, bei dem der zumindest eine des bzw. der zumindest einen Kompensators bzw. Kompensatoren (C) (C') (C") von einem Typ ist, der aus der Gruppe ausgewählt ist, die besteht aus: einem Berek-Typ mit einer optischen Achse, die im Wesentlichen senkrecht zu dessen Oberfläche ist, einem Nicht-Berek-Typ mit einer optischen Achse, die im Wesentlichen parallel zu dessen Oberfläche ist, einer Wellenscheibe nullter Ordnung, einer Wellenscheibe nullter Ordnung, die aus zwei Wellenscheiben höherer Ordnung aufgebaut ist, einem Rhombus, einem Polymer, einem achromatischen Kristall und ein pseudo-achromatischen.

**37.** Spektroskopisches Materialsystemuntersuchungssystem mit rotierendem Kompensator nach Anspruch 31, bei dem die dispersive Optik (D) ein Beugungsgitter ist.

**38.** Spektroskopisches Materialsystemuntersuchungssystem mit rotierendem Kompensator nach Anspruch 37, bei dem das Beugungsgitter (DO) aus der Gruppe ausgewählt ist, die besteht aus: einer "lined" bzw. mit Strichen versehenen Geometrie, einer "blazed" bzw. unter Winkel geneigten Geometrie und einer "holografischen" Geometrie, wobei die Lined-Geometrie bzw. mit Strichen versehene Geometrie im Wesentlichen aus mit symmetrisch alternierenden Linien mit Vertiefungen dazwischen besteht und die Blazed-Geometrie bzw. unter Winkel geneigte Geometrie aus alternierenden, rampenförmigen Strichen mit Vertiefungen dazwischen besteht und die holografische Geometrie aus kontinuierlichen, kosinusförmigen Strichen und Vertiefungen besteht.

**39.** Spektroskopisches Materialsystemuntersuchungssystem mit rotierendem Kompensator nach Anspruch 31, bei dem die dispersive Optik (DO) ein Prisma umfasst.

**40.** Spektroskopisches Materialsystemuntersuchungssystem mit rotierendem Kompensator nach Anspruch 39, das außerdem ein fokussierendes Element (FE) nach der Stufe zum Tragen eines Materialsystems und vor der dispersiven Optik (DO) umfasst.

**41.** Spektroskopisches Materialsystemuntersuchungssystem mit rotierendem Kompensator nach Anspruch 31, bei dem Kompensatoren (C) (C') (C'') sowohl vor als auch nach der Stufe (STG) zum Tragen eines Materialsystems (MS) vorhanden sind und eine Auswahl getroffen wird aus der Gruppe, die besteht aus: beide der genannten Kompensatoren werden dazu gebracht, sich im Einsatz zu drehen, und einer der genannten Kompensatoren wird dazu gebracht, sich im Einsatz zu drehen.

## Revendications

**1.** Système d'examen d'un système matériel compensateur rotatif spectroscopique comprenant une source (LS) de faisceau polychromatique de rayonnement électromagnétique (PPCLB), un polariseur (P), un étage (STG) pour supporter un système matériel, un analyseur (A), et au moins un système (DET) formant détecteur, ledit système d'examen de système matériel compensateur rotatif spectroscopique comprenant en outre au moins un compensateur(s) (C) (C') (C'') disposé(s) en un emplacement sélectionné parmi le groupe consistant en : avant ledit étage (STG) pour supporter un système matériel (MS), et après ledit étage (STG) pour supporter un système matériel (MS), et à la fois avant et après ledit étage (STG) pour supporter un système matériel (MS) ; de telle sorte que lorsque ledit système d'examen de système matériel compensateur rotatif spectroscopique est utilisé pour examiner un système matériel (MS) présent sur ledit étage (STG) pour supporter un système matériel, ledit analyseur (A) et ledit polariseur (P) sont maintenus essentiellement en position fixe et au moins l'un desdits au moins un compensateur(s) (C) (C') (C'') est amené à tourner de manière continue tandis qu'un faisceau polychromatique de rayonnement électromagnétique (PPCLB), produit par ladite source (LS) de faisceau polychromatique de rayonnement électromagnétique (PPCLB), est amené à passer par ledit polariseur (P) et ledit ou lesdits compensateur (s) (C) (C') (C''), ledit faisceau polychromatique de rayonnement électromagnétique étant aussi amené à interagir avec ledit système matériel (MS), à passer par ledit analyseur (A) et à interagir avec ledit au moins un système formant détecteur (DET) ;

**caractérisé en ce que** le système comporte un système optique dispersif (DO), et **en ce que** ledit au moins un système formant détecteur (DET) contient une multiplicité d'éléments formant détecteurs (DE), ledit faisceau polychromatique de rayonnement électromagnétique étant conduit à interagir avec ledit système optique dispersif (DO) de telle sorte qu'une multiplicité de longueurs d'ondes essentiellement uniques sont conduites à pénétrer simultanément dans une multiplicité correspondante d'éléments formant détecteurs (DE) dans ledit au moins un système formant détecteur (DET) ;

le système étant aussi **caractérisé par** un modèle mathématique comprenant des paramètres d'étalonnage sélectionnés parmi le groupe consistant en : orientation d'angle azimutal ($P_s$) de polariseur, PSI ($\psi$) du système matériel présent, DELTA ($\Delta$) du système matériel présent, orientation(s) d'angle azimutal de compensateur ($C_s$) ($C'_s$) ($C''_s$), composantes matricielles desdits compensateurs ($r_1$) ($r_2$) ($r_3$) ($r_4$), orientation d'angle azimutal d'analyseur ($A_s$), et persistance ($X_n$) d'image d'élément formant détecteur et non idéalités de lecture ($\rho_n$), ce modèle mathématique étant effectivement une fonction de transfert qui permet un calcul d'intensité de faisceau électromagnétique en fonction d'une longueur d'onde détectée par un élément formant détecteur (DE), intensité donnée en fonction d'une longueur d'onde fournie par ladite source de faisceau polychromatique .de rayonnement électromagnétique (EPCLB) ; lesdits paramètres d'étalonnage sélectionnés parmi le groupe consistant en : orientation d'angle azimutal de polariseur ($P_s$), PSI ($\psi$) du système matériel présent, DELTA ($\Delta$) du système matériel présent, orientation(s) d'angle azimutal de compensateur, composantes matricielles ($\delta_u$) dudit ou desdits compensateur(s) ($C_s$) ($C'_s$) ($C''_s$), orientation d'angle azimutal d'analyseur ($A_s$), et persistance ('X') d'image d'élément formant détecteur et non-idéalités de lecture ('$\rho$'), étant, lors de l'utilisation, évalués par la performance d'une régression mathématique dudit modèle mathématique sur au moins une série de données en deux dimensions, ladite au moins une série de données en deux dimensions étant des valeurs d'intensité en fonction d'une longueur d'onde

et un paramètre sélectionné parmi le groupe consistant en : angle d'incidence dudit faisceau polychromatique de rayonnement électromagnétique par rapport à un système matériel présent (MS), et rotation d'angle azimutal d'un élément sélectionné parmi le groupe consistant en : ledit polariseur (P) et ledit analyseur (A), obtenus au cours du temps, tandis qu'au moins l'un desdits au moins un compensateur(s) (C) (C') (C'') est amené à tourner de manière continue.

**2.** Système d'examen de système matériel compensateur rotatif spectroscopique selon la revendication 1, dans lequel un système optique dispersif (DO) et des éléments formant détecteurs (DE) sont montés de manière commune avec un moyen (BS) de séparation de faisceau, ledit moyen (BS) de séparation de faisceau servant à faire diverger une partie (ALB) du faisceau polychromatique de rayonnement électromagnétique (EPCLB) qui, sinon, se dirige vers ledit système optique dispersif (DO), et transmet le reste dudit faisceau polychromatique de rayonnement électromagnétique (EPCLB) vers ledit système optique dispersif (DO), ladite partie qui a divergé (ALB) dudit faisceau polychromatique de rayonnement électromagnétique (EPCLB) étant dirigée par ledit moyen (BS) de séparation de faisceau dans un moyen d'alignement (CH) sélectionné parmi le groupe consistant en : réticule et moyen de détection de faisceau électromagnétique, en combinaison avec des systèmes optiques dispersifs montés de manière commune (DO) et un moyen de commande d'orientation d'éléments formant détecteurs (DE), de telle sorte que lors de l'utilisation, ledit moyen d'alignement (CH) fournit une capacité d'alignement surveillée afin de permettre une commande précise du lieu de propagation de la partie dudit faisceau polychromatique de rayonnement électromagnétique (EPCLB) qui passe par ledit moyen (BS) de séparation de faisceau, interagit avec ledit système optique dispersif (DO), et pénètre dans ledit moyen formant détecteur (DET).

**3.** Système d'examen de système matériel compensateur rotatif spectroscopique selon la revendication 1, dans lequel des systèmes optiques dispersifs (DO) et des éléments formant détecteurs (DE) sont contenus dans un système de spectromètre à réseau de diodes disponible sur stock.

**4.** Système d'examen de système matériel compensateur rotatif spectroscopique selon la revendication 3, dans lequel ledit système de spectromètre à réseau de diodes disponible sur stock fournit une plage de longueurs d'ondes opérationnelle sélectionnée dans le groupe consistant en : (300 - 1150 nm, 190 - 230 nm, 190 - 400 nm et 900 - 2400 nm).

**5.** Système d'examen de système matériel compensateur rotatif spectroscopique selon la revendication 1, dans lequel le ou les compensateur(s) (C) (C') (C'') est/sont non achromatique(s) en ce que le retard mis en oeuvre par ceux-ci entre des composantes en quadrature d'un faisceau de rayonnement électromagnétique à une longueur d'onde, est différent de celui mis en oeuvre par ceux-ci à au moins une autre longueur d'onde.

**6.** Système d'examen de système matériel compensateur rotatif spectroscopique selon la revendication 5, dans lequel le ou les compensateur(s) non achromatique(s) (C) (C') (C'') présente(nt) une caractéristique de retard en fonction de la longueur d'onde essentiellement proportiononelle à 1/longueur d'onde.

**7.** Système d'examen de système matériel compensateur rotatif spectroscopique selon la revendication 1, dans lequel le ou les compensateur(s) (C) (C') (C'') est/sont achromatique(s) en ce que le retard mis en oeuvre par ceux-ci entre des composantes en quadrature d'un faisceau de rayonnement électromagnétique à une longueur d'onde est essentiellement le même que celui mis en oeuvre par ceux-ci à d'autres longueurs d'ondes.

**8.** Système d'examen de système matériel compensateur rotatif spectroscopique selon la revendication 1, dans lequel ledit au moins un desdits au moins un compensateur(s) (C) (C') (C'') ne provoque essentiellement aucune déviation ou déplacement dans un faisceau polychromatique de rayonnement électromagnétique (EPCLB) amené à passer par celui-ci tout en étant amené à tourner.

**9.** Système d'examen de système matériel compensateur rotatif spectroscopique selon la revendication 1, dans lequel ledit au moins un dudit au moins un compensateur(s) (C) (C') (C'') est d'un type sélectionné parmi le groupe consistant en : type Berek avec un axe optique essentiellement perpendiculaire à sa surface, type non Berek avec un axe optique essentiellement parallèle à sa surface, plaque d'onde d'ordre zéro, plaque d'onde d'ordre zéro construite à partir de deux plaques d'onde d'ordre multiple, losange, polymère, cristal achromatique et pseudo-achromatique.

**10.** Système d'examen de système matériel compensateur rotatif spectroscopique selon la revendication 1, dans lequel le système optique dispersif (DO) est un réseau de diffraction.

**11.** Système d'examen de système matériel compensateur rotatif spectroscopique selon la revendication 10, dans lequel ledit réseau de diffraction (DO) est sélectionné parmi le groupe consistant en : géométrie « linéaire », « en étoile » , et « holographique », ladite géométrie linéaire consistant essentiellement en lignes alternatives symétriques avec des dépressions entre elles, et ladite géométrie en étoile consistant en lignes en forme de rampes alternatives avec des dépressions entre elles, et ladite géométrie holographique consistant en lignes de formes cosinusoïdales continues et en dépressions.

**12.** Système d'examen de système matériel compensateur rotatif spectroscopique selon la revendication 1, dans lequel le système optique dispersif (DO) comprend un prisme.

**13.** Système d'examen de système matériel compensateur rotatif spectroscopique selon la revendication 1, qui comprend en outre un élément de focalisation (FE) après ledit étage (STG) pour supporter un système matériel et avant ledit au moins un système formant détecteur (DET).

**14.** Système d'examen de système matériel compensateur rotatif spectroscopique selon la revendication 1, dans lequel des compensateurs (C) (C') (C'') sont présents à la fois avant et après ledit étage (STG) pour supporter un système matériel, et une sélection est faite parmi le groupe consistant en : lesdits deux compensateurs sont amenés à tourner lors de l'utilisation, et l'un desdits compensateurs est conduit à tourner lors de l'utilisation.

**15.** Système d'examen de système matériel compensateur rotatif spectroscopique selon la revendication 1, dans lequel une fibre optique (LF) est présente au moins à un emplacement sélectionné parmi le groupe consistant en : entre ladite source (LS) de faisceau polychromatique de rayonnement électromagnétique et un polariseur (P) ; et entre ledit analyseur (A) et ledit système optique dispersif (DO) et au moins un système formant détecteur (DET) qui contient une multiplicité d'éléments formant détecteurs (DE).

**16.** Système d'examen de système matériel compensateur rotatif spectroscopique selon la revendication 15, dans lequel une fibre optique (LF) est présente après ledit analyseur (A), ladite fibre optique devenant au moins partagée (LF1) (LF2) (LF3) afin d'obtenir une pluralité de faisceaux de fibres optiques, au moins deux de cette pluralité d'au moins deux faisceaux de fibres optiques partagés fournissant une entrée pour séparer des systèmes formant détecteurs (DET1) (DET2) (DET3), chacun desdits systèmes formant détecteurs séparés comprenant un système optique de dispersion (DO) et une multiplicité d'éléments formant détecteurs (DE), ladite pluralité de faisceaux de fibres optiques ayant des formes en coupe transversale, à leurs extrémités, sélectionnées parmi le groupe consistant en : esentiellement circulaire, essentiellement en forme de fente, autre qu'essentiellement circulaire et essentiellement en forme de fente.

**17.** Procédé d'étalonnage d'un système d'examen de système matériel compensateur rotatif spectroscopique comprenant les étapes :

a. de fourniture d'un système d'examen de système matériel compensateur rotatif spectroscopique comprenant une source (LS) de faisceau polychromatique de rayonnement électromagnétique (PPCLB), un polariseur (P), un étage (STG) pour supporter un système matériel (MS), un analyseur (A), et au moins un système formant détecteur (DET), ledit système d'examen de système matériel compensateur rotatif spectroscopique comprenant en outre au moins un compensateur(s) (C) (C') (C'') disposé(s) en un emplacement sélectionné parmi le groupe consistant en : avant ledit étage (STG) pour supporter un système matériel (MS), et après ledit étage (STG) pour supporter un système matériel (MS), et à la fois avant et après ledit étage (STG) pour supporter un système matériel (MS) ; de telle sorte que lorsque ledit système d'examen de système matériel compensateur rotatif spectroscopique est utilisé pour examiner un système matériel (MS) présent sur ledit étage (STG) pour supporter un système matériel (MS), lesdits analyseur (A) et polariseur (P) sont maintenus essentiellement en position fixe et au moins l'un desdits au moins un compensateur(s) (C) (C') (C'') est/sont conduits à tourner de manière continue tandis qu'un faisceau polychromatique de rayonnement électromagnétique (PPCLB) produit par ladite source de faisceau polychromatique de rayonnement électromagnétique est conduit à passer par ledit polariseur (P) et ledit ou lesdits compensateur(s) (C) (C') (C''), ledit faisceau polychromatique de rayonnement électromagnétique (PPCLB) étant aussi conduit à interagir avec ledit système matériel (MS), à passer par ledit analyseur (A) et à interagir avec ledit au moins un système formant détecteur (DET) ;

**caractérisé en ce que** ledit faisceau polychromatique de rayonnement électromagnétique (PPCLB) est aussi conduit à interagir avec un système optique dispersif (DO) de telle sorte qu'une multiplicité de longueurs d'ondes

essentiellement uniques sont conduites à pénétrer simultanément dans une multiplicité correspondante d'éléments formant détecteurs (DE) dans ledit au moins un système formant détecteur (DET) ;

le procédé étant aussi **caractérisé par**

b. le développement d'un modèle mathématique dudit système d'examen de système matériel compensateur rotatif spectroscopique, qui comprend des variables de paramètre d'étalonnage sélectionnées parmi le groupe comprenant une orientation d'angle azimutal de polariseur ($P_s$), un PSI ($\psi$) du système matériel présent, un DELTA ($\Delta$) du système matériel présent, une ou des orientation(s) d'angle azimutal de compensateur ($C_s$) ($C'_s$) ($C''_s$), des composantes matricielles ($\delta_u$) desdits compensateurs (C) (C') (C''), et une orientation d'angle azimutal d'analyseur ($A_s$), ce modèle mathématique étant effectivement une fonction de transfert qui permet le calcul de l'intensité d'un faisceau électromagnétique en fonction d'une longueur d'onde détectée par un élément formant détecteur, intensité donnée en fonction d'une longueur d'onde fournie par ladite source (LS) de faisceau polychromatique de rayonnement électromagnétique (PPCLB) ;

c. l'amenée d'un faisceau polychromatique de rayonnement électromagnétique (PPCLB) produit par ladite source (LS) de faisceau polychromatique de rayonnement électromagnétique, à passer par ledit polariseur (P), à interagir avec un système matériel (MS) conduit à être dans son trajet, à passer par ledit analyseur (A), et à interagir avec ledit système optique dispersif (DO) de telle sorte qu'une multiplicité de longueurs d'ondes essentiellement uniques sont conduites à pénétrer simultanément dans une multiplicité correspondante d'éléments formant détecteurs (DE) dans ledit au moins un système formant détecteur (DET), ledit faisceau polychromatique de rayonnement électromagnétique (PPCLB) étant aussi conduit à passer par ledit ou ledits compensateur(s) (C) (C') (C'') disposé(s) en un emplacement sélectionné parmi le groupe consistant en : avant ledit étage (STG) pour supporter un système matériel (MS), et après ledit étage (STG) pour supporter un système matériel (MS), et à la fois avant et après ledit étage (STG) pour supporter un système matériel (MS) ;

d. d'obtention d'au moins deux séries de données en deux dimensions de valeurs d'intensité en fonction d'une longueur d'onde et d'un paramètre sélectionné parmi le groupe consistant en : angle d'incidence dudit faisceau polychromatique de rayonnement électromagnétique par rapport à un système matériel présent (MS), et rotation d'angle azimutal d'un élément sélectionné parmi le groupe consistant en : ledit polariseur (P) et ledit analyseur (A), au cours du temps, tandis qu'au moins l'un desdits au moins compensateur(s) (C) (C') (C'') est conduit à tourner de manière continue ;

e. d'exécution d'une régression mathématique dudit modèle mathématique sur ladite au moins une série de données en deux dimensions, afin d'évaluer des paramètres d'étalonnage dans ledit modèle mathématique ;

ladite procédure d'étalonnage à base de régression évaluant des paramètres d'étalonnage servant à compenser ledit modèle mathématique pour des caractéristiques non achromatiques et des non-idéalités dudit ou desdits compensateur(s), et pour des angles azimutaux desdits polariseur (P), analyseur (A) et compensateur(s) (C) (C') (C'').

**18.** Procédé d'étalonnage d'un système d'examen de système matériel compensateur rotatif spectroscopique selon la revendication 17, qui comprend en outre l'inclusion de paramètres d'étalonnage pour une persistance (x) d'image d'élément formant détecteur et une lecture (p) de non-idéalités dans le modèle mathématique, et en outre l'évaluation desdits paramètres d'étalonnage pour une persistance d'image d'élément formant détecteur et une lecture de non-idéalités dans ladite procédure de régression.

**19.** Procédé d'étalonnage d'un système d'examen de système matériel compensateur rotatif spectroscopique selon la revendication 17, dans lequel l'étape de développement d'un paramètre d'étalonnage contenant un modèle mathématique dudit système à ellipsomètre compensateur rotatif spectroscopique comporte les étapes de fourniture d'une représentation matricielle de chacun desdits polariseur (P), système matériel présent (MS), dudit ou desdits compensateur(s) (C) (C') (C''), et dudit analyseur (A), et de détermination d'une fonction de transfert mathématique relative au rapport de l'intensité de sortie à l'intensité d'entrée d'un faisceau électromagnétique, en fonction d'une longueur d'onde, par multiplication desdites matrices dans un ordre de représentation de présence d'élément de système d'examen de système matériel compensateur rotatif spectroscopique.

**20.** Procédé d'étalonnage d'un système d'examen de système matériel compensateur rotatif spectroscopique selon la revendication 17, qui comprend en outre l'étape d'établissement de paramètres d'étalonnage par représentation d'une variation en fonction d'un élément du groupe consistant en : une longueur d'onde, un angle d'incidence dudit faisceau polychromatique de rayonnement électromagnétique par rapport à un système matériel présent (MS), et une orientation d'angle azimutal d'un élément sélectionné parmi le groupe consistant en : ledit polariseur (P) et

ledit analyseur (A), par un paramètre contenant une équation mathématique, lesdits paramètres étant évalués au cours de ladite régression mathématique.

**21.** Procédé d'étalonnage d'un système d'examen de système matériel compensateur rotatif spectroscopique selon la revendication 20, dans lequel des paramètres d'étalonnage qui sont établis sont sélectionnés parmi le groupe consistant en : une orientation ($P_s$) d'angle azimutal de polariseur (P), une ou des orientation(s) d'angle azimutal de compensateur, des composantes matricielles ($\delta_n$) dudit ou desdits compensateur(s) (C) (C') (C''), et une orientation ($A_s$) d'angle azimutal d'analyseur, chacun en fonction d'une longueur d'onde.

**22.** Procédé d'étalonnage d'un système d'examen de système matériel compensateur rotatif spectroscopique selon la revendication 17, dans lequel le système matériel (MS) est sélectionné parmi le groupe consistant en : une atmosphère ouverte avec le système d'examen de système matériel compensateur rotatif spectroscopique orienté dans une configuration « directe », et une atmosphère autre qu'ouverte avec le système d'examen de système matériel compensateur rotatif spectroscopique orienté dans une configuration à « matériau présent » (MS).

**23.** Procédé d'étalonnage d'un système d'examen de système matériel compensateur rotatif spectroscopique selon la revendication 17, dans lequel :

au cours de ladite étape (b), ledit modèle mathématique fournit des équations pour des coefficients de termes dans ladite fonction de transfert, lesdits coefficients de termes étant chacun une fonction de paramètres d'étalonnage identifiés ; et
ladite étape (d) comporte un calcul à partir desdites valeurs numériques de série de données pour des coefficients de termes dans la fonction de transfert pour ledit système d'examen de système matériel compensateur rotatif spectroscopique ;
ladite étape (e) comporte l'exécution d'une régression mathématique desdites équations de modèle mathématique pour des coefficients de termes dans ladite fonction de transfert, sur lesdites valeurs de coefficient de terme de fonction de transfert, afin d'évaluer lesdits paramètres d'étalonnage.

**24.** Procédé d'étalonnage d'un système d'examen de système matériel compensateur rotatif spectroscopique selon la revendication 23, dans lequel une approche d'analyse de Hadamard est utilisée dans le calcul de valeurs numériques pour des coefficients de termes dans la fonction de transfert pour ledit système d'examen de système matériel compensateur rotatif spectroscopique.

**25.** Procédé d'étalonnage d'un système d'examen de système matériel compensateur rotatif spectroscopique selon la revendication 23, qui comprend en outre l'inclusion de paramètres d'étalonnage pour une persistance ($X_n$) d'image d'élément formant détecteur et une lecture ($\rho_n$) de non-idéalités dans le modèle mathématique, et en outre l'évaluation desdits paramètres d'étalonnage pour une persistance d'image d'élément formant détecteur et une lecture de non-idéalités dans ladite procédure de régression.

**26.** Procédé d'étalonnage d'un système d'examen de système matériel compensateur rotatif spectroscopique selon la revendication 23, dans lequel l'étape de développement d'un modèle mathématique contenant un paramètre d'étalonnage dudit système d'ellipsomètre compensateur rotatif spectroscopique comporte les étapes de fourniture d'une représentation matricielle de chacun desdits polariseur (P), système matériel présent (MS), dudit ou desdits compensateur(s) (C) (C') (C''), et dudit analyseur (A), et de détermination d'une fonction de transfert relative au rapport de l'intensité de sortie à l'intensité d'entrée d'un faisceau électromagnétique, en fonction d'une longueur d'onde, par multiplication desdites matrices dans un ordre de représentation de présence d'élément de système d'examen de système matériel compensateur rotatif spectroscopique.

**27.** Procédé d'étalonnage d'un système d'examen de système matériel compensateur rotatif spectroscopique selon la revendication 23, dans lequel l'étape de calcul de valeurs de coefficients de termes dans une fonction de transfert à partir de ladite série de données met en oeuvre le calcul de valeurs de coefficients d'une série de Fourier.

**28.** Procédé d'étalonnage d'un système d'examen de système matériel compensateur rotatif spectroscopique selon la revendication 23, qui comprend en outre l'étape d'établissement de paramètres d'étalonnage en représentant une variation en fonction d'un élément du groupe consistant en : une longueur d'onde, un angle d'incidence dudit faisceau polychromatique de rayonnement électromagnétique par rapport à un système matériel présent, et une orientation d'angle azimutal d'un élément sélectionné parmi le groupe consistant en : ledit polariseur (P) et ledit analyseur (A) , par une équation mathématique contenant un paramètre, lesdits paramètres étant évalués au cours

de ladite régression mathématique.

**29.** Procédé d'étalonnage d'un système d'examen de système matériel compensateur rotatif spectroscopique selon la revendication 28, dans lequel des paramètres d'étalonnage qui sont établis sont sélectionnés parmi le groupe consistant en : une orientation ($P_s$) d'angle azimutal de polariseur, une ou des orientation(s) ($C_s$) ($C'_s$) ($C''_s$) d'angle azimutal de compensateur, des composantes matricielles ($\delta_n$) dudit ou desdits compensateur(s) (C) (C') (C''), et une orientation ($A_s$) d'angle azimutal d'analyseur, chacun en fonction d'une longueur d'onde.

**30.** Procédé d'étalonnage d'un système d'examen de système matériel compensateur rotatif spectroscopique selon la revendication 23, dans lequel le système matériel (MS) est sélectionné parmi le groupe consistant en : une atmosphère ouverte avec le système d'examen de système matériel compensateur rotatif spectroscopique orienté dans une configuration « directe », et une atmosphère autre qu'ouverte avec le système d'examen de système matériel compensateur rotatif spectroscopique orienté dans une configuration à « matériau présent » (MS).

**31.** Système d'examen de système matériel compensateur rotatif spectroscopique comprenant une source (LS) de faisceau polychromatique de rayonnement électromagnétique (PPCLB), un polariseur (P), un étage (STG) pour supporter un système matériel (MS), un analyseur (A), et au moins un système formant détecteur (DET), ledit système d'examen de système matériel compensateur rotatif spectroscopique comprenant en outre au moins un compensateur (s) (C) (C') (C'') disposé(s) en un emplacement sélectionné parmi le groupe consistant en : avant ledit étage (STG) pour supporter un système matériel (MS), et après ledit étage (STG) pour supporter un système matériel, et à la fois avant et après ledit étage (STG) pour supporter un système matériel (MS) ; de telle sorte que lorsque ledit système d'examen de système matériel compensateur rotatif spectroscopique est utilisé pour examiner un système matériel (MS) présent sur ledit étage (STG) pour supporter un système matériel (MS), lesdits analyseur (A) et polariseur (P) sont maintenus essentiellement dans une position fixe et au moins l'un dudit ou desdits au moins un compensateur(s) (C) (C') (C'') est conduit à tourner de manière continue tandis qu'un faisceau polychromatique de rayonnement électromagnétique (PPCLB) produit par ladite source (LS) de faisceau polychromatique de rayonnement électromagnétique (PPCLB) est conduit à passer par ledit polariseur (P) et ledit ou lesdits compensateur(s) (C) (C') (C''), ledit faisceau polychromatique de rayonnement électromagnétique étant aussi conduit à interagir avec ledit système matériel (MS) ;

**<u>caractérisé en ce que</u>** le système comporte un système optique dispersif (DO) et **en ce que** ledit au moins un système formant détecteur (DET) contient une multiplicité d'éléments formant détecteurs (DE) ;

ledit faisceau polychromatique de rayonnement électromagnétique (PPCLB) étant aussi, sans focalisation supplémentaire, conduit à passer par ledit analyseur (A) et à interagir avec ledit système optique dispersif (DO), ledit système optique dispersif (DO) servant à former une pluralité d'ordres essentiellement décalés dans l'espace (+ORD2) (+ORD1) (-ORD1) (-ORD2) lorsque ledit faisceau polychromatique de rayonnement électromagnétique (PPCLB) est conduit à le heurter, chacun desdits ordres produits (+ORD2) (+ORD1) (-ORD1) (-ORD2) comprenant un spectre essentiellement continu de faisceaux électromagnétiques séparés dans l'espace, de longueurs d'ondes essentiellement uniques (PPCLB), nombre desdites longueurs d'ondes essentiellement uniques étant présentes dans deux ordres produits ou davantage (+ORD2) (+ORD1) (-ORD1) (-ORD2) ; de telle sorte que lors de l'utilisation, des première et deuxième multiplicités de faisceaux de rayonnement électromagnétique (PPCLB) de longueur d'onde essentiellement unique, à partir des premier et deuxième ordres produits, sont simultanément interceptés respectivement par un premier et un deuxième systèmes formant détecteurs, afin de permettre l'accès simultané à une première multiplicité de longueurs d'ondes essentiellement uniques par ledit premier système formant détecteur et à une deuxième multiplicité de longueurs d'ondes essentiellement uniques par ledit deuxième système formant détecteur, chacune des première et deuxième multiplicités de longueurs d'ondes essentiellement uniques interceptées par lesdits premier et deuxième systèmes formant détecteurs, respectivement, comportant des premier et deuxième faisceaux spécifiques de rayonnement électromagnétique de longueur d'onde essentiellement unique, lesdits faisceaux spécifiques de rayonnement électromagnétique de longueur d'onde essentiellement unique étant interceptés simultanément par des éléments formant détecteurs spécifiques, respectivement dans lesdits premier et deuxième systèmes formant détecteurs, même si des faisceaux électromagnétiques desdites première et deuxième longueurs d'ondes spécifiques essentiellement uniques sont situés spatialement proches l'un de l'autre, dans un seul ordre produit pour des éléments séparés formant détecteurs de réseau de photodétecteurs dans un seul système formant détecteur qui intercepte ledit ordre unique pour accéder simultanément à des faisceaux de rayonnement électromagnétique à la fois desdites première et deuxième longueurs d'ondes spécifiques essentiellement uniques, séparément ;

le système étant aussi **caractérisé par** un modèle mathématique comprenant des paramètres d'étalonnage sélectionnés parmi le groupe consistant en : une orientation ($P_s$) d'angle azimutal de polariseur, PSI (($\psi$) du système matériel présent, système DELTA ($\Delta$) du système matériel présent, orientation(s) d'angle azimutal de com-

pensateur ($C_s$) ($C'_s$) ($C''_s$), retard dudit ou desdits compensateur(s), orientation d'angle azimutal d'analyseur, et persistance ($X_n$) d'image de système formant détecteur (DET) et non-idéalités de lecture ($\rho_n$), ce modèle mathématique étant effectivement une fonction de transfert qui permet un calcul d'intensité de faisceau électromagnétique en fonction d'une longueur d'onde détectée par un élément formant détecteur (DE), intensité donnée en fonction d'une longueur d'onde fournie par ladite source (LS) de faisceau polychromatique de rayonnement électromagnétique (PPCLB) ; lesdits paramètres d'étalonnage sélectionnés parmi le groupe consistant en : orientation d'angle azimutal de polariseur ($P_s$), PSI ($\psi$) du système matériel présent, DELTA ($\Delta$) du système matériel présent, orientation(s) d'angle azimutal de compensateur ($C_s$) ($C'_s$) ($C''_s$), retard dudit ou desdits compensateur(s) ($\delta_n$), orientation d'angle azimutal d'analyseur (As), et persistance ($X_n$) et lecture ($\rho_n$) de non-idéalités, étant, lors de l'utilisation, évalués par la performance d'une régression mathématique dudit modèle mathématique sur au moins une série de données en deux dimensions, ladite au moins une série de données en deux dimensions étant des valeurs d'intensité en fonction d'une longueur d'onde et d'un paramètre sélectionné parmi le groupe consistant en : angle d'incidence dudit faisceau polychromatique de rayonnement électromagnétique par rapport à un système matériel présent, rotation d'angle azimutal d'un élément sélectionné parmi le groupe consistant en : ledit polariseur (P) et ledit analyseur (A), obtenus au cours du temps, tandis qu'au moins l'un desdits au moins un compensateur(s) (C) (C') (C'') est amené à tourner de manière continue.

**32.** Système d'examen de système matériel compensateur rotatif spectroscopique selon la revendication 31, dans lequel le ou les compensateur(s) (C) (C') (C'') est/sont non-achromatique(s) en ce que le retard mis en oeuvre par ceux-ci entre des composantes en quadrature d'un faisceau de rayonnement électromagnétique à une longueur d'onde, est différent de celui mis en oeuvre par ceux-ci à au moins une autre longueur d'onde.

**33.** Système d'examen de système matériel compensateur rotatif spectroscopique selon la revendication 32, dans lequel le ou les compensateur(s) non-achromatique(s) (C) (C') (C'') présente(nt) une caractéristique de retard en fonction d'une longueur d'onde essentiellement proportionnelle à 1/longueur d'onde.

**34.** Système d'examen de système matériel compensateur rotatif spectroscopique selon la revendication 31, dans lequel le ou les compensateur(s) (C) (C') (C'') est/sont achromatique(s) en ce que le retard mis en oeuvre par ceux-ci entre des composantes en quadrature d'un faisceau de rayonnement électromagnétique à une longueur d'onde, est essentiellement le même que celui mis en oeuvre par ceux-ci à d'autres longueurs d'ondes.

**35.** Système d'examen de système matériel compensateur rotatif spectroscopique selon la revendication 31, dans lequel ledit au moins un dudit au moins un compensateur(s) (C) (C') (C'') ne provoque essentiellement aucune déviation ou déplacement dans un faisceau polychromatique de rayonnement électromagnétique conduit à traverser celui-ci tout en étant conduit à tourner.

**36.** Système d'examen de système matériel compensateur rotatif spectroscopique selon la revendication 31, dans lequel ledit au moins un dudit au moins un compensateur(s) (C) (C') (C'') est d'un type sélectionné parmi le groupe consistant en : type Berek avec un axe optique essentiellement perpendiculaire à sa surface, type non Berek avec un axe optique essentiellement parallèle à sa surface, plaque d'onde d'ordre zéro, plaque d'onde d'ordre zéro construite à partir de deux plaques d'onde d'ordre multiple, losange, polymère, cristal achromatique et pseudo-achromatique.

**37.** Système d'examen de système matériel compensateur rotatif spectroscopique selon la revendication 31, dans lequel le système optique dispersif (DO) est un réseau de diffraction.

**38.** Système d'examen de système matériel compensateur rotatif spectroscopique selon la revendication 37, dans lequel ledit réseau de diffraction est sélectionné parmi le groupe consistant en : géométrie « linéaire », « en étoile » , et « holographique », ladite géométrie linéaire consistant essentiellement en lignes alternatives symétriques avec des dépressions entre elles, et ladite géométrie en étoile consistant en lignes en forme de rampes alternatives avec des dépressions entre elles, et ladite géométrie holographique consistant en lignes de formes cosinusoïdales continues et en dépressions.

**39.** Système d'examen de système matériel compensateur rotatif spectroscopique selon la revendication 31, dans lequel le système optique dispersif (DO) comprend un prisme.

**40.** Système d'examen de système matériel compensateur rotatif spectroscopique selon la revendication 39, qui comprend en outre un élément de focalisation (FE) après ledit étage pour supporter un système matériel et avant ledit

système optique dispersif (DO).

**41.** Système d'examen de système matériel compensateur rotatif spectroscopique selon la revendication 31, dans lequel des compensateurs (C) (C') (C'') sont présents à la fois avant et après ledit étage (STG) pour supporter un système matériel (MS), et une sélection est faite parmi le groupe consistant en : lesdits deux compensateurs sont conduits à tourner lors de l'utilisation, et l'un desdits compensateurs est conduit à tourner lors de l'utilisation.

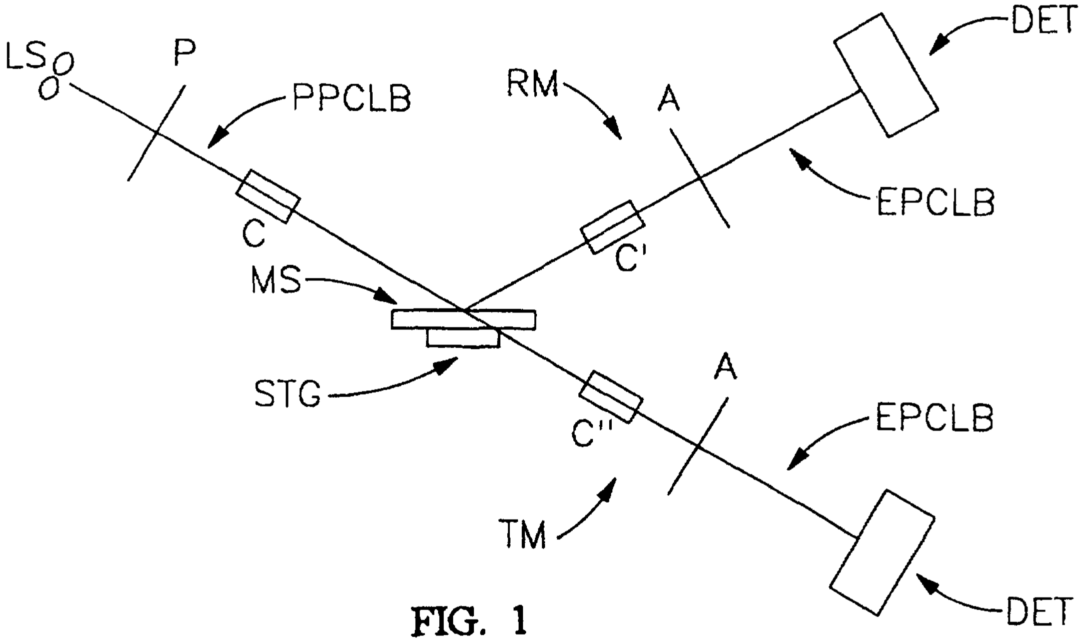
LS
P
PPCLB
RM
A
DET
EPCLB
C
C'
MS
STG
A
C''
EPCLB
TM
DET

FIG. 1

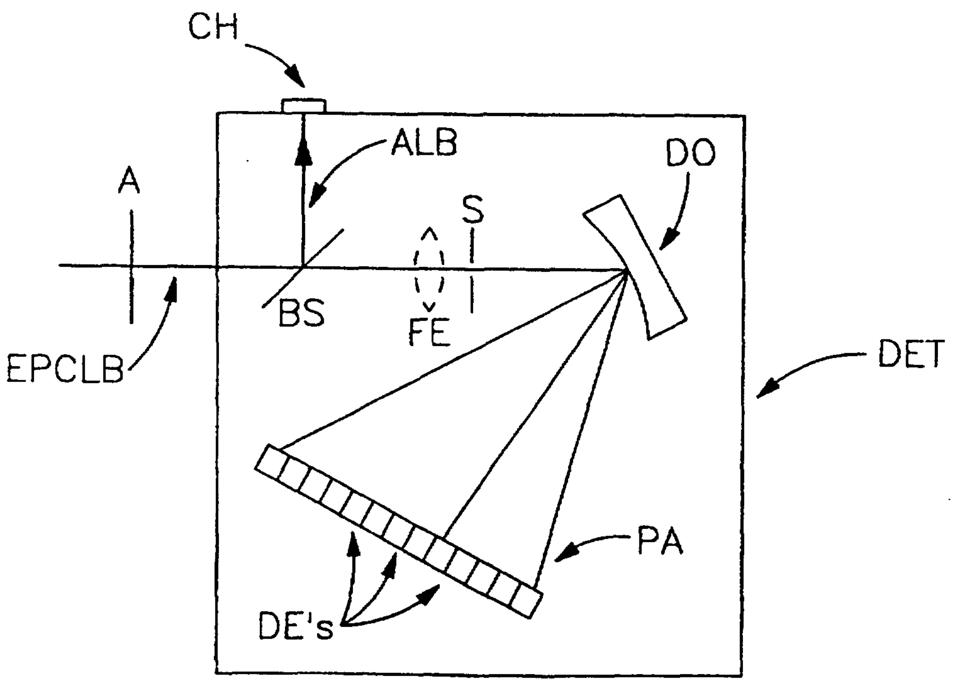
CH
ALB
DO
A
S
BS
FE
EPCLB
DET
PA
DE's

FIG. 2

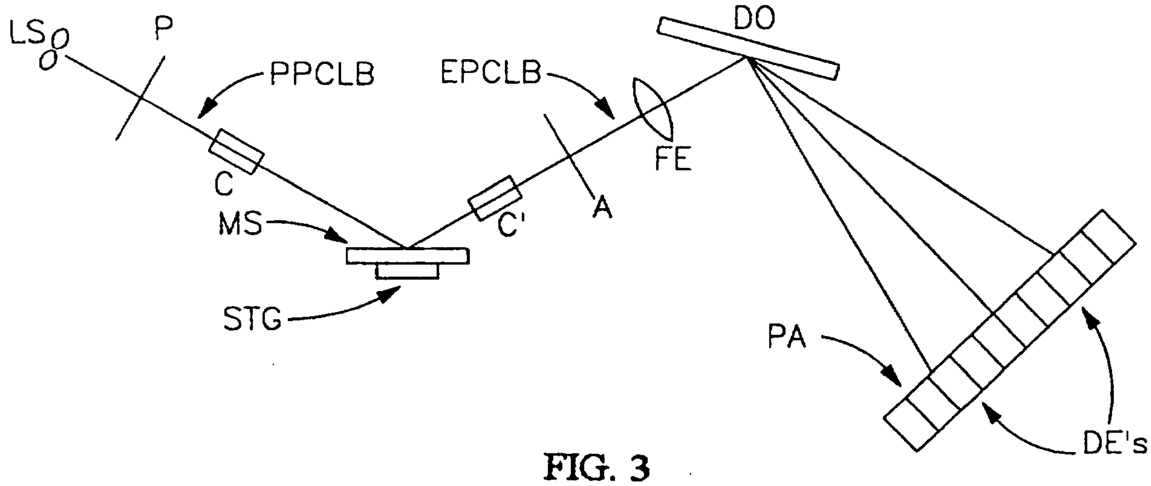
LS
P
PPCLB
EPCLB
DO
FE
C
C'
A
MS
STG
PA
DE's

FIG. 3

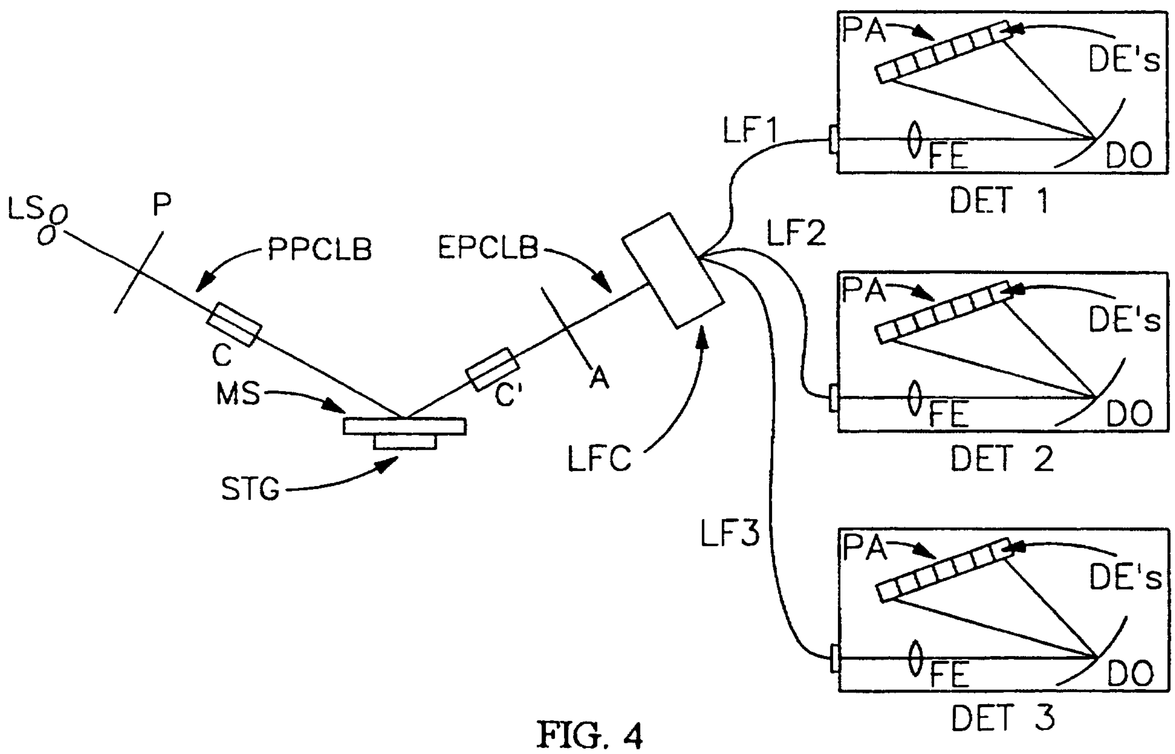
PA
DE's
LF1
FE
DO
DET 1
LS
P
PPCLB
EPCLB
LF2
PA
DE's
C
C'
A
MS
FE
DO
DET 2
STG
LFC
LF3
PA
DE's
FE
DO
DET 3

FIG. 4

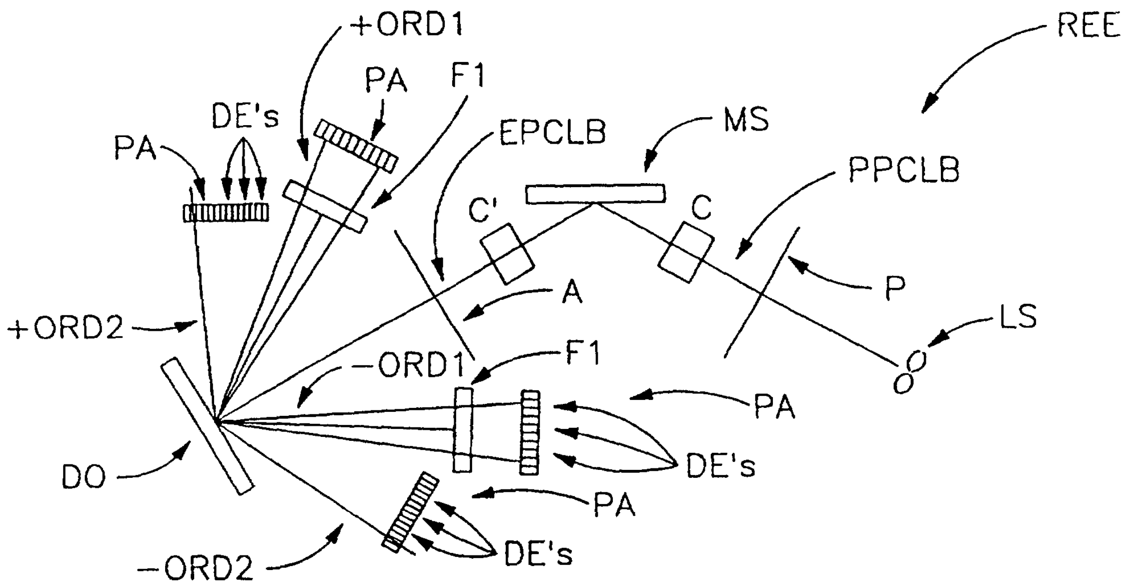
+ORD1
REE
PA
F1
DE's
EPCLB
MS
PA
PPCLB
C'
C
A
P
+ORD2
LS
-ORD1
F1
PA
DO
DE's
PA
-ORD2
DE's

FIG. 5

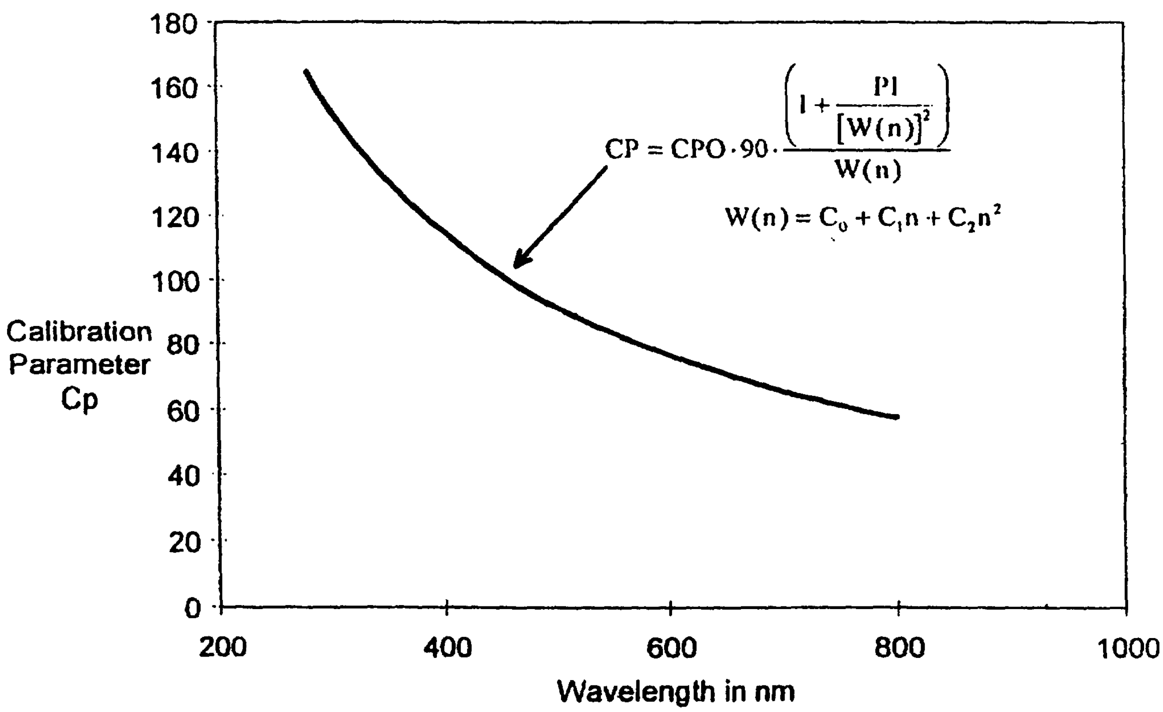
180
160
140
120
100
80
60
40
20
0
Calibration Parameter Cp
$CP = CPO \cdot 90 \cdot \frac{\left(1 + \frac{P1}{[W(n)]^2}\right)}{W(n)}$
$W(n) = C_0 + C_1 n + C_2 n^2$
200
400
600
800
1000
Wavelength in nm

FIG. 6

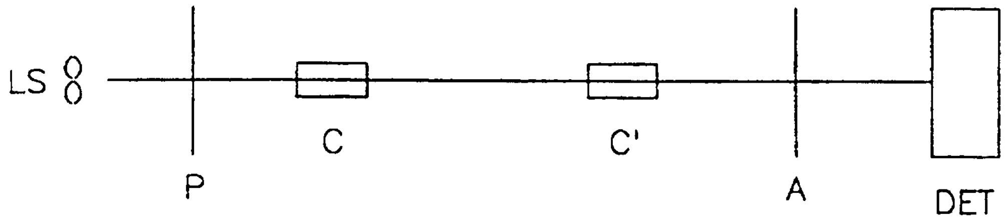


FIG. 7

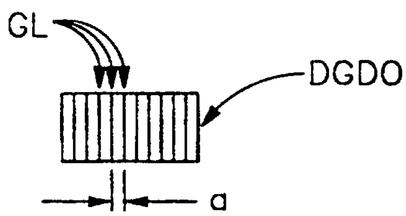


FIG. 8a

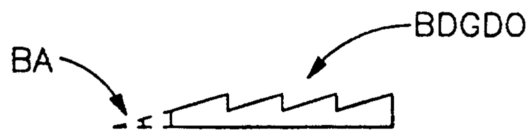


FIG. 8b

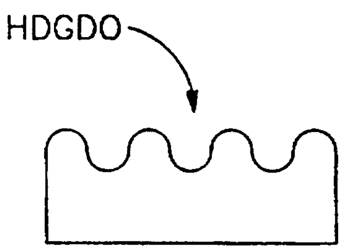


FIG. 8c

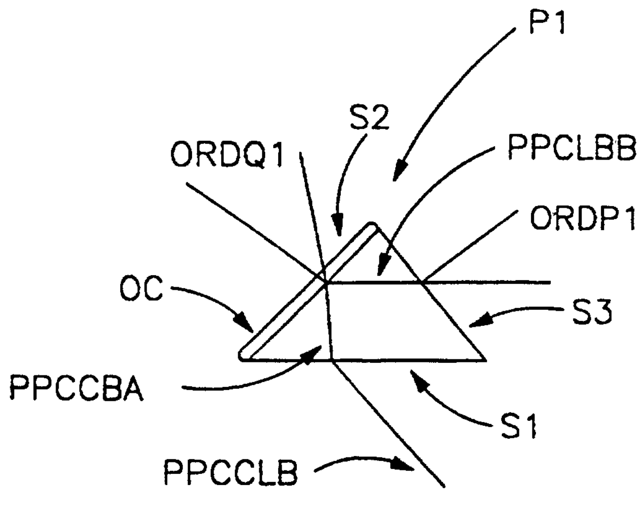


FIG. 8d

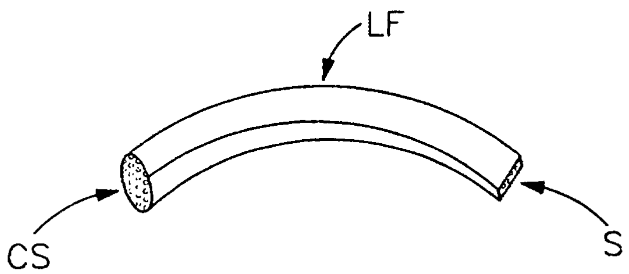


FIG. 9a

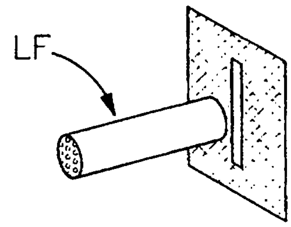


FIG. 9b

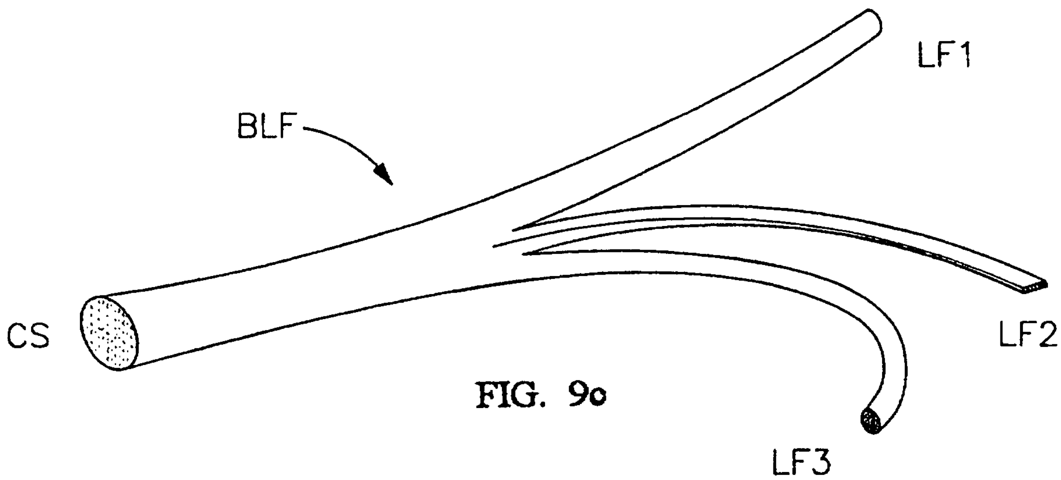


FIG. 9c

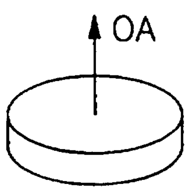


FIG. 9d

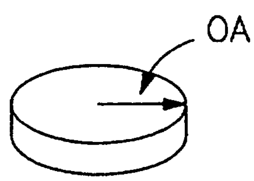


FIG. 9e

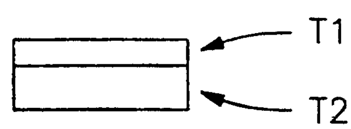


FIG. 9f

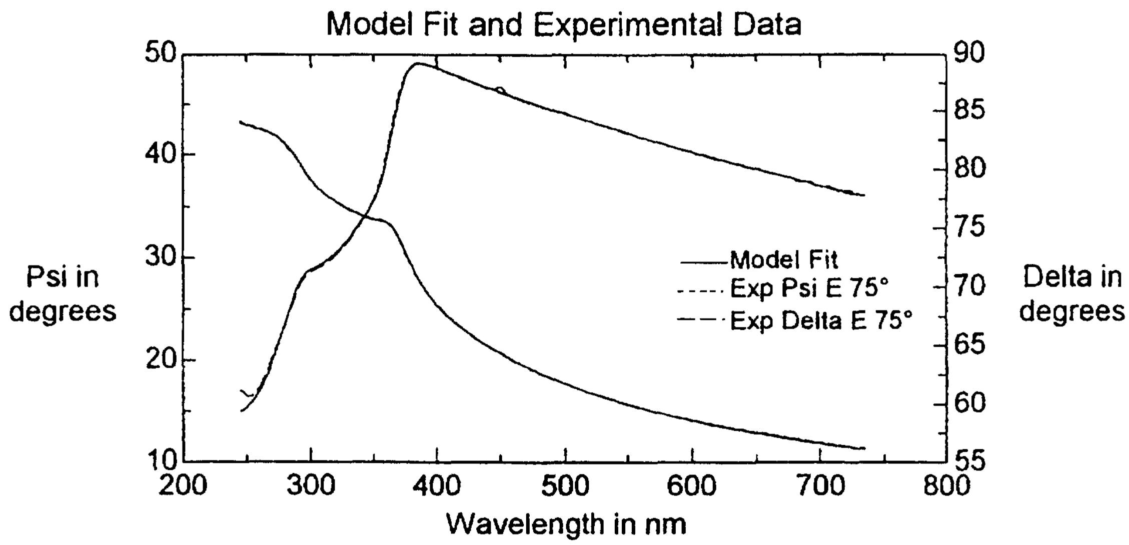


FIG. 10a

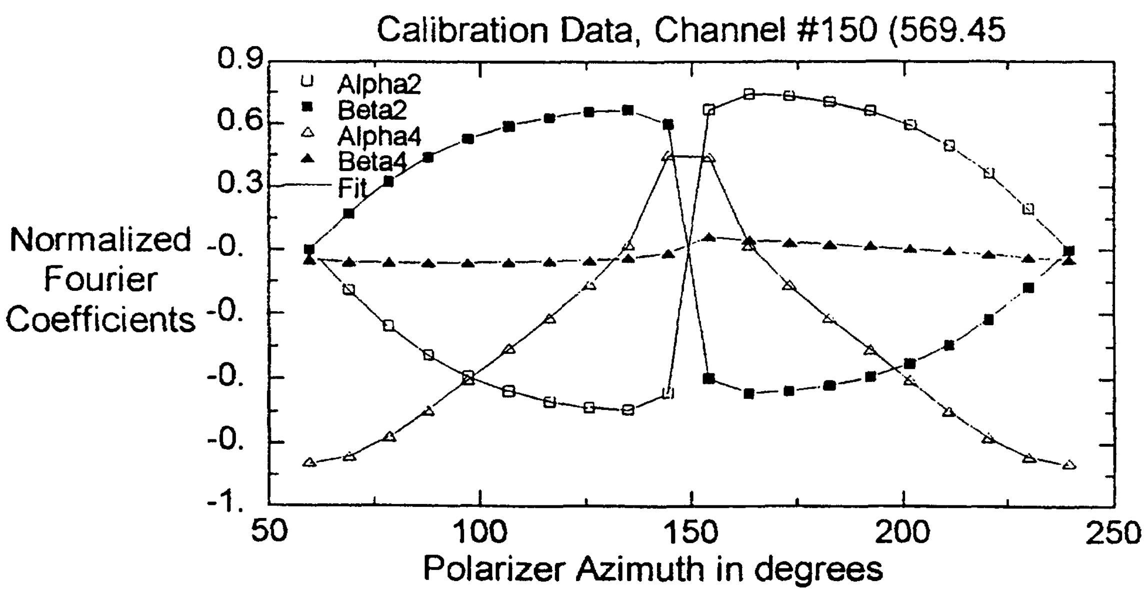


FIG. 10b

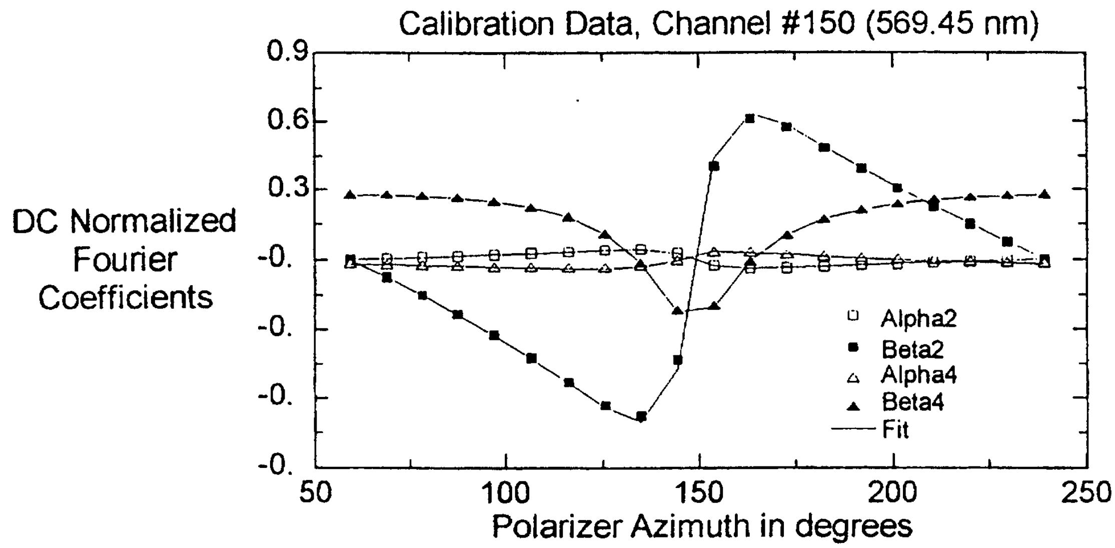


FIG. 10c

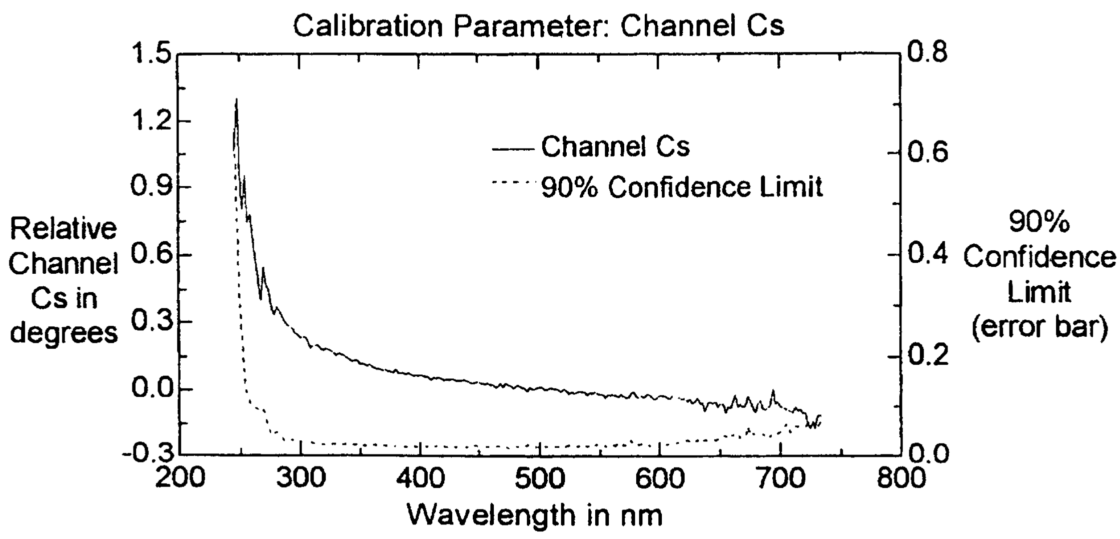


FIG. 10d

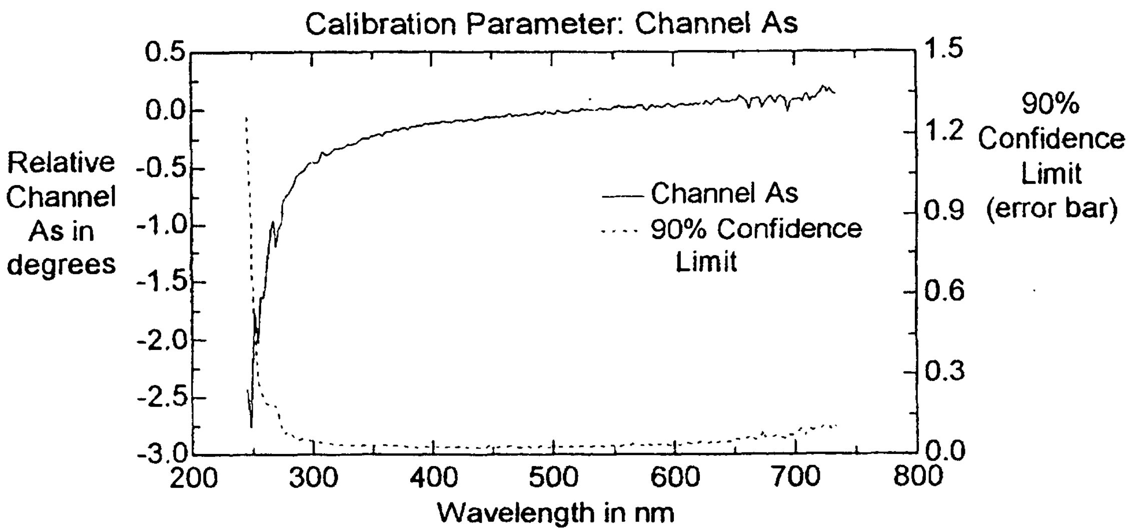


FIG. 10e

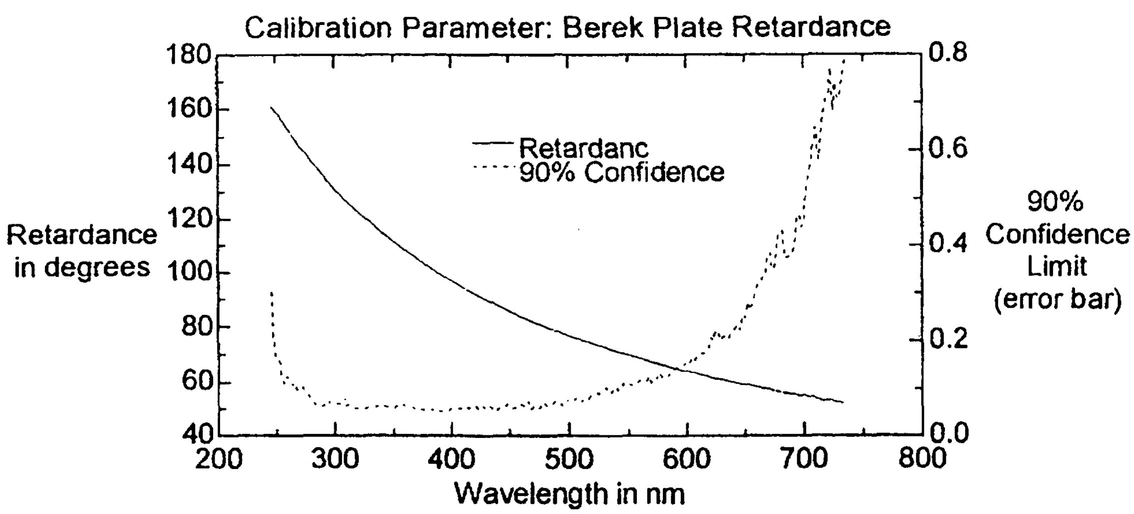


FIG. 10f

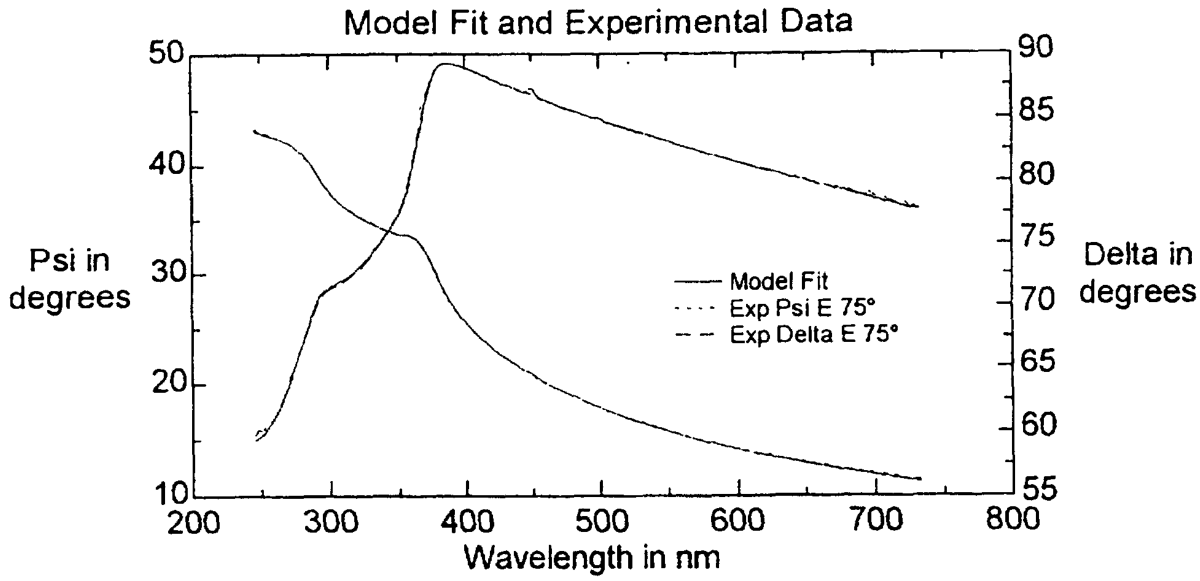


FIG. 10g

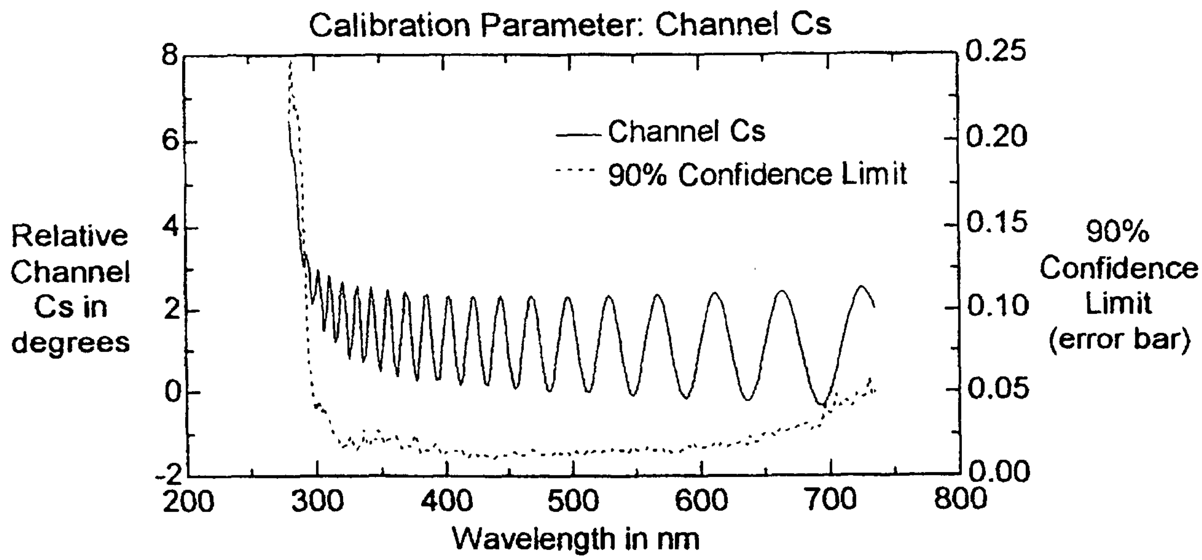


FIG. 11a

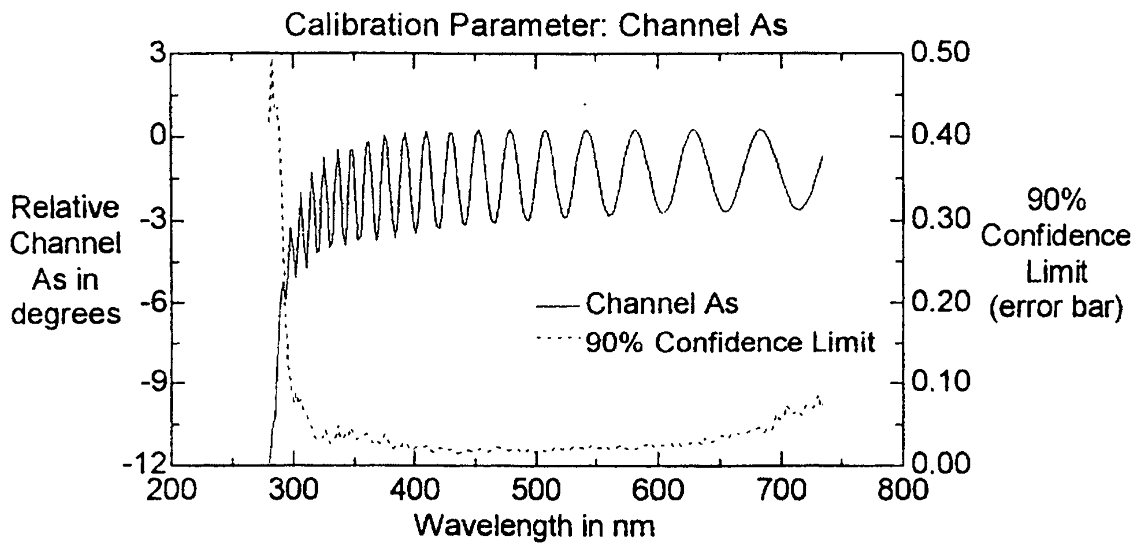


FIG. 11b

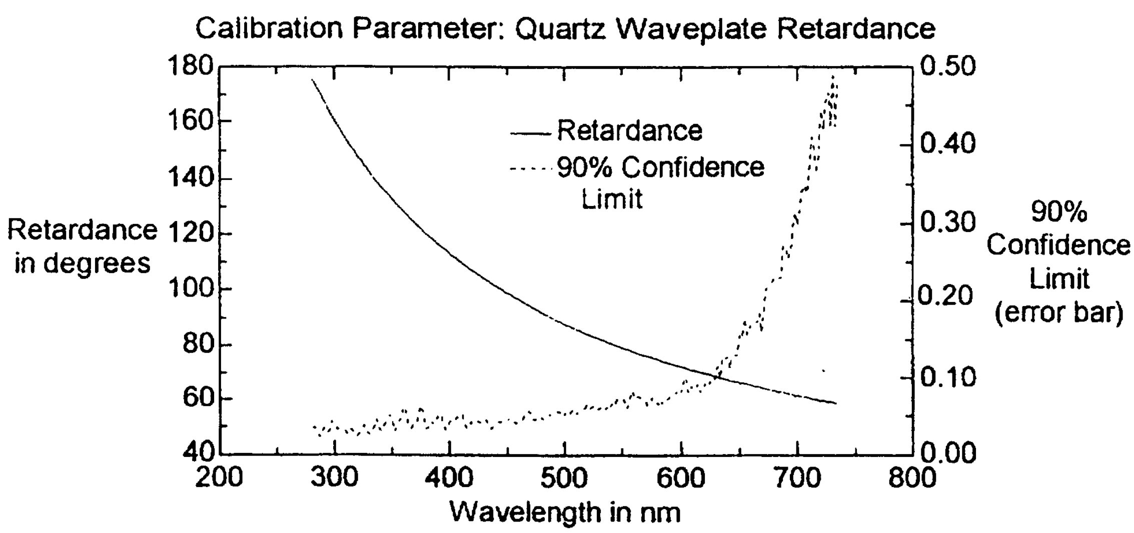


FIG. 11c

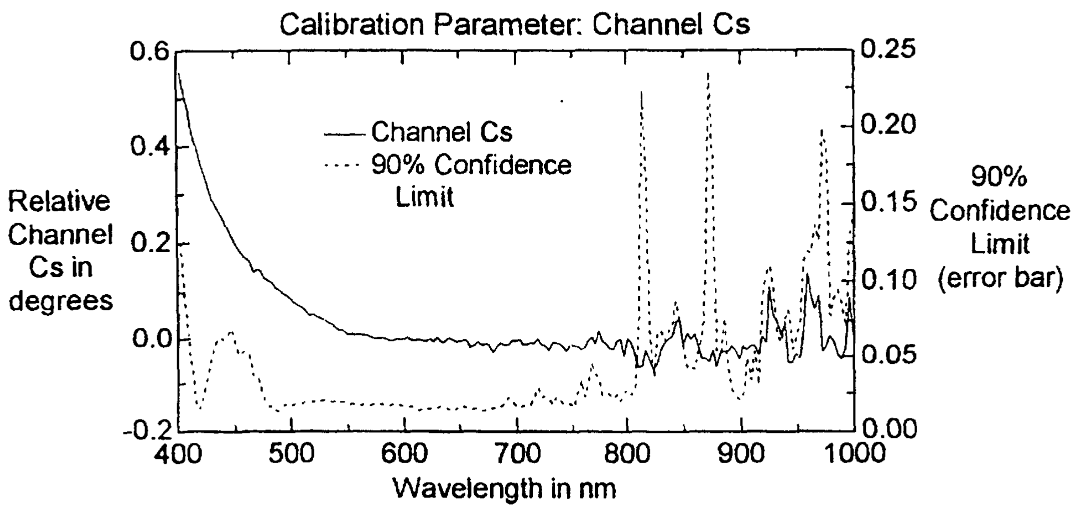


FIG. 12a

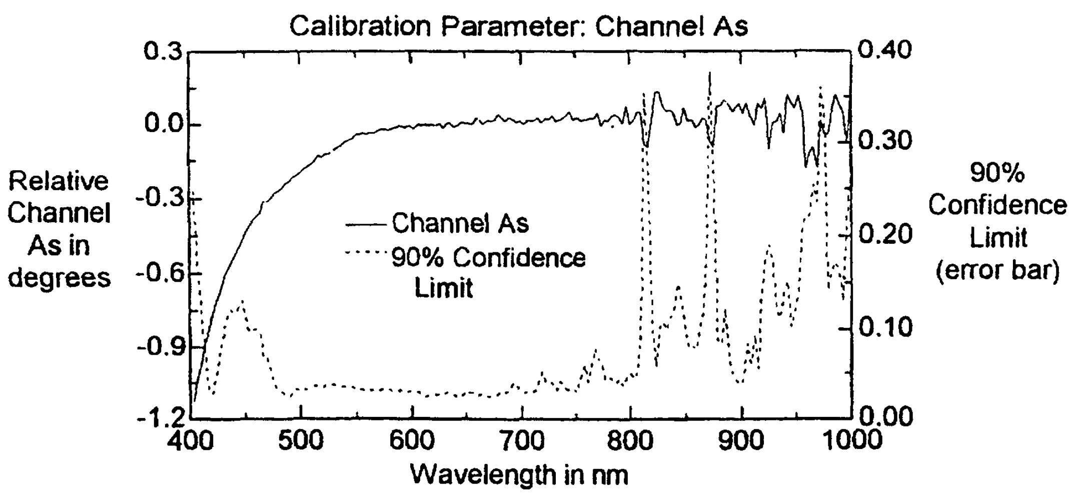


FIG. 12b

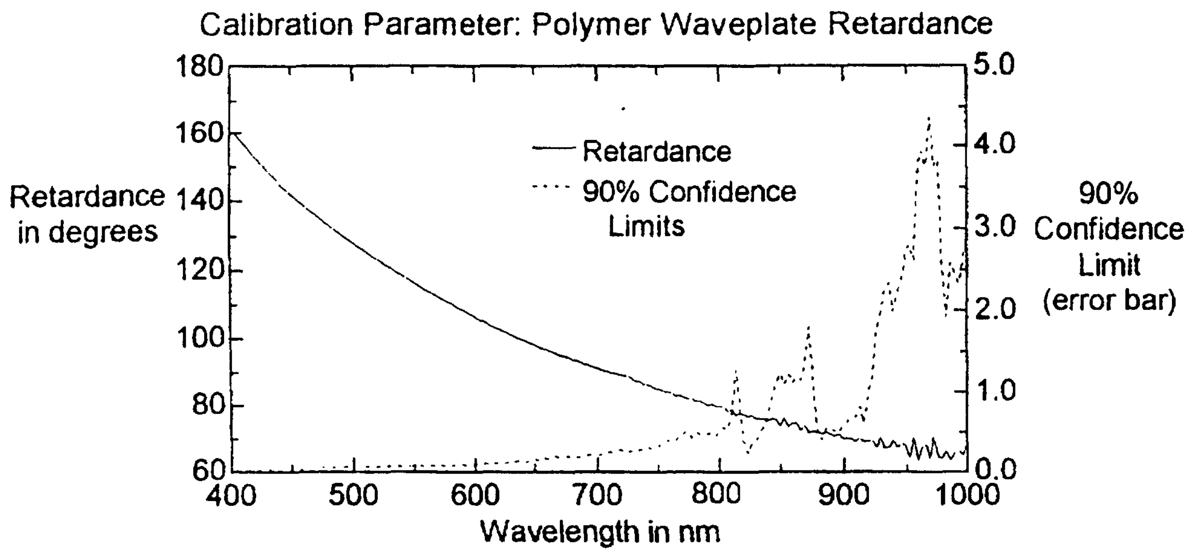


FIG. 12c

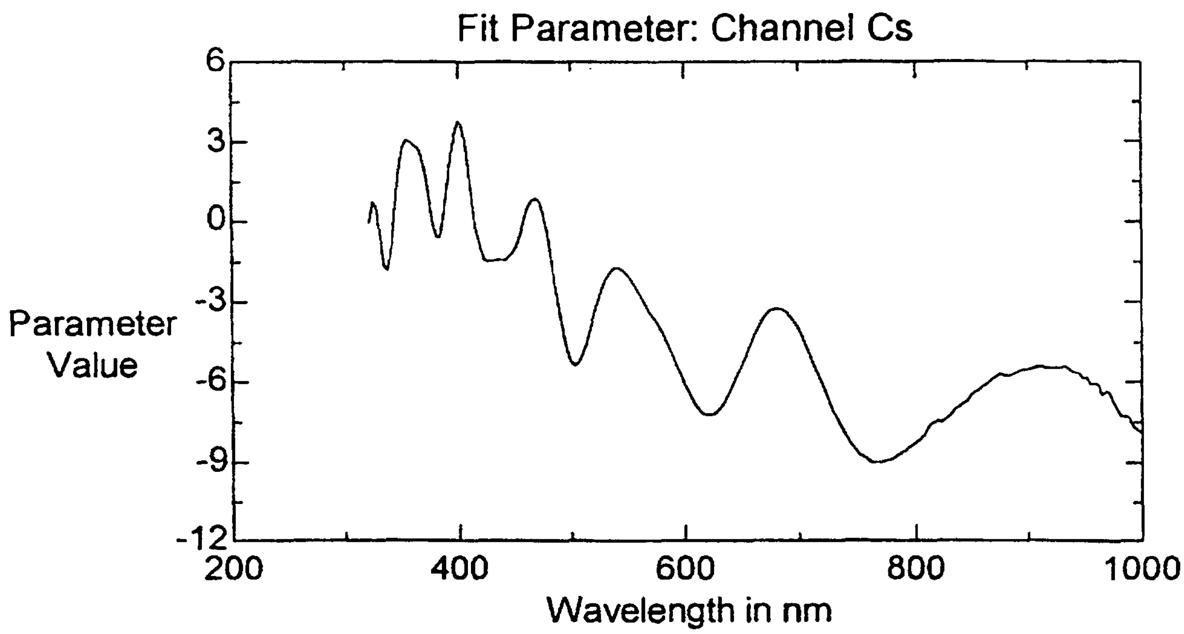


FIG. 13a

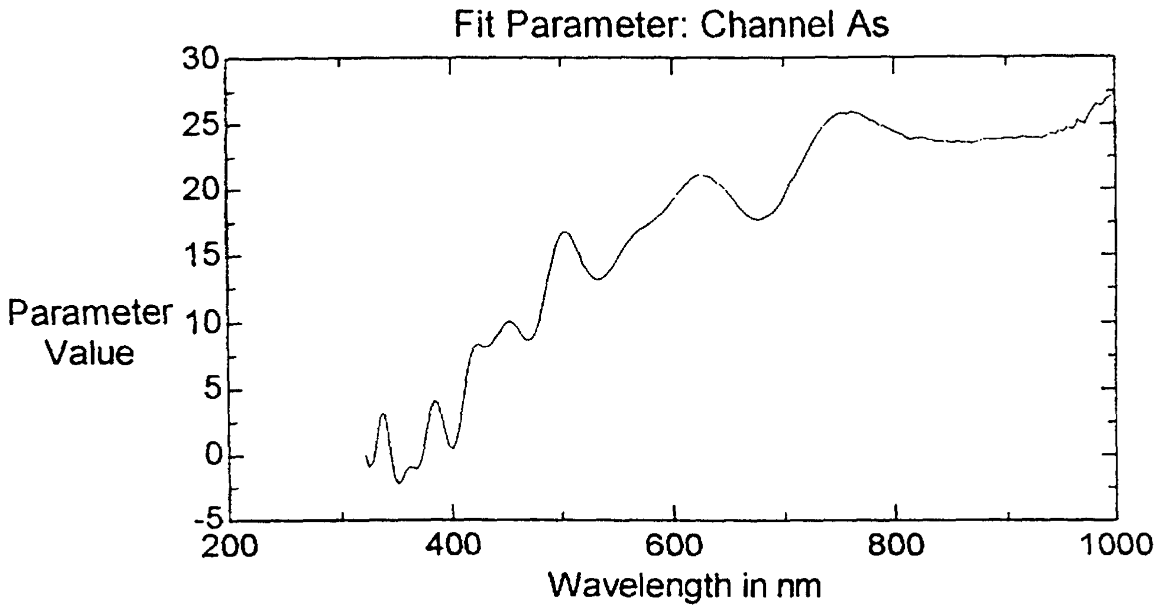


FIG. 13b

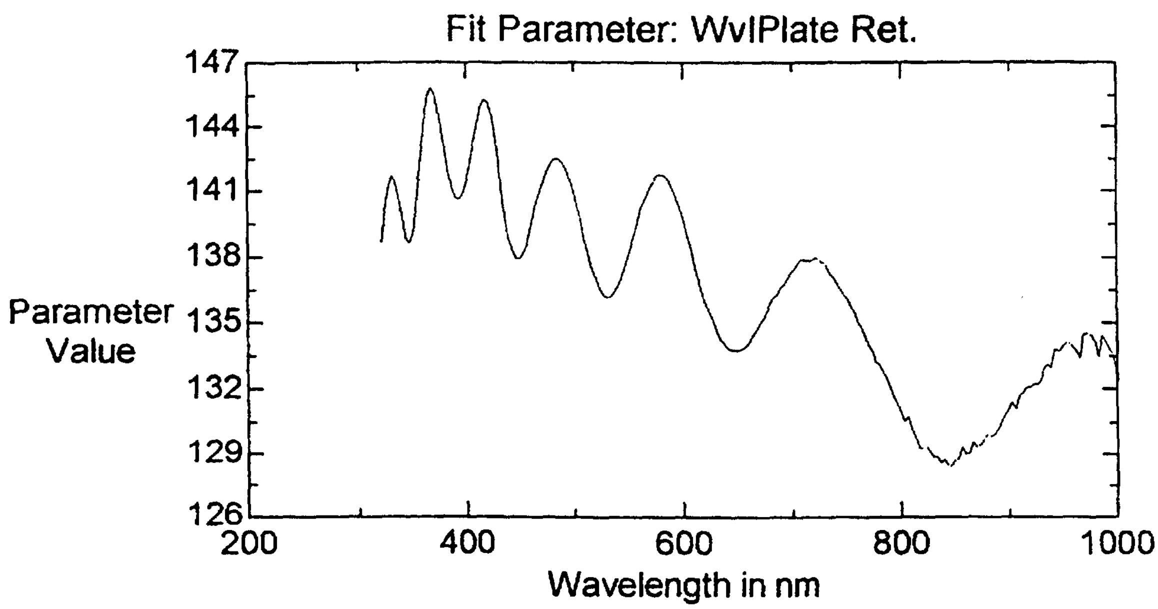


FIG. 13c

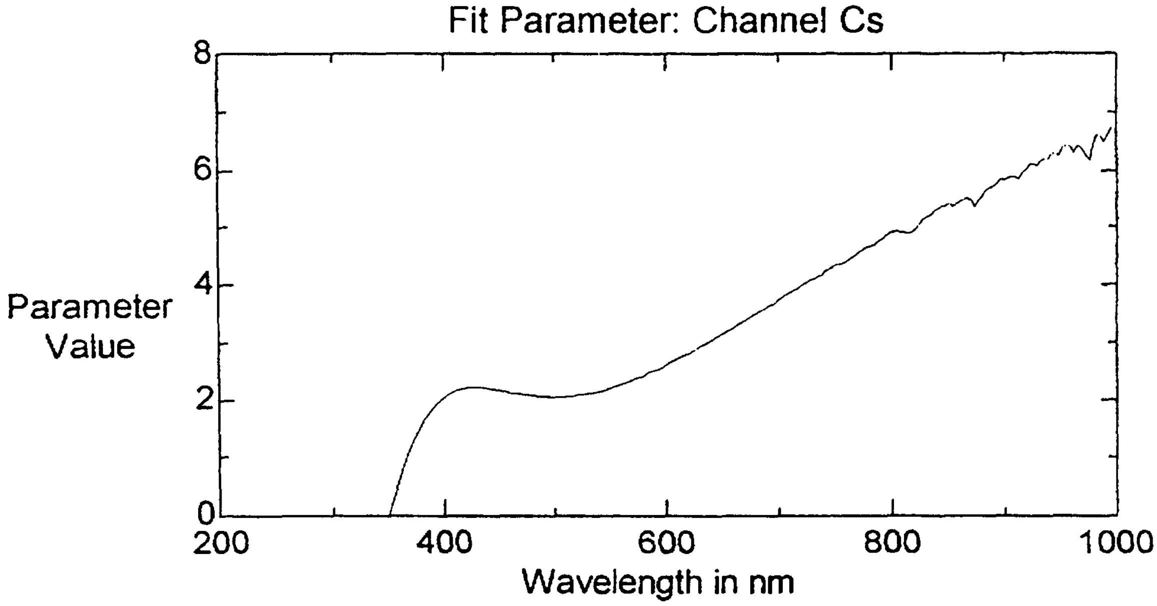


FIG. 13d

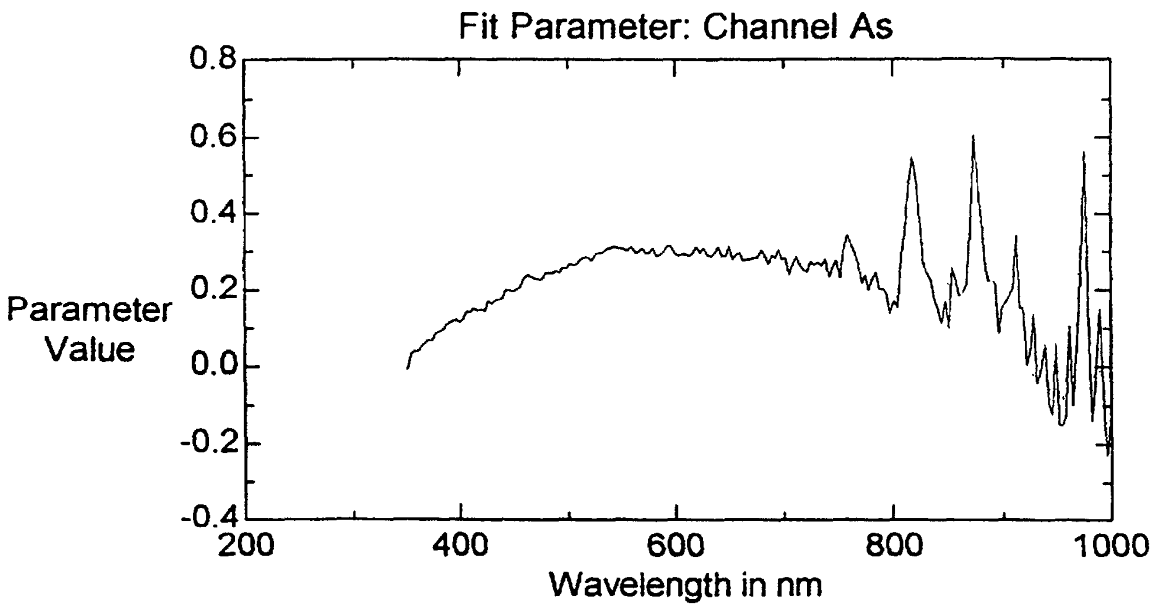


FIG. 13e

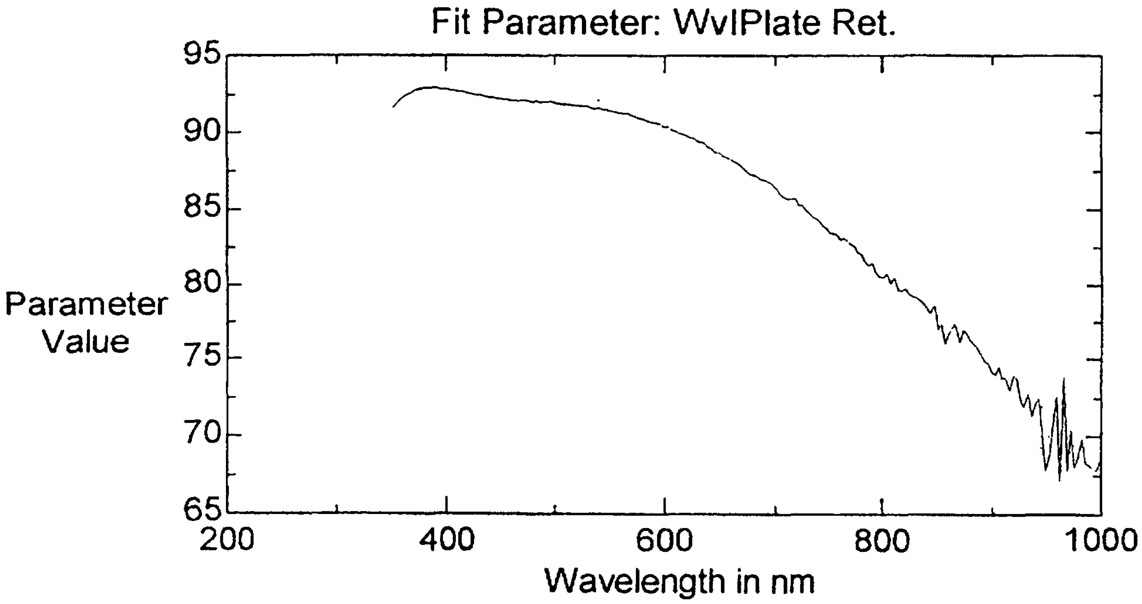
Fit Parameter: WvlPlate Ret.
95
90
85
80
75
70
65
Parameter Value
200
400
600
800
1000
Wavelength in nm

FIG. 13f

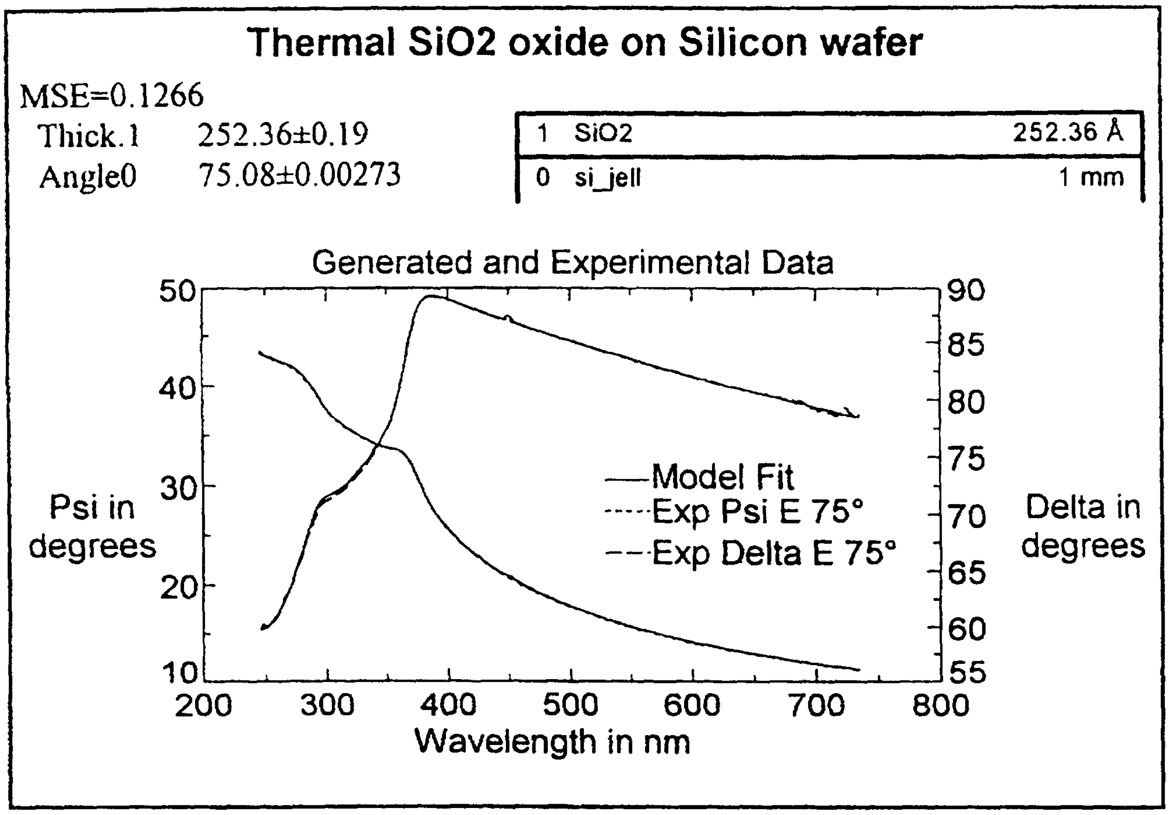
Thermal SiO2 oxide on Silicon wafer
MSE=0.1266
Thick.1 252.36±0.19
Angle0 75.08±0.00273
1 SiO2 252.36 Å
0 si_jell 1 mm
Generated and Experimental Data
Psi in degrees
Delta in degrees
Wavelength in nm
Model Fit
Exp Psi E 75°
Exp Delta E 75°
50
40
30
20
10
90
85
80
75
70
65
60
55
200
300
400
500
600
700
800

FIG. 14a

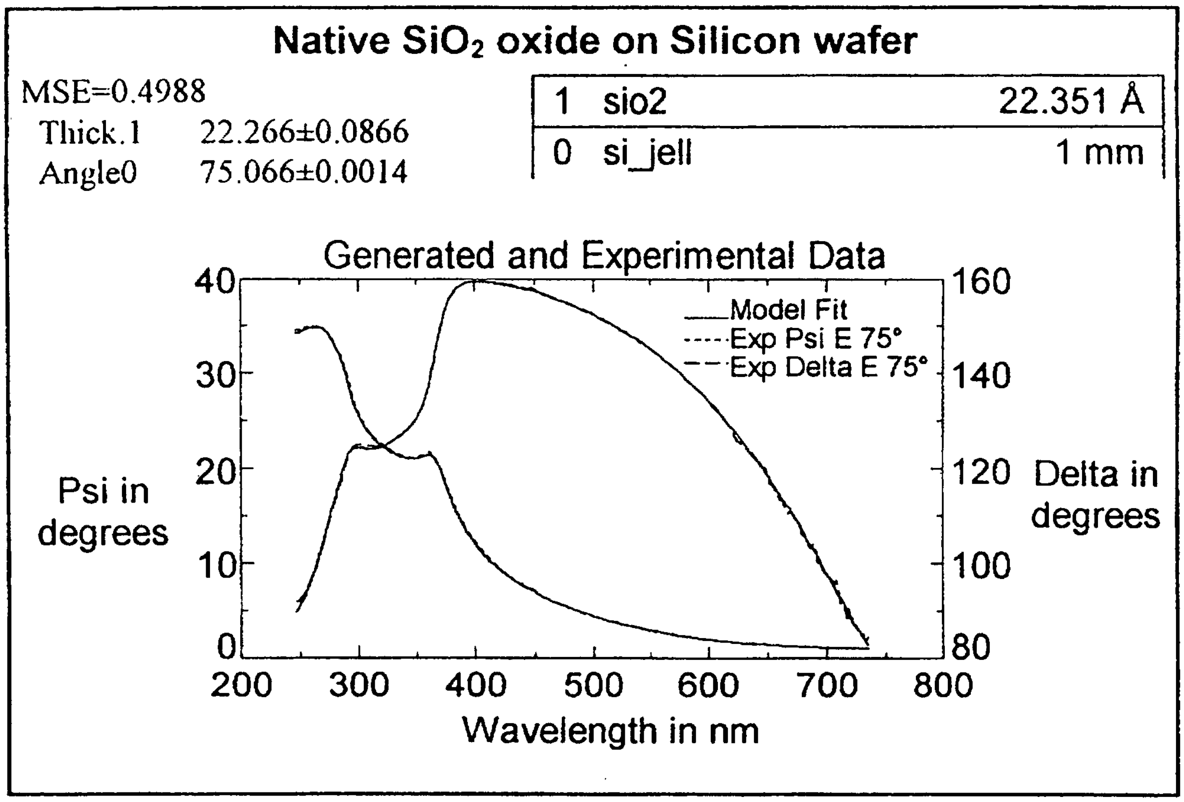
Native $SiO_2$ oxide on Silicon wafer
MSE=0.4988
Thick.1 22.266±0.0866
Angle0 75.066±0.0014
1 sio2 22.351 Å
0 si_jell 1 mm
Generated and Experimental Data
Model Fit
Exp Psi E 75°
Exp Delta E 75°
Psi in degrees
Delta in degrees
Wavelength in nm
0
10
20
30
40
80
100
120
140
160
200
300
400
500
600
700
800

FIG. 14b

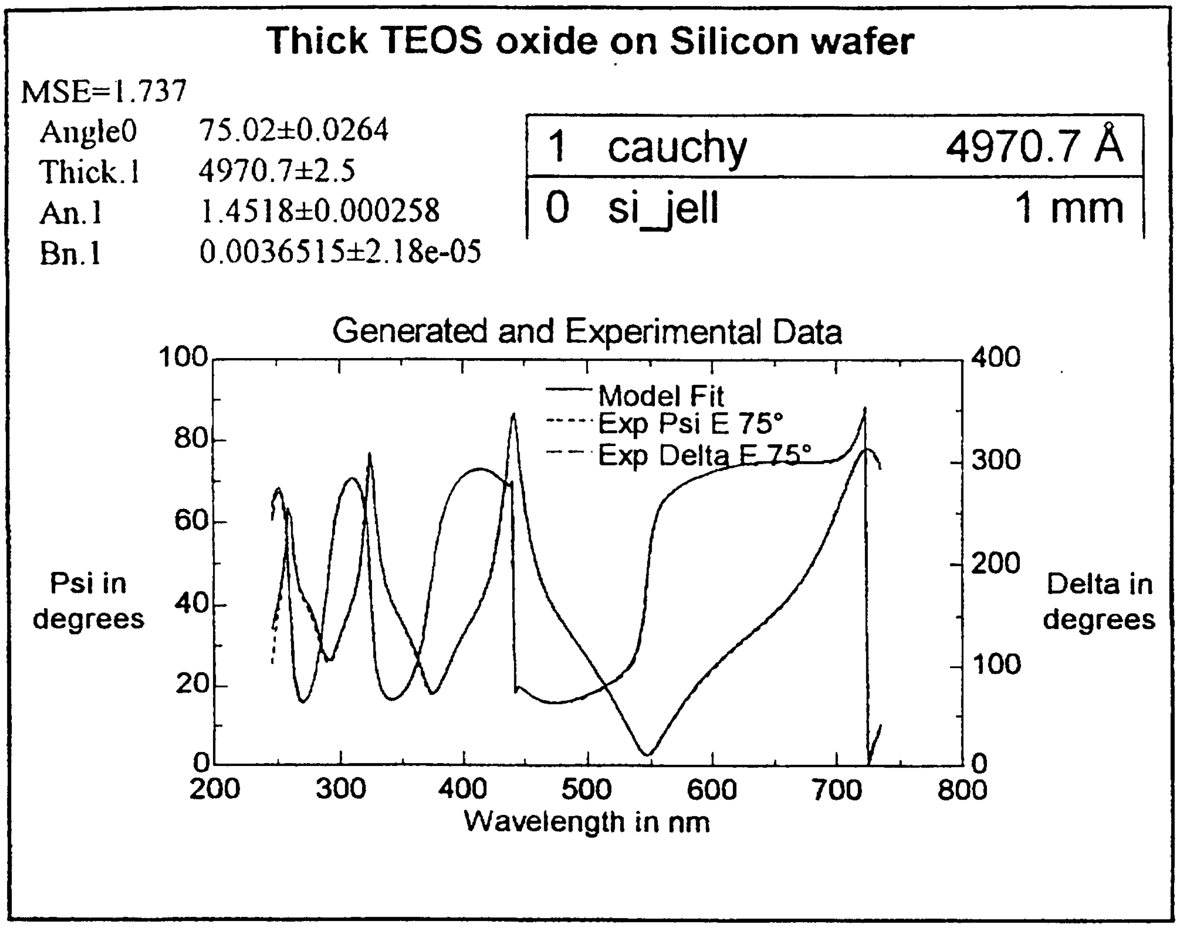
Thick TEOS oxide on Silicon wafer
MSE=1.737
Angle0 75.02±0.0264
Thick.1 4970.7±2.5
An.1 1.4518±0.000258
Bn.1 0.0036515±2.18e-05
1 cauchy 4970.7 Å
0 si_jell 1 mm
Generated and Experimental Data
Model Fit
Exp Psi E 75°
Exp Delta E 75°
Psi in degrees
Delta in degrees
Wavelength in nm
0
20
40
60
80
100
100
200
300
400
200
300
400
500
600
700
800

FIG. 14c

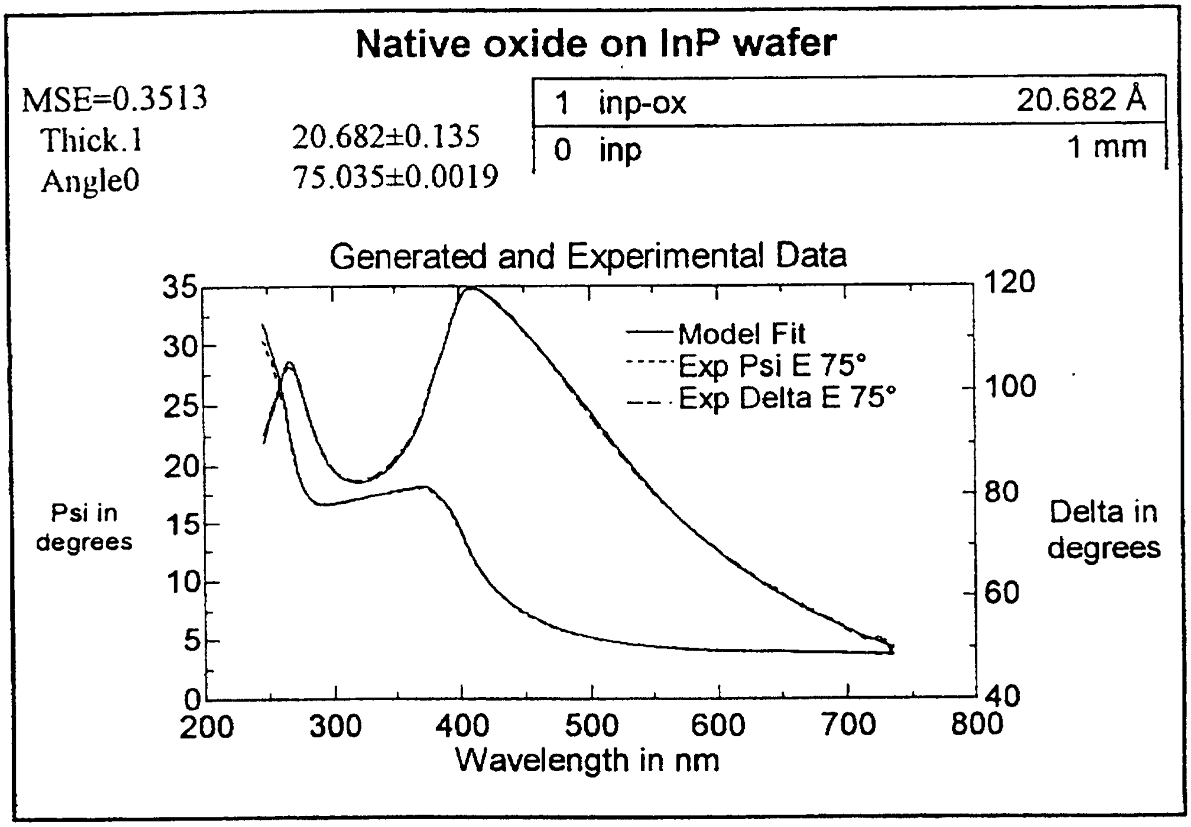
Native oxide on InP wafer
MSE=0.3513
Thick.1 20.682±0.135
Angle0 75.035±0.0019
1 inp-ox 20.682 Å
0 inp 1 mm
Generated and Experimental Data
Model Fit
Exp Psi E 75°
Exp Delta E 75°
Psi in degrees
Delta in degrees
Wavelength in nm
35
30
25
20
15
10
5
0
120
100
80
60
40
200
300
400
500
600
700
800

FIG. 14d

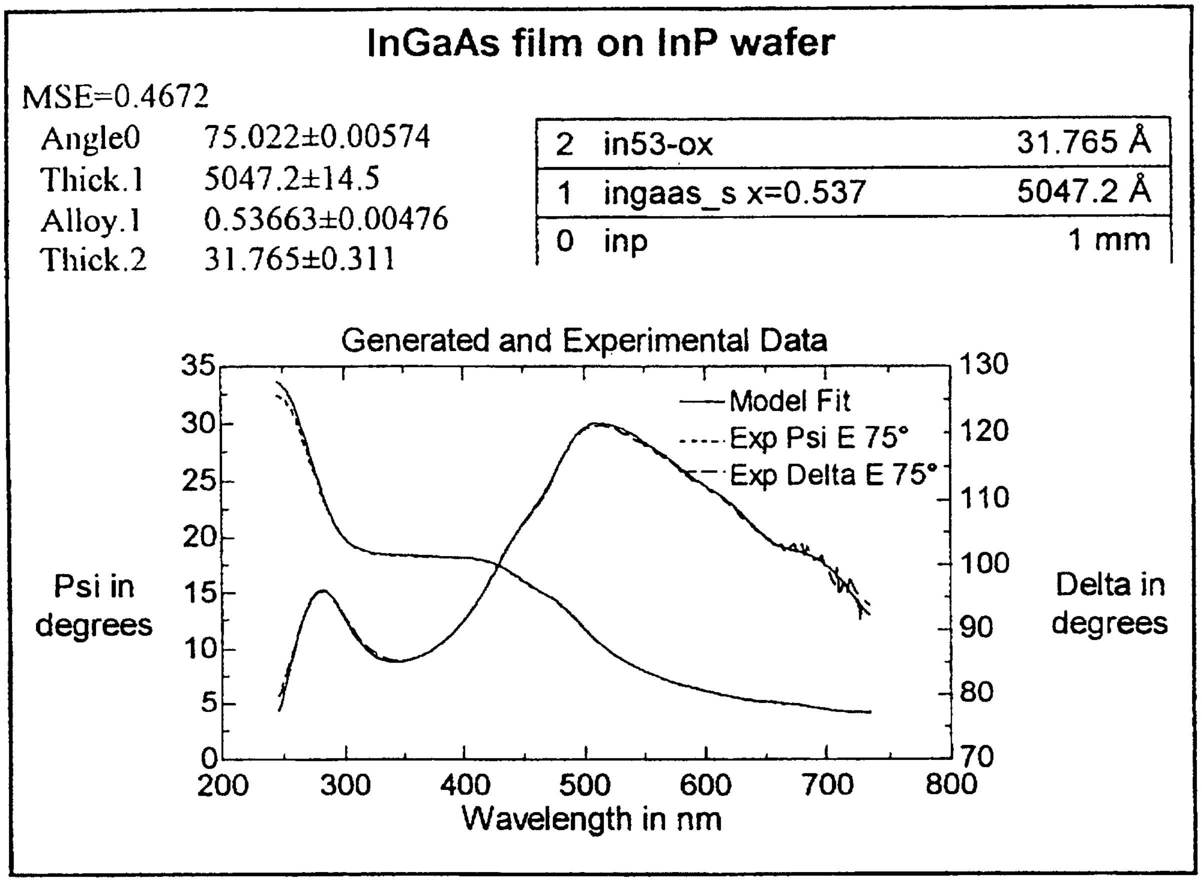
InGaAs film on InP wafer
MSE=0.4672
Angle0 75.022±0.00574
Thick.1 5047.2±14.5
Alloy.1 0.53663±0.00476
Thick.2 31.765±0.311
2 in53-ox 31.765 Å
1 ingaas_s x=0.537 5047.2 Å
0 inp 1 mm
Generated and Experimental Data
Model Fit
Exp Psi E 75°
Exp Delta E 75°
Psi in degrees
Delta in degrees
Wavelength in nm
0
5
10
15
20
25
30
35
70
80
90
100
110
120
130
200
300
400
500
600
700
800

FIG. 14e

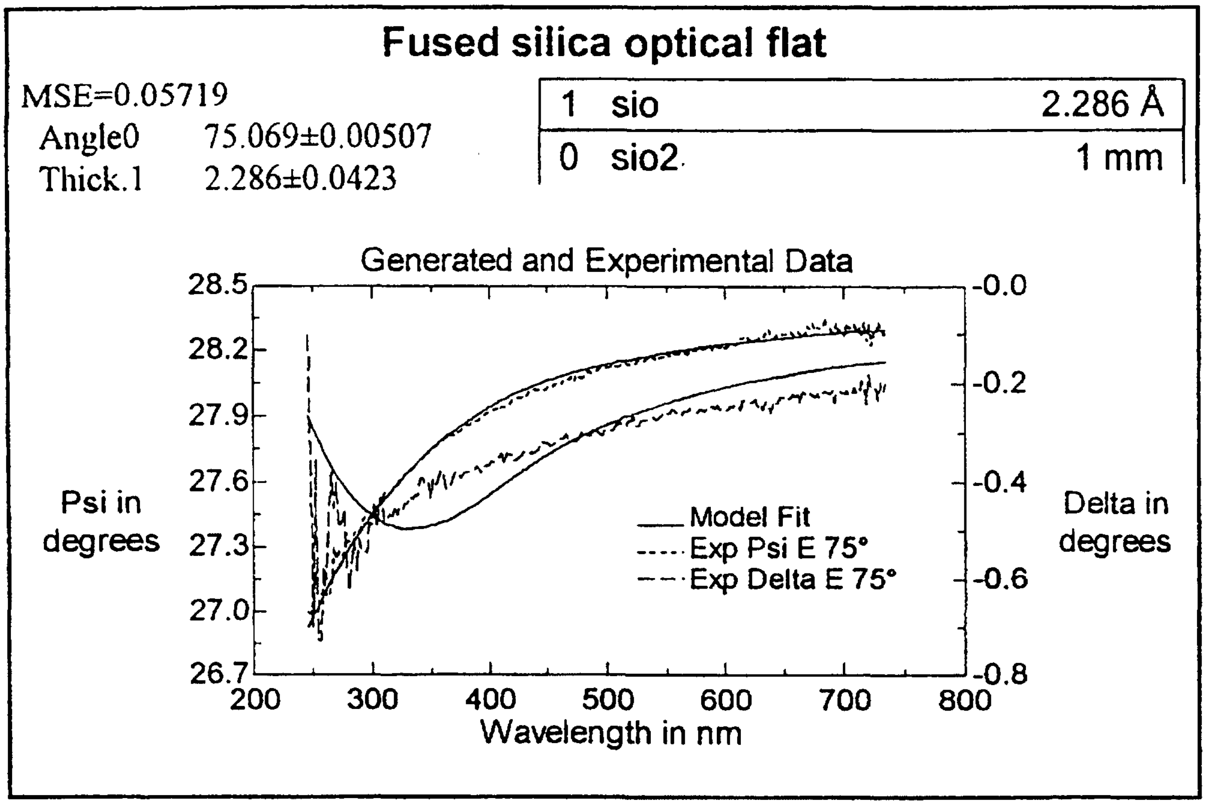
Fused silica optical flat
MSE=0.05719
Angle0 75.069±0.00507
Thick.1 2.286±0.0423
1 sio 2.286 Å
0 sio2 1 mm
Generated and Experimental Data
Psi in degrees
Delta in degrees
Wavelength in nm
28.5
28.2
27.9
27.6
27.3
27.0
26.7
-0.0
-0.2
-0.4
-0.6
-0.8
200
300
400
500
600
700
800
Model Fit
Exp Psi E 75°
Exp Delta E 75°

FIG. 14f

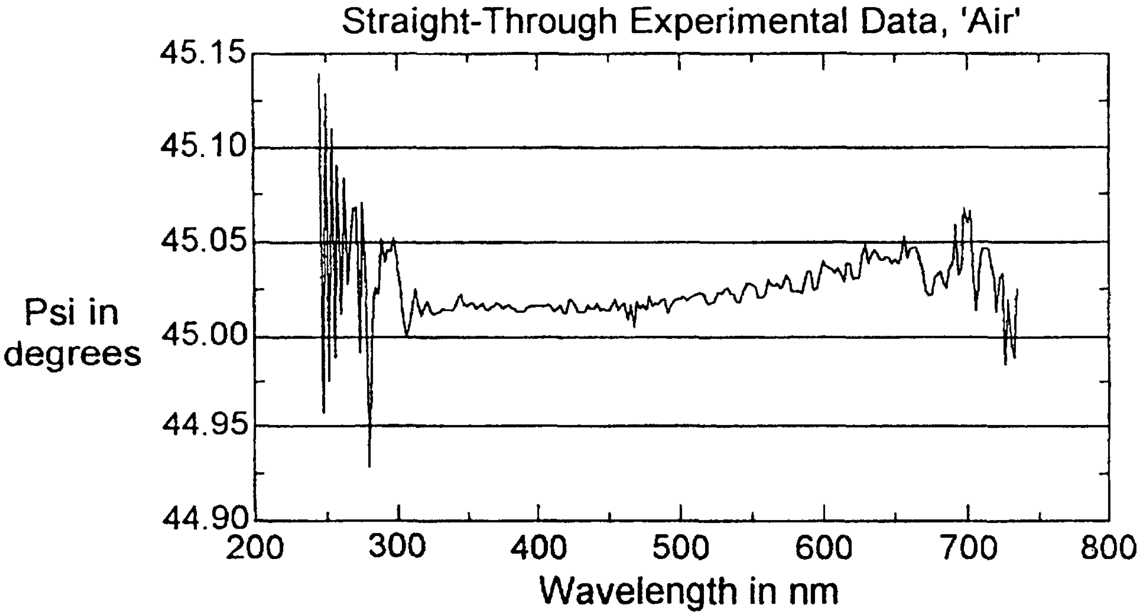


FIG. 14g

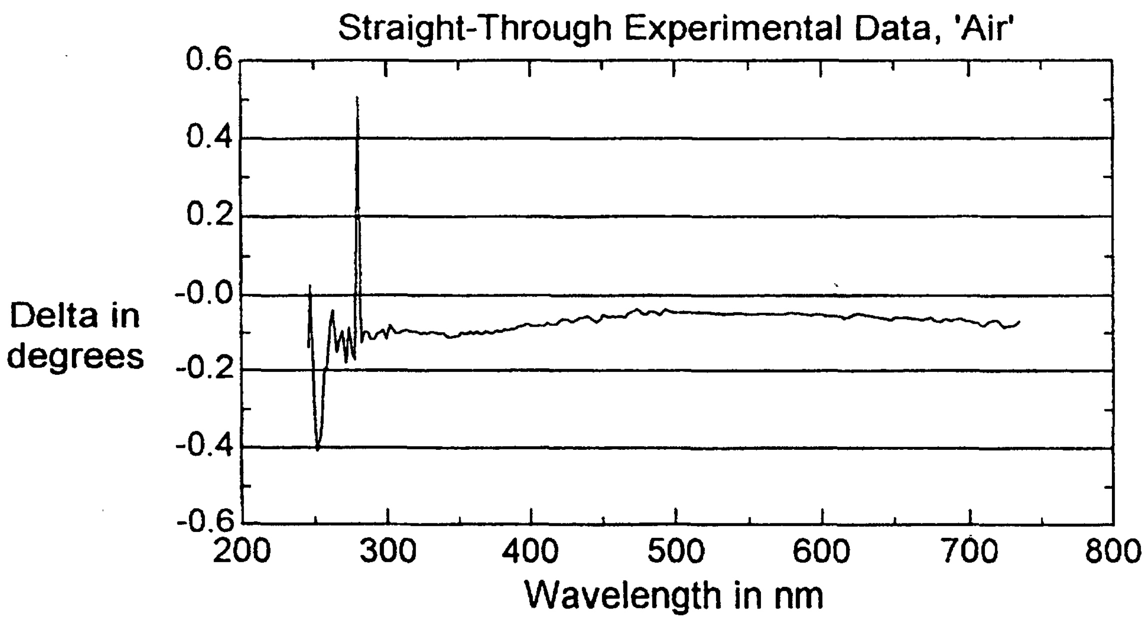


FIG. 14h